# EUROPEAN PATENT SPECIFICATION

(11) **EP 4 444 108 B1**
(45) Date of publication and mention of the grant of the patent: **10.09.2025**
(21) Application number: 21834756.5
(22) Date of filing: 07.12.2021
(51) Int. Cl.: A23L 27/20, A23L 27/00

(54) **ALDEHYDE MIXTURES FOR FLAVOUR IMPROVEMENT**
ALDEHYDMISCHUNGEN ZUR GESCHMACKSVERBESSERUNG
MÉLANGES D'ALDÉHYDES POUR L'AMÉLIORATION D'ARÔME

(43) Date of publication of application: 16.10.2024
(73) Proprietor: Symrise AG, 37603 Holzminden Niedersachsen (DE)
(72) Inventor: BORNSCHEUER, Uwe, 17489 Greifswald (DE); KIM, In Jung, 17489 Greifswald (DE); ZORN, Holger, 35435 Wettenberg (DE); GEIßLER, Torsten, 37574 Einbeck (DE); LEY, Jakob Peter, 37603 Holzminden (DE); HARMS, Christoph, 37603 Holzminden (DE); OTTE-HÖLSCHER, Susanne, 37620 Halle (DE); BRUNS, Sina, 37603 Holzminden (DE); FRAATZ, Marco Alexander, 35392 Gießen (DE); HAMMER, Andreas Klaus, 61231 Bad Nauheim (DE); HONOLD, Philipp, 35463 Fernwald-Annerod (DE)
(74) Representative: Eisenführ Speiser
(86) International application number: PCT/EP2021/084575
(87) International publication number: WO 2023/104293

(56) References cited:
- WO-A1-2021/180327
- JP-A- S63 233 914
- KAJIWARA T ET AL: "Volatile compounds and long-chain aldehydes formation in conchocelis-filaments of a red alga, Porphyra tenera", PHYTOCHEMISTRY, ELSEVIER, AMSTERDAM , NL, vol. 29, no. 7, 1 January 1990 (1990-01-01), pages 2193 - 2195, XP026616233, ISSN: 0031-9422, [retrieved on 19900101], DOI: 10.1016/0031-9422(90)83036-Z
- KEMP THOMAS R.: "Characterization of some new C16 and C17 unsaturated fatty aldehydes", JOURNAL OF THE AMERICAN OIL CHEMISTS SOCIETY, vol. 52, no. 8, 1 August 1975 (1975-08-01), DE, pages 300 - 302, XP055927304, ISSN: 0003-021X, DOI: 10.1007/BF02637730

## Description

The present invention relates to ingredients for improving the flavour of food products. It concerns flavouring compositions with 8*Z*,11*Z*-heptadecadienal, 8Z-heptadecenal and 7Z-hexadecenal and optionally further aldehydes. Furthermore, the present invention relates to preparations with improved taste characteristics comprising an inventive flavouring composition as well as the use of an inventive flavouring composition and a method for improving at least one taste characteristic in a preparation.

In the field of food products, there is a constant need for new, interesting flavour compositions, which are able to balance, modify, intensify or stress certain taste perceptions and/or the overall taste of a composition.

Aldehydes are aromatic substances, which naturally occur in food products. The aldehyde hexanal is present, e.g. in apples, pears, peaches and cherries. Above a certain concentration, aldehydes can exhibit a rancid, fishy or metallic taste, which is not desired.

The natural occurrence of some unsaturated aldehydes with one or more double bonds such as 8Z-heptadecenal, 8*Z*,11*Z*-heptadecadienal or 8Z,11Z,14Z-heptadecatrienal has been reported in pressed juices of cucumber *(*Cucumber Aroma formation of cucumber (Cucumis sativus L.) and bitter gourd (Momordica charantia L. ) by salt-squeezing, Journal of Home Economics of Japan Vol. 60 (2009) No. 10 p. 877-885) or the algae *Ulva pertusa (*Production of bioflavour by regeneration from protoplasts of Ulva pertusa (Ulvales, Chlorophyta) Hydrobiologia, 1990, Vol. 204, pp 143-149*).*

Additional efforts have been made to produce long chain aldehydes such as 8Z-heptadecenal, 8Z,11Z-heptadecadienal, 8Z,11Z,14Z-heptadecatrienal from enzymes, which are extracted from *Ulva pertusa (*Specificity of the enzyme system producing long chain aldehydes in the green alga, Ulva pertusa, Phytochemistry, Vol. 28, No. 2, pp. 407-409, 1989). WO2021/180327 discloses the use of aldehyde mixtures to give taste to food composition, these mixtures having similar and partially overlapping aldehydes as in the present application.

No mixtures of these aldehydes are described therein, especially not their taste and influence on the taste profile.

The odor of 8Z,11Z-heptadecadienal is described as typical of algae *(*Production of bioflavour by regeneration from protoplasts of Ulva pertusa Hydrobiologia, 1990, Vol. 204, pp 143-149*).*

8Z-pentadecenal is known to be a naturally occurring constituent of cucumber *(*Kemp, A C15 aldehyde from Cucumis sativus, Phytochemistry, Volume 16, Issue 11, 1977, Pages 1831-1832). The flavour of 8Z-pentadecenal is described primarily as oily and flavour-enhancing properties on chicken and grilled beef (JP 2014043409).

There is especially a market need for natural flavourings according to the European guideline EG 1334/2008, which can be used in a variety of applications, such as e.g. in beverages to balance the taste, in convenience products to achieve an authentic, homemade taste or in desserts to stress certain accents of the preparation.

The primary task of the present invention was to provide a new flavouring mixture, which is able to positively influence the taste, preferably the taste and odour, of a preparation towards a more desired taste profile, preferably taste and odour profile, as well as corresponding methods and uses of such flavouring mixture.

The primary task of this invention was solved in a first aspect by providing a flavouring composition comprising or consisting of 8*Z*,11*Z*-heptadecadienal, 8Z-heptadecenal and 7Z-hexadecenal, and optionally one or more compounds from the group consisting of 5*Z*,8*Z*,12*Z*-heptadecatrienal, 8Z-pentadecenal and 7Z-tetradecanal, with each amount being in the ranges of claim 1.

It was observed that a flavouring composition comprising the aldehydes 8Z,11Z-heptadecadienal, 8Z-heptadecenal and 7Z-hexadecenal was able to convey particularly desired taste characteristics in a preparation, e.g. enhancing the juicy odour and taste of citrus lemonades, even though the taste and odour profiles of most of the aldehydes are described as being typically for cucumber or algae.

One preferred embodiment of the present invention relates to a flavouring composition comprising or consisting of 8Z,11Z-heptadecadienal, 8Z-heptadecenal, 7Z-hexadecenal and 5Z,8Z,12Z-heptadecatrienal.

Another preferred embodiment of the present invention relates to a flavouring composition comprising or consisting of 8*Z*,11*Z*-heptadecadienal, 8Z-heptadecenal, 7Z-hexadecenal and 8Z-pentadecenal.

Yet another preferred embodiment of the present invention relates to a flavouring composition comprising or consisting of 8*Z*,11*Z*-heptadecadienal, 8Z-heptadecenal, 7Z-hexadecenal and 7Z-tetradecenal.

One preferred embodiment of the present invention relates to a flavouring composition comprising or consisting of 8Z,11Z-heptadecadienal, 8Z-heptadecenal and 7Z-hexadecenal, 5*Z*,8*Z*,12*Z*-heptadecatrienal and 8Z-pentadecenal.

Another preferred embodiment of the present invention relates to a flavouring composition comprising or consisting of 8*Z*,11*Z*-heptadecadienal, 8Z-heptadecenal, 7Z-hexadecenal, 8Z-pentadecenal and 7Z-tetradecanal.

Yet another preferred embodiment of the present invention relates to a flavouring composition comprising or consisting of 8*Z*,11*Z*-heptadecadienal, 8Z-heptadecenal, 7Z-hexadecenal, 5*Z*,8*Z*,12*Z*-heptadecatrienal and 7Z-tetradecenal.

Another preferred embodiment of the present invention relates to a flavouring composition comprising or consisting of 8Z,11Z-heptadecadienal, 8Z-heptadecenal, 7Z-hexadecenal, 5Z,8Z,12Z-heptadecatrienal, 8*Z*-pentadecenal and 7Z-tetradecenal.

The present invention relates to a flavouring composition, wherein
- 8Z,11Z-heptadecadienal is contained in an amount of from 0.0001 to 30 wt.-%, preferably in an amount of from 0.001 to 30 wt.-%, more preferably in an amount of from 0.01 to 30 wt.-%, and/or
- 8Z-heptadecenal is contained in an amount of from 0.0001 to 30 wt.-%, preferably in an amount of from 0.001 to 30 wt.-%, more preferably in an amount of from 0.01 to 30 wt.-%, and/or
- 7Z-hexadecenal is contained in an amount of from 0.0001 to 30 wt.-%, preferably in an amount of from 0.001 to 30 wt.-%, more preferably in an amount of from 0.01 to 30 wt.-%, and/or
- 5Z,8Z,12Z-heptadecatrienal, if present, is contained in an amount of from 0.0001 to 20 wt.-%, preferably in an amount of from 0.001 to 20 wt.-%, more preferably in an amount of from 0.01 to 20 wt.-%, and/or
- 8Z-pentadecenal, if present, is contained in an amount of from 0.0001 to 20 wt.-%, preferably in an amount of from 0.001 to 20 wt.-%, more preferably in an amount of from 0.01 to 20 wt.-%, and/or
- 7Z-tetradecenal, if present, is contained in an amount of from 0.0001 to 20 wt.-%, preferably in an amount of from 0.001 to 20 wt.-%, more preferably in an amount of from 0.01 to 20 wt.-%,
in each case based on the total weight of the flavouring composition.

One preferred embodiment of the present invention relates to a flavouring composition, wherein
- 8Z,11Z-heptadecadienal is contained in an amount of from 0.0001 to 30 wt.-%, preferably in an amount of from 0.001 to 30 wt.-%, more preferably in an amount of from 0.01 to 30 wt.-%, and
- 8Z-heptadecenal is contained in an amount of from 0.0001 to 30 wt.-%, preferably in an amount of from 0.001 to 30 wt.-%, more preferably in an amount of from 0.01 to 30 wt.-%, and
- 7Z-hexadecenal is contained in an amount of from 0.0001 to 30 wt.-%, preferably in an amount of from 0.001 to 30 wt.-%, more preferably in an amount of from 0.01 to 30 wt.-%,
in each case based on the total weight of the flavouring composition.

Another preferred embodiment relates to a flavouring composition according to the present invention, wherein
- 8Z,11Z-heptadecadienal is contained in an amount of from 0.0001 to 30 wt.-%, preferably in an amount of from 0.001 to 30 wt.-%, more preferably in an amount of from 0.01 to 30 wt.-%, and
- 8Z-heptadecenal is contained in an amount of from 0.0001 to 30 wt.-%, preferably in an amount of from 0.001 to 30 wt.-%, more preferably in an amount of from 0.01 to 30 wt.-%, and
- 7Z-hexadecenal is contained in an amount of from 0.0001 to 30 wt.-%, preferably in an amount of from 0.001 to 30 wt.-%, more preferably in an amount of from 0.01 to 30 wt.-%, and
- 5Z,8Z,12Z-heptadecatrienal is contained in an amount of from 0.0001 to 20 wt.-%, preferably in an amount of from 0.001 to 20 wt.-%, more preferably in an amount of from 0.01 to 20 wt.-%,
in each case based on the total weight of the flavouring composition.

Yet another preferred embodiment relates to a flavouring composition according to the present invention, wherein
- 8Z,11Z-heptadecadienal is contained in an amount of from 0.0001 to 30 wt.-%, preferably in an amount of from 0.001 to 30 wt.-%, more preferably in an amount of from 0.01 to 30 wt.-%, and
- 8Z-heptadecenal is contained in an amount of from 0.0001 to 30 wt.-%, preferably in an amount of from 0.001 to 30 wt.-%, more preferably in an amount of from 0.01 to 30 wt.-%, and
- 7Z-hexadecenal is contained in an amount of from 0.0001 to 30 wt.-%, preferably in an amount of from 0.001 to 30 wt.-%, more preferably in an amount of from 0.01 to 30 wt.-%, and
- 5Z,8Z,12Z-heptadecatrienal, is contained in an amount of from 0.0001 to 20 wt.-%, preferably in an amount of from 0.001 to 20 wt.-%, more preferably in an amount of from 0.01 to 20 wt.-%, and
- 8Z-pentadecenal is contained in an amount of from 0.0001 to 20 wt.-%, preferably in an amount of from 0.001 to 20 wt.-%, more preferably in an amount of from 0.01 to 20 wt.-%,
in each case based on the total weight of the flavouring composition.

One preferred embodiment relates to a flavouring composition according to the present invention, wherein
- 8Z,11Z-heptadecadienal is contained in an amount of from 0.0001 to 30 wt.-%, preferably in an amount of from 0.001 to 30 wt.-%, more preferably in an amount of from 0.01 to 30 wt.-%, and
- 8Z-heptadecenal is contained in an amount of from 0.0001 to 30 wt.-%, preferably in an amount of from 0.001 to 30 wt.-%, more preferably in an amount of from 0.01 to 30 wt.-%, and
- 7Z-hexadecenal is contained in an amount of from 0.0001 to 30 wt.-%, preferably in an amount of from 0.001 to 30 wt.-%, more preferably in an amount of from 0.01 to 30 wt.-%, and
- 7Z-tetradecenal, is contained in an amount of from 0.0001 to 20 wt.-%, preferably in an amount of from 0.001 to 20 wt.-%, more preferably in an amount of from 0.01 to 20 wt.-%,
in each case based on the total weight of the flavouring composition.

Another preferred embodiment relates to a flavouring composition according to the present invention, wherein
- 8Z,11Z-heptadecadienal is contained in an amount of from 0.0001 to 30 wt.-%, preferably in an amount of from 0.001 to 30 wt.-%, more preferably in an amount of from 0.01 to 30 wt.-%, and
- 8Z-heptadecenal is contained in an amount of from 0.0001 to 30 wt.-%, preferably in an amount of from 0.001 to 30 wt.-%, more preferably in an amount of from 0.01 to 30 wt.-%, and
- 7Z-hexadecenal is contained in an amount of from 0.0001 to 30 wt.-%, preferably in an amount of from 0.001 to 30 wt.-%, more preferably in an amount of from 0.01 to 30 wt.-%, and
- 5Z,8Z,12Z-heptadecatrienal, is contained in an amount of from 0.0001 to 20 wt.-%, preferably in an amount of from 0.001 to 20 wt.-%, more preferably in an amount of from 0.01 to 20 wt.-%, and
- 8Z-pentadecenal, is contained in an amount of from 0.0001 to 20 wt.-%, preferably in an amount of from 0.001 to 20 wt.-%, more preferably in an amount of from 0.01 to 20 wt.-%,
in each case based on the total weight of the flavouring composition.

Yet another preferred embodiment relates to a flavouring composition according to the present invention, wherein
- 8Z,11Z-heptadecadienal is contained in an amount of from 0.0001 to 30 wt.-%, preferably in an amount of from 0.001 to 30 wt.-%, more preferably in an amount of from 0.01 to 30 wt.-%, and
- 8Z-heptadecenal is contained in an amount of from 0.0001 to 30 wt.-%, preferably in an amount of from 0.001 to 30 wt.-%, more preferably in an amount of from 0.01 to 30 wt.-%, and
- 7Z-hexadecenal is contained in an amount of from 0.0001 to 30 wt.-%, preferably in an amount of from 0.001 to 30 wt.-%, more preferably in an amount of from 0.01 to 30 wt.-%, and
- 8Z-pentadecenal, is contained in an amount of from 0.0001 to 20 wt.-%, preferably in an amount of from 0.001 to 20 wt.-%, more preferably in an amount of from 0.01 to 20 wt.-%, and
- 7Z-tetradecenal, is contained in an amount of from 0.0001 to 20 wt.-%, preferably in an amount of from 0.001 to 20 wt.-%, more preferably in an amount of from 0.01 to 20 wt.-%,
in each case based on the total weight of the flavouring composition.

One preferred embodiment relates to a flavouring composition according to the present invention, wherein
- 8Z,11Z-heptadecadienal is contained in an amount of from 0.0001 to 30 wt.-%, preferably in an amount of from 0.001 to 30 wt.-%, more preferably in an amount of from 0.01 to 30 wt.-%, and
- 8Z-heptadecenal is contained in an amount of from 0.0001 to 30 wt.-%, preferably in an amount of from 0.001 to 30 wt.-%, more preferably in an amount of from 0.01 to 30 wt.-%, and
- 7Z-hexadecenal is contained in an amount of from 0.0001 to 30 wt.-%, preferably in an amount of from 0.001 to 30 wt.-%, more preferably in an amount of from 0.01 to 30 wt.-%, and
- 5Z,8Z,12Z-heptadecatrienal, is contained in an amount of from 0.0001 to 20 wt.-%, preferably in an amount of from 0.001 to 20 wt.-%, more preferably in an amount of from 0.01 to 20 wt.-%, and
- 7Z-tetradecenal, is contained in an amount of from 0.0001 to 20 wt.-%, preferably in an amount of from 0.001 to 20 wt.-%, more preferably in an amount of from 0.01 to 20 wt.-%,
in each case based on the total weight of the flavouring composition.

Another preferred embodiment relates to a flavouring composition according to the present invention, wherein
- 8Z,11Z-heptadecadienal is contained in an amount of from 0.0001 to 30 wt.-%, preferably in an amount of from 0.001 to 30 wt.-%, more preferably in an amount of from 0.01 to 30 wt.-%, and
- 8Z-heptadecenal is contained in an amount of from 0.0001 to 30 wt.-%, preferably in an amount of from 0.001 to 30 wt.-%, more preferably in an amount of from 0.01 to 30 wt.-%, and
- 7Z-hexadecenal is contained in an amount of from 0.0001 to 30 wt.-%, preferably in an amount of from 0.001 to 30 wt.-%, more preferably in an amount of from 0.01 to 30 wt.-%, and
- 5Z,8Z,12Z-heptadecatrienal, is contained in an amount of from 0.0001 to 20 wt.-%, preferably in an amount of from 0.001 to 20 wt.-%, more preferably in an amount of from 0.01 to 20 wt.-%, and
- 8Z-pentadecenal, is contained in an amount of from 0.0001 to 20 wt.-%, preferably in an amount of from 0.001 to 20 wt.-%, more preferably in an amount of from 0.01 to 20 wt.-%, and
- 7Z-tetradecenal, is contained in an amount of from 0.0001 to 20 wt.-%, preferably in an amount of from 0.001 to 20 wt.-%, more preferably in an amount of from 0.01 to 20 wt.-%,
in each case based on the total weight of the flavouring composition.

One preferred embodiment of the invention relates to a flavouring composition according to the invention, wherein one, more or all of the aldehydes as described in context with the present invention, if present, is / are obtained by enzymatic conversion from one or more natural sources selected from the group consisting of palmitoleic acid, arachidonic acid, alpha-linolenic acid, oleic acid, punicic acid, alpha-elaeosteraric acid, docosahexaenoic acid, eicosapentaenoic acid, petroselic acid, chaulmoogric acid, alpha-licaric acid, olive oil, canola oil, macadamia nut oil, sea buckthorn fruit oil, tung oil, fish oil, borage oil, chaulmoogr oil, parsley oil, oiticica oil, pomegranate seed oil, coconut oil, sunflower oil, grape seed oil, and fungal oils obtained from any of the genera selected from *Conidiobolus, Flammulina, Fomes, Ganoderma, Mortierella, Panellus, Pleurotus, Psathyrella, Stereum, Umbelopsis.*

Preferably, the aldehydes as described in context with the present invention are obtained by enzymatic conversion as described in PCT/EP2020/056687.

"Natural source" describes every educt that exists without any actions of humankind, such as plants, animals and other vegetative organisms. In context with the present invention, the term natural source means any educt that is obtained from nature, e.g. as being a metabolite or an oil obtained from a plant, animal or other vegetative species such as fungi.

It is especially preferable in terms of the present invention, if the flavouring composition is completely or partly obtained by enzymatic conversion from macadamia nut oil, borage oil or sea buckthorn fruit oil.

An advantage of using natural educt source is that the obtained flavouring composition can be declared as natural flavouring according to the European guideline EG 1334/2008.

Another preferred embodiment relates to a flavouring composition according to the present invention, preferably partly obtained by enzymatic conversion as described herein, wherein the flavouring composition further comprises one or more additional flavourings selected from the group consisting of

aliphatic flavouring substances, especially saturated aliphatic alcohols, such as ethanol, isopronanol, butanol, isoamyl alcohol, hexanol, 2-heptanol, (1/2/3)-octanol, decanol, unsaturated aliphatic alcohols, such as 2Z-pentenol, 3Z-hexenol, 2E-hexenol, 3E-hexenol, 2Z-octenol, 1-octen-3-ol, 6Z-nonenol, 2E,6Z-nonadienol, aliphatic aldehydes such as saturated aliphatic aldehydes (e.g. acetaldehyde, propionaldehyde, butyraldehyde, isobutyraldehyde, valeraldehyde, isolvaleraldehyde, hexanal, 3-methyl hexanal, octanal, nonanal, or mono- or multi-unsaturated aliphatic aldehydes, such as 2-methyl-but-2-enal, 2E-hexenal, 3Z-hexenal, 4Z-hexenal, 2E-octenal, 2E-nonenal, 6Z-nonenal, 2E,6Z-nonadienal, 2E-decenal, 2E-decadienal, aliphatic ketones, e.g. saturated ketones (such as 2-butanone, 2-pentanone, 2-heptanone, 2-octanone, 2-methylheptan-3-one, 2-decanone, 2-undecanone), unsaturated ketones (such as 1-penten-3-one, 1-hexen-3-one, 5-methyl-3-hexenone, 3-hepten-2-one, 1-octen-3-one, 2-octen-4-one, 3-octen-2-one, 3-none-2-one), aliphatic diketones and aliphatic diketoles, e.g. diacetyl, acetyl methyl carbinol, 2,3-hexanedione, aliphatic acids, such as straight-chain saturated acids, such as acetic acid, propionic acid, butyric acid, isobutyric acid, valeric acid, heptanoic acid, octanoic acid, decanoic acid, branched-chain saturated acids, such as 2-methyl heptanoic acid, 4-ethyl octanoic acid, and unsaturated acids, such as 2-butenoic acid, 2-pentenoic acid, 4-pentenoic acid, 2-methyl pentenoic acid, 3E-hexenoic acid, 3Z-hexenoic acid, 3-octenoic acid, linoleic acid, aliphatic esters, such as saturated esters, e.g. methyl acetate, methylbutyrate, methyl-2-methylbutyrate, methyl hexanoate, ethylacetate, ethylbutyrate, ethyl-2-methylbutyrate, ethyl-3-methylbutyrate, ethyl hexanoate, ethyl decanoate, isopropyl acetate, isobutyl acetate, isobutyl valerate, isoamyl acetate, isoamyl butyrate, isoamyl isovalerate, hexyl acetate, hexyl hexanoate, 3-octyl acetate and unsaturated esters, such as methyl 2-hexenoate, allyl hexanoate, 3Z-hexenyl acetate, 3Z-hexenyl butyrate, aliphatic thiols and dithiols (e.g. propane thiol, allyl mercaptan, 1-methoxy-3-methylbutane-3-thiol, dimethyl sulfide, dimethyl trisulfide, dipropyl sulfide, diallyl trisulfide, other aliphatic sulfur compounds, such as 2-mercapto-3-butanol, methyl thio propanal, 3-mercapto-pentanone, 4-methoxy-2-methyl-2-mercaptobutanone, methyl thiobutyrate, methyl thiobutyrate, methyl 3-methylthiopropionate, aliphatic nitrogen compounds, such as butyl amine, trimethyl amine, allyl isothiocyanate, isopropyl isothiocyanate, alicyclic compounds, such as alicyclic ketones, e.g. *Z*-jasmone, isophorone, 4-ketoisophorone, alicyclic esters such as methyl jasmonate, hedione, terpenes, e.g. terpene alcohols, such as linalool, citronellol, geraniol, nerol, alpha terpineol, menthol, 8-p-menthene-1,2-diol, fenchol, borneol, nerolidol, hotrienol, terpene aldehydes such as geranial, neral, citronellal, beta-sinensal, terpene ketones, such as alpha-ionone, (D)-carvone, (L)-carvone, nootkatone, piperitone, menthone, alpha damascone, beta damascene, damascenone, terpene esters, such as linalyl acetate, geranyl acetate, citronellyl actetate, carvyl acetate, fenchyl acetate, terpene sulphur compounds, 4-mentha-8-thiol-3-one, thiogeraniol, para-menth-1-ene-8-thiol, mercapto p-menthan-3-one, terpene hydrocarbons, such as (D)-limonene, (L)-limonene, alpha-pinene, beta-pinene, ocimene, alpha-terpinene, gamma-terpinene, beta-bisabolene, valencene, terpene oxides, such as 1,8-cineole, rose oxide, mint lactone, menthofuran, aromatic compounds, e.g. aromatic alcohols, such as benzyl alcohol, cinnamyl alcohol, 2-phenyl alcohol, aromatic aldehydes, such as benzaldehyde, cinnamic aldehyde, 5-methyl-2-phenylhexenal, salicylaldehyde, 4-hydroxy benzaldehyde, cyclamen aldehyde, 2-phenyl-2-butenal, aromatic acids, such as 2-phenyl acetic acid, cinnamic acid, aromatic esters such as benzyl acetate, benzyl salicylate, anisyl acetate, methyl phenyl acetate, methyl benzoate, methyl salicylate, methyl cinnamate, aromatic phenols, such as phenol, ortho-cresol, para-cresol, 2,3-dimethyl phenyl, 2-ethyl phenol, 2,3,5-trimethyl phenol, 4-vinyl phenol, guaiacol, 4-vinyl guaiacol, eugenol, thymol, carvacrol, aromatic sulphur compounds, such as thiophenol, diphenyl disulphide, aromatic nitrogen compounds, such as methyl anthranilate, methyl N-methyl anthranilate, aromatic ethers such as vanillin, ethylvanillin, anethol, aromatic oxides, such as heliotropine, diphenyl oxide, aromatic lactones, such as coumarin, dihydro coumarin, heterocyclic compounds, such as heterocyclic lactones, e.g. gamma butyrolactone, gamma-nonalactone, gamma decalactone, delta decalactone, jasmin lactone, delta dodecalactone, ambrettolide, heterocyclic furanes, such as furfuryl alcohol, furfural, 2-acetyl furan, theaspirane, 2-methyl tetrahydro furan-3-one, furfuryl mercaptane, 2-methyl 3-furanthiol, 2-methyl 3- tetrahydro furanthiol, difurfuryl sulfide, difurfuryl disulfide, heterocyclic pyrans, such as maltol, ethyl maltole, rose oxide, maltol isobutyrate, heterocyclic pyrroles such as indole, 2-acetyle pyrrole, pyrrolidine, heterocyclic pyrazines, such as 2-methyl pyrazine, 2,3-dimethyl pyrazine, 2-methyl 3-ethyl pyrazine, trimethyl pyrazine, 2-acetyl pyrazine, 2-methoxy 3-methyl pyrazine, 2-methoxy 3-ethyl pyrazine, 2-methoxy 3-isobutyl pyrazine, 2-ethyl 3-methylthio pyrazine, heterocyclic thiazoles, such as thiazole, 2-methyl thiazole, 4-methyl 5-vinyl thiazole, 2-isobutyl thiazole, 2-acetyl thiazole,
flavouring raw materials and flavouring preparations, e.g. essential oils, concretes, absolutes, extract or tinctures from raw materials such as citrus (e.g. lemon, lime, tangerine, bergamotte, grapefruit bitter orange, peel or essence oils), herbs (dill, parsley, cumin, rosemary, sage, clary sage, basil, tarragon, thyme, oregano, savoury, marjoram, all spice, mace, nutmeg, clove leave, clove bud, caraway, cinnamon leaves, cinnamon bark, cassia, cardamom, ginger, galangal, turmeric, coriander seed, coriander leaf, fenugreek, juniper berry, wormwood, laurel leaves, eucalyptus, white pepper, green pepper, white pepper, carrot seed, celery seed, lovage leaf, asa foetida, onion, leek, garlic, mustard, horse radish, capsicum, paprika, sea weed, valerian oil, fir needle, spearmint, peppermint, wintergreen, buchu leaf, black currant buds, fennel, star anise, jambu, long pepper, davana, orris, mimosa, cassie, violet leaves, ho leaf, jasmin, ylang ylang, cananga, osmanthus, angelica, clary sage, ambrette seed, hops, camomile, lavender, rose, geranium, citronella, palmarosa, litsea cubeba, lemon grass, tagetes, neroli, petitgrain, mate, cognac oil, coffee, cola nut, cocoa, green tea, black tea, white tea, gentian, tolu balm, benzoe resin, peru balm, cascarilla, galbanum, vetiver, labdanum, patchouli, sandalwood, cedarwood, guaiac wood, oak wood, massoi bark, vanilla pods, tonka bean, as well as enriched fractions thereof,
juice concentrates, such as orange juice, lemon juice, strawberry, cherry juice, or passion fruit juice concentrates, water phases and recoveries from raw materials such as citrus (lemon, lime, orange, tangerine, grapefruit), apple, pear, quince, mispel, red fruits (raspberry, strawberry, blueberry, blackberry, Amellanchia (June plum), rose hip, cranberry, plum, prune, red and black currant, yellow fruits (peach, apricot, nectarine, banana, etc.), tropical fruits (mango, passionfruit, pineapple, lychee, etc.), vegetables (e.g. cucumber, tomato) and spices (e.g. ginger),
acetophenone, allyl caproate, alpha-ionone, beta-ionone, anisaldehyde, anisyl acetate, anisyl formate, benzaldehyde, benzothiazole, benzyl acetate, benzyl alcohol, benzyl benzoate, beta-ionone, butyl butyrate, butyl caproate, butylidene phthalide, carvone, camphene, caryophyllene, cineol, cinnamyl acetate, citral, citronellol, citronellal, citronellyl acetate, cyclohexyl acetate, cymene, damascone, decalactone, dihydrocoumarin, dimethyl anthranilate, dodecalactone, ethoxyethyl acetate, ethylbutyric acid, ethyl butyrate, ethyl caprate, ethyl caproate, ethyl crotonate, ethylfuraneol, ethylguaiacol, ethylisobutyrate, ethylisovalerate, ethyl lactate, ethylmethyl butyrate, ethyl propionate, eucalyptol, eugenol, ethyl heptylate, 4-(p-hydroxyphenyl)-2-butanone, gamma-decalactone, geraniol, geranyl acetate, geranyl acetate, grapefruit aldehyde, methyl dihydrojasmonate (e.g. Hedion^{®}), heliotropin, 2-heptanone, 3-heptanone, 4-heptanone, 2E-heptenal, 4Z-heptenal, 2E-hexenal, 3Z-hexenol, 2E-hexenoic acid, 3E-hexenoic acid, 2Z-hexenyl acetate, 3Z-hexenyl acetate, 3Z-hexenyl caproate, 2E-hexenyl caproate, 3Z-hexenyl formate, 2Z-hexyl acetate, 3Z-hexyl acetate, 2E-hexyl acetate, 3Z-hexyl formate, para-hydroxybenzyl acetone, isoamyl alcohol, isoamyl isovalerate, isobutyl butyrate, isobutyraldehyde, isoeugenol methyl ether, isopropyl methylthiazole, lauric acid, levulinic acid, linalool, linalool oxide, linalyl acetate, menthol, menthofuran, methyl anthranilate, methylbutanol, methylbutyric acid, 2-methylbutyl acetate, methyl caproate, methyl cinnamate, 5-methylfurfural, 3,2,2-methylcyclopentenolone, 6,5,2-methylheptenone, methyl dihydrojasmonate, methyl jasmonate, 2-methylmethyl butyrate, 2-methyl-2-pentenol acid, methylthiobutyrate, 3,1-methylthiohexanol, 3-methylthiohexyl acetate, nerol, nerol acetate, 2E,4E-nonadienal, 2,4-nonadienol, 2,6-nonadienol, 2,4-nonadienol, nootkatone, delta-octalactone, gamma-octalactone, 2-octanol, 3-octanol, 1,3-octenol, 1-octyl acetate, 3-octyl acetate, palmitic acid, paraldehyde, phellandrene, pentanedione, phenylethyl acetate, phenylethyl alcohol, phenylethyl isovalerate, piperonal, propionaldehyde, propyl butyrate, pulegone, pulegol, sinensal, sulfurol, terpinene, terpineol, terpinolene, 8,3-s thiomenthanone, 4,4,2-thiomethylpentanone, thymol, delta-undecalactone, gamma-undecalactone, valencene, valeric acid, vanillin, acetoin, ethylvanillin, ethylvanillin isobutyrate (=3-ethoxy-4-isobutyryloxybenzaldehyde), 2,5-dimethyl-4-hydroxy-3 (2H)-furanone and derivatives thereof (here preferably homofuraneol (=2-ethyl-4-hydroxy-5-methyl-3(2H)-furanone), homofuronol (=2-ethyl-5-methyl-4-hydroxy-3(2H)-furanone and 5-ethyl-2-methyl-4-hydroxy-3(2H)-furanone), maltol and maltol derivatives (here preferably ethyl maltol), coumarin and coumarin derivatives, gamma-lactones (here preferably gamma-undecalactone, gamma-nonalactone, gamma-decalactone), delta-lactones (here preferably 4-methyldeltadecalactone, massoilactone, deltadecalactone, tuberolactone), methyl sorbate, divanillin, 4-hydroxy-2(or 5)-ethyl-5 (or 2)-methyl-3 (2H)furanone, 2-hydroxy-3-methyl-2-cyclopentenone, 3-hydroxy-4,5-dimethyl-2(5H)-furanone, acetic acid isoamyl ester, butyric acid ethyl ester, butyric acid-n-butyl ester, butyric acid isoamyl ester, 3-methyl-butyric acid ethyl ester, n-hexanoic acid ethyl ester, n-hexanoic acid allyl ester, n-hexanoic acid-n-butyl ester, n-octanoic acid ethyl ester, ethyl-3-methyl-3-phenylglycidate, ethyl-2-E-4-Z-decadienoate, 4-(p-hydroxyphenyl)-2-butanone, 1,1-dimethoxy-2,2,5-trimethyl-4-hexane, 2,6-dimethyl-5-hepten-1-al and phenylacetaldehyde, 2-methyl-3-(methylthio)furan, 2-methyl-3-furanthiol, bis(2-methyl-3-furyl)disulphide, furfurylmercaptan, methional, 2-acetyl-2-thiazoline, 3-mercapto-2-pentanone, 2,5-dimethyl-3-furanthiol, 2,4,5-trimethylthiazole, 2-acetylthiazole, 2,4-dimethyl-5-ethylthiazole, 2-acetyl-1-pyrroline, 2-methyl-3-ethylpyrazine, 2-ethyl-3,5-dimethylpyrazine, 2-ethyl-3,6-dimethylpyrazine, 2,3-diethyl-5-methylpyrazine, 3-isopropyl-2-methoxypyrazine, 3-isobutyl-2-methoxypyrazine, 2-acetylpyrazine, 2-pentylpyridine, (E,E)-2,4-decadienal, (E,E)-2,4-nonadienal, (E)-2-octenal, (E)-2-nonenal, 2-undecenal, 12-methyltridecanal, 1-penten-3-one, 4-hydroxy-2,5-dimethyl-3 (2H)-furanone, guaiacol, 3-hydroxy-4,5-dimethyl-2(5H)-furanone, 3-hydroxy-4-methyl-5-ethyl-2(5H)-furanone, cinnamaldehyde, cinnamon alcohol, methyl salicylate, isopulegol and (here not explicitly stated) stereoisomers, enantiomers, positional isomers, diastereomers, Z/E isomers or epimers of these substances.

It is especially preferably, if the flavouring composition according to the present invention comprises at least one additional flavouring selected from the group consisting of
decanol, hexanol, octanol, nonanol, borneol, iso-borneol, carveol, citronellol, p-cymol, elemol, ethanol, farnesol, fenchol, geraniol, Z-3-hexenal, E-2-hexenal, limetol, linalool, linalooloxide, 3,2-methylbuanol, nerol, nerolidol, E-2,6-nonadienol, 6-methyl-octanal, 1,3-pentenol, perilla aldehyde, sinensal fraction, 4-terpinenol, alpha-terpineol, acetaldehyde, acetaldehyde diethyl acetal, hexanal and acetals thereof such as hexanaldiethyl acetal, heptanal and acetals thereof, octanal and acetals thereof, nonanal and acetals thereof, decanal and acetals thereof, undecanal and acetals thereof, dodecanal and acetals thereof, citral, citronellal and acetals thereof such as citronellaldimethylacetal or diethylacetal, 2*E,*4*E-*decadienal and acetals thereof as e.g. diethylacetal decanal, 2E-decenal, 4Z-decenal, 2E-dodecenal, melonal, methyltridecanal-12, 2E,4E-nonadienal , 2E-nonenal, 6Z-nonenal, phenyl ethyl alcohol, benzyl acetate, bornyl acetate, bornyl formate,Z-I- carvyl acetate, citronellyl acetate, decyl acetate, dimethyl anthranilate, ethoxyethyl acetate, ethyl acetate, ethyl butyrate, ethyl capronate, ethyl caprylate, ethyl methyl butyrate, ethylhydroxy hexanoate, geranyl acetate, hedione, heptyl acetate, 3Z-hexenol, 3Z-hexenyl acetate, hexyl acetate, lauryl acetate, linalyl acetate, menthadienylacetate, menthyl acetate, methyl butyrate, methyl N-methyl anthanilate, neryl acetate, 1-octyl acetate, piperitanate, terpinyl acetate, amyris oil, angelica root oil, black currant flowers absolue, buchuleaf oil, camomile oil, campher oil, cananga oil java, cassie absolue, cedarwood oil, citronella oil, citrus peel and juice oils and their fractions from bergamotte, mandarine, tangerine, kalamansi, orange sweet and bitter, grapefruit, lemon, and lime, copaiba oil, coriander leaf and seed oil, cubeben oil, elimi oil, eucalyptus oil, galbanum oil, geranium oil, ginger oil, guajakwood oil, ho oil, jasmine oil, juniperberry oil, lavender oil, lemongrass oil, litsea cubaba oil, neroli oil, olibanum oil, orris oil, palmarosa oil, pepper black oil, petigrain oil, rose oil, rosemary oil, sage oil, spearmint and peppermint oil, tagetes oil, terpentine oil, thyme oil, violet leave oil, wintergreen oil, ylang ylang oil, camphor oil, 1,4-cineol, eucalyptol, coumarin-fraction, bisabolene beta-fraction, phellandrene-fraction, juice concentrates and waterphases from citrus, tropical fruits, pomaceous fruits and berry fruits, carvone, damascenon, alpha and/or beta ionone, alpha-irone, 6,5,2-methyl heptenone, p-methylacetophenone, 2-nonanone, nootkatone, 1,3-pentenon, piperitone, dihydrocoumarine, gamma-hexalactone, gamma-undecalactone, winelactone, thymol, vanillin, acetic acid, capric acid, caproic acid, caprylic acid, linoleic acid, myristic acid, 3-ethylmethyl thio propionate, 1,8-menthenthiol optionally ex grapefruit , methoxymethyl butanethiol , 2,4,1,3-methylpropyloxathian, 3,3-methylthiobutylformiat, 3-methylmethyl thiopropionate, terpene thiols mix , thiocinneol, thiogeraniol, 3-thiohexanol, 3-thiohexylbutyrat, 3-thiohexylcapronate, 8,3-thiomenthanone, 4,4,2-thiomethylpentanone, camphene, 3-delta-carene, caryophyllene, caryophyllenoxide, limonene, myrcene, ocimene, pinene, alpha-, pinene, beta-, terpinene, gamma-, terpinolene, valencene fraction, or hotrienol,

Another preferred embodiment relates to a flavouring composition according to any the invention, wherein the flavouring composition, preferably partly obtained by enzymatic conversion as described herein, further comprises at least one compound or compound mixture conveying a sweet taste selected from the group consisting of
natural sweeteners, preferably naturally occurring sweet tasting substances, including plant extracts, such as sweet tasting carbohydrates (such as sucrose, trehalose, lactose, maltose, melizitose, melibiose, raffinose, palatinose, lactulose, (D)-fructose, (D)-glucose, (D)-galactose, (L)-rhamnose, (D)-sorbose, (D)-mannose, (D)-tagatose, (D)-arabinose, (L)-arabinose, (D)-ribose, (D)-glyceraldehyde, maltodextrin), sugar alcohols (such as erythritol, threitol, arabitol, ribitol, xylitol, sorbitol, mannitol, maltitol, isomaltit, dulcitol, lactitol), proteins (such as miraculin, pentaidin, monellin, thaumatin, curculin, brazzein, mabinlin), (D)-amino acids (such as (D)-phenylalanine, (D)-tryptophan) or extracts or fractions obtained from natural sources containing these amino acids and/or proteins and the physiologically acceptable salts of these amino acids and/or proteins, particularly the sodium, potassium, calcium or ammonium salts thereof; neohesperidindihydrochalkon, naringindihydrochalkon, steviolgylcoside, stevioside, steviolbiosid, rebaudioside, rebaudioside A, rebaudioside B, rebaudioside C, rebaudioside D, rebaudioside E, rebaudioside F, rebaudioside G, rebaudioside H, rebaudioside M, rebaudioside N, rebaudioside X, dulcoside, rubusoside, suavioside A, suavioside B, suavioside G, suavioside H, suavioside I, suavioside J, baiyunoside 1, baiyunoside 2, phlomisoside 1, phlomisoside 2, phlomisoside 3, phlomisoside 4, abrusoside A, abrusoside B, abrusoside C, abrusoside D, cyclocaryoside A, cyclocaryoside I, oslandin, polypodoside A, strogin 1, strogin, 2, strogin 4, selligueanin A, dihydroquercetin-3-acetate, perillartin, telosmosid A15, periandrin I-V, pterocaryoside, cyclocaryoside, mukuroZioside, E-Anethol, E-cinnamaldehyd, bryoside, bryonoside, bryonodulcoside, carnosifloside, scandenoside, gypenoside, hematoxylin, cyanin, chlorogenic acid, albiZiasaponin, telosmoside, gaudichaudiosid, mogrosides, such as mogroside V, hernandulcine, monatin, glycyrrhetinic acid and its derivatives, particularly glycyrrhizin, preferably glycyrrhizin ammonium salt; extracts or enriched fractions of such extracts such as extracts of *Thaumatococcus* or *Stevia* ssp., particularly *Stevia rebaudiana,* swingle extracts, particularly *Momordica* or *Siratia grosvenorii* or Luo-Han-Guo, extracts of *Glycerrhyzia* ssp., particularly *Glycerrhyzia glabra* or *Glycerrhyzia uralensis,* extracts of *Rubus* ssp., particularly *Rubus suavissimus* or *Rubus Chingii,* extracts of *Lippia dulcis,* extracts of *Mycetia balansae,* preferably comprising balansin A and/or balansin B;
synthetic sweeteners, preferably synthetic sweet tasting substances, preferably selected from the group consisting of magap, sodium cyclamate or other physiologically acceptable salts of cyclamic acid, acesulfam K; neohesperidindihydrochalcone, naringindihydrochalcone, saccharin, saccharin sodium salt, aspartam, superaspartam, neotam, alitam, advantam, perillartin, sucralose, lugduname, carrelame, sucrononate or sucrooctate or mixtures thereof.

It is especially preferably, if the flavouring composition according to the present invention comprises at least one compound or compound mixture conveying a sweet taste selected from the group consisting of such as sucrose, trehalose, lactose, maltose, palatinose, (D)-fructose, (D)-glucose, (D)-galactose, (D)-tagatose, D-arabinose, I-arabinose, D-ribose, maltodextrin, erythritol, xylitol, sorbitol, mannitol, maltitol, isomaltit, monellin, thaumatin, brazzein, (D)-phenylalanine, (D)-tryptophan or extracts or fractions obtained from natural sources containing these amino acids and/or proteins and the physiologically acceptable salts of these amino acids and/or proteins, particularly the sodium, potassium, calcium or ammonium salts thereof; neohesperidindihydrochalkon, naringindihydrochalkon, steviolgylcoside, stevioside, steviolbiosid, rebaudioside, rebaudioside A, rebaudioside B, rebaudioside C, rebaudioside D, rebaudioside E, rebaudioside F, rebaudioside G, rebaudioside H, rebaudioside M, rebaudioside N, rebaudioside X, rubusoside, E-anethol, chlorogenic acid, mogrosides, such as mogroside V, hernandulcine, monatin, glycyrrhetinic acid and its derivatives, particularly glycyrrhizin, preferably glycyrrhizin ammonium salt; extracts or enriched fractions of such extracts such as extracts of *Thaumatococcus* or *Stevia* ssp., particularly *Stevia rebaudiana,* swingle extracts, particularly *Momordica* or *Siratia grosvenorii* or Luo-Han-Guo, extracts of *Glycerrhyzia* ssp., particularly *Glycerrhyzia glabra,* extracts of *Rubus* ssp.,particularly *Rubus suavissimus* or *Rubus chingii,* extracts of *Lippia dulcis,* extracts of *Mycetia balansae,* preferably comprising balansin A and/or balansin B; sodium cyclamate, acesulfam K; neohesperidindihydrochalcone, naringindihydrochalcone, saccharin, saccharin sodium salt, aspartam, neotam, advantam or sucralose or mixtures thereof.

Another aspect of the present invention relates to a preparation comprising the flavouring composition according to the invention, wherein the flavouring composition is contained in an amount of from 0.001 to 10 ppm, preferably in an amount of from 0.01 to 5 ppm, especially preferably in an amount of from 0.015 to 0.5 ppm, based on the total weight of the preparation.

It was surprisingly found that preparations containing a very low amount of the flavouring composition according to the invention have a much more balanced taste profile and the desired characteristics of the preparation are enhanced.

One preferred embodiment of the preparation according to the invention relates to a preparation, wherein the preparation is selected from the group consisting of preparations suitable for consumption, preferably a foodstuff, preparations for pleasure, beverages, semi-finished products and oral hygiene products.

It is especially preferred if the preparation is a foodstuff, a preparation for pleasure or a beverage.

Another preferred embodiment of the preparation according to the invention relates to a preparation, wherein the preparation additionally comprises one or more (further) flavourings selected from the group consisting of
aliphatic flavouring substances, especially saturated aliphatic alcohols, such as ethanol, isopronanol, butanol, isoamyl alcohol, hexanol, 2-heptanol, (1/2/3)-octanol, decanol, unsaturated aliphatic alcohols, such as 2Z-pentenol, 3Z-hexenol, 2E-hexenol, 3E-hexenol, 2Z-octenol, 1-octen-3-ol, 6Z-nonenol, 2E,6Z-nonadienol, aliphatic aldehydes such as saturated aliphatic aldehydes (e.g. acetaldehyde, propionaldehyde, butyraldehyde, isobutyraldehyde, valeraldehyde, isolvaleraldehyde, hexanal, 3-methyl hexanal, octanal, nonanal, or mono- or multi-unsaturated aliphatic aldehydes, such as 2-methyl-but-2-enal, 2E-hexenal, 3Z-hexenal, 4Z-hexenal, 2E-octenal, 2E-nonenal, 6Z-nonenal, 2E,6Z-nonadienal, 2E-decenal, 2E-decadienal, aliphatic ketones, e.g. saturated ketones (such as 2-butanone, 2-pentanone, 2-heptanone, 2-octanone, 2-methylheptan-3-one, 2-decanone, 2-undecanone), unsaturated ketones (such as 1-penten-3-one, 1-hexen-3-one, 5-methyl-3-hexenone, 3-hepten-2-one, 1-octen-3-one, 2-octen-4-one, 3-octen-2-one, 3-none-2-one), aliphatic diketones and aliphatic diketoles, e.g. diacetyl, acetyl methyl carbinol, 2,3-hexanedione, aliphatic acids, such as straight-chain saturated acids, such as acetic acid, propionic acid, butyric acid, isobutyric acid, valeric acid, heptanoic acid, octanoic acid, decanoic acid, branched-chain saturated acids, such as 2-methyl heptanoic acid, 4-ethyl octanoic acid, and unsaturated acids, such as 2-butenoic acid, 2-pentenoic acid, 4-pentenoic acid, 2-methyl pentenoic acid, 3E-hexenoic acid, 3Z-hexenoic acid, 3-octenoic acid, linoleic acid, aliphatic esters, such as saturated esters, e.g. methyl acetate, methylbutyrate, methyl-2-methylbutyrate, methyl hexanoate, ethylacetate, ethylbutyrate, ethyl-2-methylbutyrate, ethyl-3-methylbutyrate, ethyl hexanoate, ethyl decanoate, isopropyl acetate, isobutyl acetate, isobutyl valerate, isoamyl acetate, isoamyl butyrate, isoamyl isovalerate, hexyl acetate, hexyl hexanoate, 3-octyl acetate and unsaturated esters, such as methyl 2-hexenoate, allyl hexanoate, 3Z-hexenyl acetate, 3Z-hexenyl butyrate, aliphatic thiols and dithiols (e.g. propane thiol, allyl mercaptan, 1-methoxy-3-methylbutane-3-thiol, dimethyl sulfide, dimethyl trisulfide, dipropyl sulfide, diallyl trisulfide, other aliphatic sulfur compounds, such as 2-mercapto-3-butanol, methyl thio propanal, 3-mercapto-pentanone, 4-methoxy-2-methyl-2-mercaptobutanone, methyl thiobutyrate, methyl thiobutyrate, methyl 3-methylthiopropionate, aliphatic nitrogen compounds, such as butyl amine, trimethyl amine, allyl isothiocyanate, isopropyl isothiocyanate, alicyclic compounds, such as alicyclic ketones, e.g. *Z*-jasmone, isophorone, 4-ketoisophorone, alicyclic esters such as methyl jasmonate, hedione, terpenes, e.g. terpene alcohols, such as linalool, citronellol, geraniol, nerol, alpha terpineol, menthol, 8-p-menthene-1,2-diol, fenchol, borneol, nerolidol, hotrienol, terpene aldehydes such as geranial, neral, citronellal, beta-sinensal, terpene ketones, such as alpha-ionone, (D)-carvone, (L)-carvone, nootkatone, piperitone, menthone, alpha damascone, beta damascene, damascenone, terpene esters, such as linalyl acetate, geranyl acetate, citronellyl actetate, carvyl acetate, fenchyl acetate, terpene sulphur compounds, 4-mentha-8-thiol-3-one, thiogeraniol, para-menth-1-ene-8-thiol, mercapto p-menthan-3-one, terpene hydrocarbons, such as (D)-limonene, (L)-limonene, alpha-pinene, beta-pinene, ocimene, alpha-terpinene, gamma-terpinene, beta-bisabolene, valencene, terpene oxides, such as 1,8-cineole, rose oxide, mint lactone, menthofuran, aromatic compounds, e.g. aromatic alcohols, such as benzyl alcohol, cinnamyl alcohol, 2-phenyl alcohol, aromatic aldehydes, such as benzaldehyde, cinnamic aldehyde, 5-methyl-2-phenylhexenal, salicylaldehyde, 4-hydroxy benzaldehyde, cyclamen aldehyde, 2-phenyl-2-butenal, aromatic acids, such as 2-phenyl acetic acid, cinnamic acid, aromatic esters such as benzyl acetate, benzyl salicylate, anisyl acetate, methyl phenyl acetate, methyl benzoate, methyl salicylate, methyl cinnamate, aromatic phenols, such as phenol, ortho-cresol, para-cresol, 2,3-dimethyl phenyl, 2-ethyl phenol, 2,3,5-trimethyl phenol, 4-vinyl phenol, guaiacol, 4-vinyl guaiacol, eugenol, thymol, carvacrol, aromatic sulphur compounds, such as thiophenol, diphenyl disulphide, aromatic nitrogen compounds, such as methyl anthranilate, methyl N-methyl anthranilate, aromatic ethers such as vanillin, ethylvanillin, anethol, aromatic oxides, such as heliotropine, diphenyl oxide, aromatic lactones, such as coumarin, dihydro coumarin, heterocyclic compounds, such as heterocyclic lactones, e.g. gamma butyrolactone, gamma-nonalactone, gamma decalactone, delta decalactone, jasmin lactone, delta dodecalactone, ambrettolide, heterocyclic furanes, such as furfuryl alcohol, furfural, 2-acetyl furan, theaspirane, 2-methyl tetrahydro furan-3-one, furfuryl mercaptane, 2-methyl 3-furanthiol, 2-methyl 3- tetrahydro furanthiol, difurfuryl sulfide, difurfuryl disulfide, heterocyclic pyrans, such as maltol, ethyl maltole, rose oxide, maltol isobutyrate, heterocyclic pyrroles such as indole, 2-acetyle pyrrole, pyrrolidine, heterocyclic pyrazines, such as 2-methyl pyrazine, 2,3-dimethyl pyrazine, 2-methyl 3-ethyl pyrazine, trimethyl pyrazine, 2-acetyl pyrazine, 2-methoxy 3-methyl pyrazine, 2-methoxy 3-ethyl pyrazine, 2-methoxy 3-isobutyl pyrazine, 2-ethyl 3-methylthio pyrazine, heterocyclic thiazoles, such as thiazole, 2-methyl thiazole, 4-methyl 5-vinyl thiazole, 2-isobutyl thiazole, 2-acetyl thiazole,
flavouring raw materials and flavouring preparations, e.g. essential oils, concretes, absolutes, extract or tinctures from raw materials such as citrus (e.g. lemon, lime, tangerine, bergamotte, grapefruit bitter orange, peel or essence oils), herbs (dill, parsley, cumin, rosemary, sage, clary sage, basil, tarragon, thyme, oregano, savoury, marjoram, all spice, mace, nutmeg, clove leave, clove bud, caraway, cinnamon leaves, cinnamon bark, cassia, cardamom, ginger, galangal, turmeric, coriander seed, coriander leaf, fenugreek, juniper berry, wormwood, laurel leaves, eucalyptus, white pepper, green pepper, white pepper, carrot seed, celery seed, lovage leaf, asa foetida, onion, leek, garlic, mustard, horse radish, capsicum, paprika, sea weed, valerian oil, fir needle, spearmint, peppermint, wintergreen, buchu leaf, black currant buds, fennel, star anise, jambu, long pepper, davana, orris, mimosa, cassie, violet leaves, ho leaf, jasmin, ylang ylang, cananga, osmanthus, angelica, clary sage, ambrette seed, hops, camomile, lavender, rose, geranium, citronella, palmarosa, litsea cubeba, lemon grass, tagetes, neroli, petitgrain, mate, cognac oil, coffee, cola nut, cocoa, green tea, black tea, white tea, gentian, tolu balm, benzoe resin, peru balm, cascarilla, galbanum, vetiver, labdanum, patchouli, sandalwood, cedarwood, guaiac wood, oak wood, massoi bark, vanilla pods, tonka bean, as well as enriched fractions thereof,
juice concentrates, such as orange juice, lemon juice, strawberry, cherry juice, or passion fruit juice concentrates, water phases and recoveries from raw materials such as citrus (lemon, lime, orange, tangerine, grapefruit), apple, pear, quince, mispel, red fruits (raspberry, strawberry, blueberry, blackberry, Amellanchia (June plum), rose hip, cranberry, plum, prune, red and black currant, yellow fruits (peach, apricot, nectarine, banana, etc.), tropical fruits (mango, passionfruit, pineapple, lychee, etc.), vegetables (e.g. cucumber, tomato) and spices (e.g. ginger),
acetophenone, allyl caproate, alpha-ionone, beta-ionone, anisaldehyde, anisyl acetate, anisyl formate, benzaldehyde, benzothiazole, benzyl acetate, benzyl alcohol, benzyl benzoate, beta-ionone, butyl butyrate, butyl caproate, butylidene phthalide, carvone, camphene, caryophyllene, cineol, cinnamyl acetate, citral, citronellol, citronellal, citronellyl acetate, cyclohexyl acetate, cymene, damascone, decalactone, dihydrocoumarin, dimethyl anthranilate, dodecalactone, ethoxyethyl acetate, ethylbutyric acid, ethyl butyrate, ethyl caprate, ethyl caproate, ethyl crotonate, ethylfuraneol, ethylguaiacol, ethylisobutyrate, ethylisovalerate, ethyl lactate, ethylmethyl butyrate, ethyl propionate, eucalyptol, eugenol, ethyl heptylate, 4-(p-hydroxyphenyl)-2-butanone, gamma-decalactone, geraniol, geranyl acetate, geranyl acetate, grapefruit aldehyde, methyl dihydrojasmonate (e.g. Hedion^{®}), heliotropin, 2-heptanone, 3-heptanone, 4-heptanone, 2E-heptenal, 4Z-heptenal, 2E-hexenal, 3Z-hexenol, 2E-hexenoic acid, 3E-hexenoic acid, 2Z-hexenyl acetate, 3Z-hexenyl acetate, 3Z-hexenyl caproate, 2E-hexenyl caproate, 3Z-hexenyl formate, 2Z-hexyl acetate, 3Z-hexyl acetate, 2E-hexyl acetate, 3Z-hexyl formate, para-hydroxybenzyl acetone, isoamyl alcohol, isoamyl isovalerate, isobutyl butyrate, isobutyraldehyde, isoeugenol methyl ether, isopropyl methylthiazole, lauric acid, levulinic acid, linalool, linalool oxide, linalyl acetate, menthol, menthofuran, methyl anthranilate, methylbutanol, methylbutyric acid, 2-methylbutyl acetate, methyl caproate, methyl cinnamate, 5-methylfurfural, 3,2,2-methylcyclopentenolone, 6,5,2-methylheptenone, methyl dihydrojasmonate, methyl jasmonate, 2-methylmethyl butyrate, 2-methyl-2-pentenol acid, methylthiobutyrate, 3,1-methylthiohexanol, 3-methylthiohexyl acetate, nerol, nerol acetate, 2E,4E-nonadienal, 2,4-nonadienol, 2,6-nonadienol, 2,4-nonadienol, nootkatone, delta-octalactone, gamma-octalactone, 2-octanol, 3-octanol, 1,3-octenol, 1-octyl acetate, 3-octyl acetate, palmitic acid, paraldehyde, phellandrene, pentanedione, phenylethyl acetate, phenylethyl alcohol, phenylethyl isovalerate, piperonal, propionaldehyde, propyl butyrate, pulegone, pulegol, sinensal, sulfurol, terpinene, terpineol, terpinolene, 8,3-s thiomenthanone, 4,4,2-thiomethylpentanone, thymol, delta-undecalactone, gamma-undecalactone, valencene, valeric acid, vanillin, acetoin, ethylvanillin, ethylvanillin isobutyrate (=3-ethoxy-4-isobutyryloxybenzaldehyde), 2,5-dimethyl-4-hydroxy-3 (2H)-furanone and derivatives thereof (here preferably homofuraneol (=2-ethyl-4-hydroxy-5-methyl-3(2H)-furanone), homofuronol (=2-ethyl-5-methyl-4-hydroxy-3(2H)-furanone and 5-ethyl-2-methyl-4-hydroxy-3(2H)-furanone), maltol and maltol derivatives (here preferably ethyl maltol), coumarin and coumarin derivatives, gamma-lactones (here preferably gamma-undecalactone, gamma-nonalactone, gamma-decalactone), delta-lactones (here preferably 4-methyldeltadecalactone, massoilactone, deltadecalactone, tuberolactone), methyl sorbate, divanillin, 4-hydroxy-2(or 5)-ethyl-5 (or 2)-methyl-3 (2H)furanone, 2-hydroxy-3-methyl-2-cyclopentenone, 3-hydroxy-4,5-dimethyl-2(5H)-furanone, acetic acid isoamyl ester, butyric acid ethyl ester, butyric acid-n-butyl ester, butyric acid isoamyl ester, 3-methyl-butyric acid ethyl ester, n-hexanoic acid ethyl ester, n-hexanoic acid allyl ester, n-hexanoic acid-n-butyl ester, n-octanoic acid ethyl ester, ethyl-3-methyl-3-phenylglycidate, ethyl-2-E-4-Z-decadienoate, 4-(p-hydroxyphenyl)-2-butanone, 1,1-dimethoxy-2,2,5-trimethyl-4-hexane, 2,6-dimethyl-5-hepten-1-al and phenylacetaldehyde, 2-methyl-3-(methylthio)furan, 2-methyl-3-furanthiol, bis(2-methyl-3-furyl)disulphide, furfurylmercaptan, methional, 2-acetyl-2-thiazoline, 3-mercapto-2-pentanone, 2,5-dimethyl-3-furanthiol, 2,4,5-trimethylthiazole, 2-acetylthiazole, 2,4-dimethyl-5-ethylthiazole, 2-acetyl-1-pyrroline, 2-methyl-3-ethylpyrazine, 2-ethyl-3,5-dimethylpyrazine, 2-ethyl-3,6-dimethylpyrazine, 2,3-diethyl-5-methylpyrazine, 3-isopropyl-2-methoxypyrazine, 3-isobutyl-2-methoxypyrazine, 2-acetylpyrazine, 2-pentylpyridine, (E,E)-2,4-decadienal, (E,E)-2,4-nonadienal, (E)-2-octenal, (E)-2-nonenal, 2-undecenal, 12-methyltridecanal, 1-penten-3-one, 4-hydroxy-2,5-dimethyl-3 (2H)-furanone, guaiacol, 3-hydroxy-4,5-dimethyl-2(5H)-furanone, 3-hydroxy-4-methyl-5-ethyl-2(5H)-furanone, cinnamaldehyde, cinnamon alcohol, methyl salicylate, isopulegol and (here not explicitly stated) stereoisomers, enantiomers, positional isomers, diastereomers, Z/E isomers or epimers of these substances.

Another preferred embodiment of the preparation according to the invention relates to a preparation, wherein the preparation additionally comprises at least one (further) compound or compound mixture conveying a sweet taste selected from the group consisting of
natural sweeteners, preferably naturally occurring sweet tasting substances, including plant extracts, such as sweet tasting carbohydrates (such as sucrose, trehalose, lactose, maltose, melizitose, melibiose, raffinose, palatinose, lactulose, (D)-fructose, (D)-glucose, (D)-galactose, (L)-rhamnose, (D)-sorbose, (D)-mannose, (D)-tagatose, (D)-arabinose, (L)-arabinose, (D)-ribose, (D)-glyceraldehyde, maltodextrin), sugar alcohols (such as erythritol, threitol, arabitol, ribitol, xylitol, sorbitol, mannitol, maltitol, isomaltit, dulcitol, lactitol), proteins (such as miraculin, pentaidin, monellin, thaumatin, curculin, brazzein, mabinlin), (D)-amino acids (such as (D)-phenylalanine, (D)-tryptophan) or extracts or fractions obtained from natural sources containing these amino acids and/or proteins and the physiologically acceptable salts of these amino acids and/or proteins, particularly the sodium, potassium, calcium or ammonium salts thereof; neohesperidindihydrochalkon, naringindihydrochalkon, steviolgylcoside, stevioside, steviolbiosid, rebaudioside, rebaudioside A, rebaudioside B, rebaudioside C, rebaudioside D, rebaudioside E, rebaudioside F, rebaudioside G, rebaudioside H, rebaudioside M, rebaudioside N, rebaudioside X, dulcoside, rubusoside, suavioside A, suavioside B, suavioside G, suavioside H, suavioside I, suavioside J, baiyunoside 1, baiyunoside 2, phlomisoside 1, phlomisoside 2, phlomisoside 3, phlomisoside 4, abrusoside A, abrusoside B, abrusoside C, abrusoside D, cyclocaryoside A, cyclocaryoside I, oslandin, polypodoside A, strogin 1, strogin, 2, strogin 4, selligueanin A, dihydroquercetin-3-acetate, perillartin, telosmosid A15, periandrin I-V, pterocaryoside, cyclocaryoside, mukuroZioside, E-Anethol, E-cinnamaldehyd, bryoside, bryonoside, bryonodulcoside, carnosifloside, scandenoside, gypenoside, hematoxylin, cyanin, chlorogenic acid, albiZiasaponin, telosmoside, gaudichaudiosid, mogrosides, such as mogroside V, hernandulcine, monatin, glycyrrhetinic acid and its derivatives, particularly glycyrrhizin, preferably glycyrrhizin ammonium salt; extracts or enriched fractions of such extracts such as extracts of *Thaumatococcus* or *Stevia* ssp., particularly *Stevia rebaudiana,* swingle extracts, particularly *Momordica* or *Siratia grosvenorii* or Luo-Han-Guo, extracts of *Glycerrhyzia* ssp., particularly *Glycerrhyzia glabra* or *Glycerrhyzia uralensis,* extracts of *Rubus* ssp., particularly *Rubus suavissimus* or *Rubus Chingii,* extracts of *Lippia dulcis,* extracts of *Mycetia balansae,* preferably comprising balansin A and/or balansin B;
synthetic sweeteners, preferably synthetic sweet tasting substances, preferably selected from the group consisting of magap, sodium cyclamate or other physiologically acceptable salts of cyclamic acid, acesulfam K; neohesperidindihydrochalcone, naringindihydrochalcone, saccharin, saccharin sodium salt, aspartam, superaspartam, neotam, alitam, advantam, perillartin, sucralose, lugduname, carrelame, sucrononate or sucrooctate or mixtures thereof.

Another aspect of the present invention relates to the use of the flavouring composition according to the invention, preferably as described in connection with one or more preferred embodiments above, for improving at least one taste characteristic in / of a preparation.

A "taste characteristic" in terms of the present invention may mean any taste or taste impression of a preparation, which can be modified / improved or created, such as a salty, sour, sweet, bitter, juicy, fruity, umami, kukumi, brothy, savory, aldehydic, fresh-tangy, fatty, oily or waxy taste, or (overall) taste impressions such as richness, body, authenticity, impact, mouthfeel, sweetness and juiciness.

One preferred embodiment relates to the use according to the invention, wherein the at least one taste characteristic(s) is / are selected from the group consisting of richness, body, authenticity, impact, mouthfeel, sweetness and juiciness.

"Richness" in terms of the present invention preferably means a balanced taste profile, wherein the desired taste is perceived as strong, pleasant main taste and certain side tastes are present in a way that they do not disturb the pleasant main taste but support it.

"Body" in terms of the present invention preferably means the desired main taste of a preparation. If the body taste of a preparation is enhanced, it has a stronger main taste.

"Impact" in terms of the present invention preferably means that the desired main taste has strong peaks in the taste perception, which makes the desired taste more interesting for the consumer.

"Mouthfeel" in terms of the present invention preferably means that the taste conveys a pleasant feeling in the mouth without spiking the single tastes sour, sweet, salty or savory/umami.

"Sweetness" in terms of the present invention preferably means the sweet taste of a preparation.

"Juiciness" in terms of the present invention preferably means a taste that conveys a fresh impression in the mouth, which is predominantly composed of sweet and sour taste impressions.

Another preferred embodiment relates to the use according to the invention, wherein the flavouring composition according to the invention is used in an amount of from 0.001 to 10 ppm, preferably in an amount of from 0.01 to 5 ppm, especially preferably in an amount of from 0.015 to 0.5 ppm, based on the total weight of the preparation.

As described above, it was surprisingly found that even a low dosing of the flavouring composition according to the present invention conveys an improvement in the desired taste characteristic.

Another aspect of the present invention relates to a method for improving at least one taste characteristic in / of a preparation, comprising or consisting of the steps
a) providing at least one preparation selected from the group consisting of preparations suitable for consumption, preferably a foodstuff, preparations for pleasure, beverages, semi-finished products and oral hygiene products, preferably as described herein;
b) providing a flavouring composition according to the invention, preferably as described herein above as preferred;
c) contacting and mixing the preparation provided in step a) and the flavouring composition provided in step b);
d) obtaining a preparation according to the invention, preferably as described above as preferred.

One preferred embodiment relates to a method according to the invention, wherein the flavouring composition provided in step b) is provided in an amount of from 0.001 to 10 ppm, preferably in an amount of from 0.01 to 5 ppm, especially preferably in an amount of from 0.015 to 0.5 ppm, based on the total weight of the preparation.

Again, as described above, it was surprisingly found that even a low provision of the flavouring composition according to the present invention in step b) conveys an improvement in the desired taste characteristic.

Further preferred embodiments of such uses and methods according to the present invention become apparent in view of the above described preferred embodiments in connection with preferred flavouring compositions and products, respectively.

In the following, exemplary specific embodiments are described in more detail, without the intention to limit the scope of the present invention.

The term "flavouring preparation" is used in the examples part to describe the mixture directly obtained from a natural source. In terms of the present invention, the described "flavouring preparation" is also a "flavouring composition" as claimed in connection with the present invention.

### Examples

### Example 1: Production of a flavouring preparation from natural sources

### 1. Borage seed oil

10 grams of borage seed oil were incubated with *Candida antarctica* Lipase B and tert-Butanol to hydrolyse the contained triglycerides. The reaction mixture containing free fatty acids from borage seed oil are extracted with methyl-tert-butylether (MTBE) und the solvent is evaporated in a subsequent step. The enriched free fatty acids from borage seed oil are subsequently incubated with an alpha-dioxygenase and an aldehyde dehydrogenase for obtaining the desired aldehydes, which are extracted with ethyl acetate after finishing the enzymatic treatment. 1.8 g of the flavouring preparation according to the invention is obtained after evaporating the solvent and subsequent ball distillation.

### 2. Macadamia nut oil

10 grams of macadamia nut oil is incubated with *Candida antarctica* Lipase B and tert-Butanol to hydrolyse the contained triglycerides. The reaction mixture containing free fatty acids from macadamia nut oil are extracted with MTBE und the solvent is evaporated in a subsequent step. The purified free fatty acids from macadamia nut oil are subsequently incubated with an alpha-dioxygenase and an aldehyde dehydrogenase for obtaining the desired aldehydes, which are extracted with ethyl acetate after finishing the enzymatic treatment. 0.66 g flavouring preparation according to the invention is obtained after evaporating the solvent and subsequent ball distillation.

### Example 2: Analytic of the obtained flavouring preparations from Example 1

The obtained flavouring preparations were analysed via gas chromatography and gas chromatography coupled to a mass spectrometer (GC-MS). Samples were diluted 1:300 using ethyl acetate prior to analysis.

The following conditions were used:
(1) Gas chromatography: Inj. volume: 1 µL; run time: 45 min; column info: 15 m MXT-1(HT) 0,1 µM df; ID: 0,25 mm / 60°C-10°C/min-380°C PTV
(2) Gas chromatography-MS: column info: 20 m ZB-1, 60-9-300, Split 30).

The following results regarding the aldehydes of the flavouring preparation according to the present invention were obtained for borage seed oil and macadamia nut oil:

### 1. Borage seed oil

**Table 1: GC-MS results for a flavouring preparation prepared from borage seed oil.**

| Aldehyde | Peak Area [%] | Time |
|---|---|---|
| Tridecanal | 0.452 | 5.833 |
| 6Z-, 9Z-pentadecadienal | 0.225 | 7.983 |
| Tetradecanal | 2.283 | 12.772 |
| 8Z-pentadecenal | 0.211 | 13.740 |
| Pentadecenal | 8.685 | 14.072 |
| Hexadecatrienal | 0.458 | 14.669 |
| 7*Z*-,10*Z-*hexadecadienal | 5.615 | 14.843 |
| 7Z-hexadecenal | 1.548 | 14.948 |
| Hexadecenal | 0.350 | 15.244 |
| Heptadecatrienal | 5.730 | 15.850 |
| 8*Z*,11*Z-*heptadecadienal | 22.395 | 16.064 |
| 8Z-heptadecenal | 17.528 | 16.171 |
| Heptadecanal | 5.519 | 16.430 |
| Nonadecenal | 2.641 | 18.259 |

### 2. Macadamia nut oil

**Table 2: GC-MS results for a flavouring preparation prepared from macadamia nut oil.**

| Aldehyde | Peak Area [%] | Time |
|---|---|---|
| 12Z-Tridecanal | 0.373 | 11.007 |
| Tridecanal | 0.274 | 11.293 |
| 7Z-tetradecenal | 1.189 | 12.335 |
| Tetradecanal | 0.430 | 12.630 |
| 8Z-pentadecenal | 5.357 | 13.619 |
| Pentadecenal | 2.533 | 13.906 |
| 7Z-hexadecenal | 1.683 | 14.807 |
| *8Z-,11Z-*heptadecadienal | 0.446 | 15.841 |
| 8Z-heptadecenal | 12.611 | 15.974 |
| Heptadecanal | 0.752 | 16.261 |
| Nonadecenal | 0.537 | 18.108 |

### Example 3: Sensory evaluation of the flavouring preparation

The obtained and analyzed flavouring compositions were used in different dosing regimens of and tasted by a panel consisting of five to eight educated panellists. The tasting base solution is an aqueous solution with 8 wt.-% sucrose and 0.15 wt.-% citric acid dependent on the total mass of the aqueous solution. The tests were conducted by comparing the taste of the aqueous solution after adding a dosage of an essence oil to a dosage of an essence oil and the respective flavouring composition.

### 1. Borage seed oil

Table 3 shows the results of the tests with a flavouring preparation obtained from borage seed oil as described in Examples 1 and 2.

**Table 3: Results of the sensorial experiments with a flavouring preparation manufactured from borage seed oil.**

| **Sample** | **Dosage** | **Odor** | **Taste** |
|---|---|---|---|
| Essence oil orange | 25 ppm | fruity, essence, ripe, juicy, slightly aldehydic | fruity, essence, ripe, juicy, slightly aldehydic |
| Essence oil orange + flavouring composition | 25 ppm plus 0.05 ppm | lift, more impact | sweeter, fuller, riper, more body |
| Essence oil tangerine | 12 ppm | fruity, methyl anthranilate, juicy, slightly aldehydic-fishy | fruity, methyl anthranilate, juicy, slightly aldehydic-fishy |
| Essence oil tangerine + flavouring preparation | 12 ppm plus 0.015 ppm | more impact, stronger, more candy-anthranilate, more fishy, more albedo-peely | more body, impact, slightly fishy, more typical |

Additionally to testing the flavouring preparation in a model solution, the flavouring composition was also added in dosing regimens of 0.01 to 0.08 g/L of a 0.1 wt.-% solution in triacetin to commercially available citrus lemonades. The overall observed influence on the odor and the taste of the preparations was described by the panelists as that the addition of the flavouring preparation leads to a lift of aldehydic-zesty and albedo-peely notes in the odor. Additionally the odor was fresher and more juicy. The taste is described as having more body and more impact, conveying a sweeter and fuller mouthfeel and being more albedo-aldehydic and fatty-waxy as desired for these types of beverages.

The beverage application examples are displayed in Table 4.

**Table 4: Beverage formulations containing the aldehyde mixture from borage seed oil or macadamia nut oil.**

| Ingredient | Orange carbonated soft drink [g/L] | Isotonic grapefruit [g/L] | Near water mandarine [g/L] |
|---|---|---|---|
| Ascorbic acid | 0.40 | 0.40 | - |
| Citric acid | 2.10 | - | 1.30 |
| Sweetener mix | - | 0.30 | - |
| Invert sugar syrup 72.7 wt.-% | 100.00 | - | 35.00 |
| Fructose syrup 95 wt.-% | - | 15.00 | - |
| Carotine beta | 0.01 | - | - |
| Orange compound | 10.00 | - | - |
| Citrus compound | - | 12.00 | - |
| Mandarine oil terpene-free 10 vol.-% in Ethanol | - | - | 0.10 |
| Orange Washing | - | - | 0.60 |
| Naringin ex Grapefruit | - | 0.10 | - |
| Lemon juice concentrate | - | 9.00 | - |
| Grapefruit juice concentrate | - | 7.00 | - |
| Orange juice concentrate | 7.00 | 3.00 | - |
| Flavouring preparation from Table 1 0.1 wt.-% in triacetin | 0.03 - 0.08 (preferred 0.05) | 0.03 - 0.08 (preferred 0.05) | 0.01 - 0.03 (preferred 0.05) |
| Carbonated water (6 g/l CO2) | ad 1 L | ad 1 L | - |
| Water | - | - | ad 1 L |

An orange or citrus compound describes a base composition for manufacturing softdrinks comprising an amount of 50 wt.-% sugar and 15.5 wt.-% fruit acid and colorants.

An orange washing is the extraction product from extracting orange essential oil with food grade solvents (e.g. ethanol and water).

### 2. Macadamia nut oil

Table 5 shows the results of the tests with a flavouring composition obtained from macadamia nut oil as described in Examples 1 and 2.

**Table 5: Results of the sensorial experiments with a flavouring preparation manufactured from macadamia nut oil.**

| **Sample** | **Dosage** | **Odor** | **Taste** |
|---|---|---|---|
| Essence oil orange | 25 ppm | fruity, essence, ripe, juicy, slightly aldehydic | fruity, essence, ripe, juicy, slightly aldehydic |
| Essence oil orange + flavouring composition | 25 ppm + 0.5 ppm | sweeter, fruitier, fuller, more impact | sweeter, fuller , riper |
| Essence oil tangerine | 12 ppm | fruity, methyl anthranilate, juicy, slightly aldehydic-fishy | fruity, methyl anthranilate, juicy, slightly aldehydic-fishy |
| Essence oil tangerine + flavouring preparation | 12 ppm + 0.5 ppm | more impact, stronger, juicier, bit more zesty | mainly juicier |

Additionally to testing the flavouring preparation in a model solution, the flavouring preparation was also added in dosing regimens of 0.015 to 0.05 ppm to commercially available citrus lemonades. The overall observed influence on the odor and the taste of the preparations was described by the panelists as that the addition of the flavouring preparation leads to a lift and more impact of the odor. Overall, the odor was a bit fresher and more zesty and conveys a bit more fatty-aldehydic, albedo-waxy notes. The taste is described as having more body, being more juicy and fuller with more fatty-aldehydic and albedo-waxy notes as desired for these types of beverages.

### Example 4: Formulation examples and sensorial evaluation

The following tables show flavouring compositions according to the invention, their dosage in the final application and the effect on the taste and odour in the final application.

### 4.1 Lime flavouring composition

**Table 6: Ingredients of a lime flavouring composition, its dosage in the final application and the effect on taste and odour in the final application.**

| **.Ingredient** | **Amount in g/100g** |
|---|---|
| Decanol | 0.10 |
| Decanal | 0.20 |
| Dodecanal | 0.30 |
| Borneol | 0.05 |
| Iso-Borneol | 0.10 |
| Camphene | 0.02 |
| Campheroil | 0.10 |
| trans-l-Carveol | 0.05 |
| Caryophyllene | 2.50 |
| Caryophyllenoxid | 0.30 |
| Citral | 0.50 |
| p-Cymene | 1.00 |
| Eucalyptol | 0.50 |
| Fenchol | 2.00 |
| Fenchone | 0.20 |
| Geranyl acetate | 0.05 |
| Linalool | 0.50 |
| Nerol | 0.06 |
| Neryl acetate | 2.50 |
| Ocimene | 0.20 |
| gamma-Terpinene | 3.00 |
| 4-Terpinenol | 4.00 |
| alpha-Terpineol | 25.00 |
| gamma-Terpineol | 4.00 |
| Terpinolene | 5.00 |
| Lime oil distilled | Q.S. |
| Flavouring preparation from borage seed oil 0.1 wt.-% in triacetin | 0.01 - 0.10 (preferably 0.02) |
| Dosage in final application | 25 ppm |
| Effect on taste and odour | fresher, more waxy, better mouthfeel |

### 4.2 Mandarine flavouring composition

**Table 7: Ingredients of a mandarine flavouring preparation, its dosage in the final application and the effect on taste and odour in the final application.**

| **Ingredient** | **Amount in g/100g** |
|---|---|
| Decanol | 0.01 |
| Octanol | 0.05 |
| Octanal | 0.10 |
| Nonanal | 0.01 |
| Decanal | 0.05 |
| trans-l-Carveol | 0.01 |
| Caryophyllene | 0.10 |
| Citronellal | 0.01 |
| Citronellol | 0.01 |
| p-Cymene | 1.00 |
| 4Z-Decenal | 0.01 |
| 2E-Decenal | 0.01 |
| Methyl N-methyl anthranilate | 0.20 |
| 2E-Dodecenal | 0.01 |
| Linalool | 0.10 |
| Myrcene | 1.80 |
| Nerol | 0.01 |
| Perilla aldehyde replacer | 0.05 |
| alpha-Pinene | 3.00 |
| beta-Pinene | 1.50 |
| Sinensal fraction ex orange | 0.02 |
| gamma-Terpinene | 15.00 |
| 4-Terpinenol | 0.05 |
| alpha-Terpineol | 0.20 |
| Terpinolene | 1.00 |
| Thymol | 0.10 |
| Orange oil Brazilian | 30.00 |
| Flavouring preparation from borage seed oil 0.1 wt.-% in triacetin | 0.03 - 0.20 (preferably 0.06) |
| Dosage in final application | 20 ppm |
| Effect on taste and odour | more albedo, fatty, more body, more juiciness |

### 4.3 Kalamansi flavouring composition

**Table 8: Ingredients of a kalamansi flavouring preparation, its dosage in the final application and the effect on taste and odour in the final application.**

| **Ingredient** | **Amount in g/100g** |
|---|---|
| Acetaldehyde | 0.2 |
| Decanol | 0.01 |
| Octanol | 0.10 |
| Decanal | 0.10 |
| Undecanal | 0.03 |
| Dodecanal | 0.02 |
| Caryophyllene | 0.10 |
| Citral | 0.50 |
| Citronellal | 0.02 |
| 2E,4E-Decadienal | 0.02 |
| 4Z-Decenal | 0.01 |
| Geranyl acetate | 0.10 |
| Linalool | 0.01 |
| Linalyl acetate | 0.10 |
| Mandarine oil Italian | 10.00 |
| Nerolidol | 0.02 |
| Alpha-pinene | 0.60 |
| 4-Terpinenol | 0.10 |
| alpha-Terpineol | 0.20 |
| Orange oil Brazilian | 30.00 |
| Tangerine oil | Q.S. |
| Flavouring preparation from borage seed oil 0.1 wt.-% in triacetin | 0.01- 0.10 (preferably 0.25) |
| Dosage in final application | 80 ppm |
| Effect on taste and odour | more waxy-fatty, albedo, more impact, more body |

### 4.4 Tangerine flavouring composition

**Table 9: Ingredients of a tangerine flavouring composition, its dosage in the final application and the effect on taste and odour in the final application.**

| **Ingredient** | **Amount in g/100g** |
|---|---|
| Dodecanal | 0.10 |
| 4Z-Decenal | 0.02 |
| 2E-Decenal | 0.02 |
| 2E-Dodecenal | 0.02 |
| Mandarine oil Italian | 5.00 |
| 2E,6Z -Nonadienal 1 wt.-% | 0.10 |
| 6Z-Nonenal 1wt.-% | 0.02 |
| Orange oil bitter | 10.00 |
| Sinensal fraction ex orange | 0.20 |
| Orange oil Brazilian | 20.00 |
| Tangerine oil | Q.S. |
| Flavouring preparation from borage seed oil 0.1 wt.-% in triacetin | 0.01 - 0.10 (preferably 0.025) |
| Dosage in final application | 80 ppm |
| Effect on taste and odour | more waxy-fatty, albedo, more impact, more body |

### 4.5 Orange flavouring composition

**Table 10: Ingredients of an orange flavouring composition, its dosage in the final application and the effect on taste and odour in the final application.**

| **Ingredient** | **Amount in g/100g** |
|---|---|
| Decanol | 0.08 |
| Hexanol | 0.01 |
| Octanol | 0.50 |
| Nonanol | 0.10 |
| Hexanal | 0.10 |
| Octanal | 1.00 |
| Nonanal | 0.20 |
| Decanal | 1.00 |
| Dodecanal | 0.20 |
| Caprylic acid | 0.10 |
| trans-l-Carveol | 0.25 |
| Caryophyllene | 0.04 |
| Caryophyllenoxid | 0.10 |
| Citral | 0.50 |
| Citronellal | 0.15 |
| Citronellol | 0.07 |
| 2E-Decenal | 0.02 |
| Ethyl butyrate | 0.20 |
| Ethyl caprylate | 0.02 |
| 2-Ethyl methylbutyrate | 0.02 |
| Geraniol | 0.03 |
| 2E-Hexenal | 0.02 |
| Linalool | 3.00 |
| Myrcene | 1.80 |
| Nerol | 0.05 |
| Nootkatone | 0.10 |
| 1-Octyl acetate | 0.07 |
| Orange essence oil Florida | 50.00 |
| Perilla aldehyde replacer | 0.15 |
| Sinensal fraction ex orange | 0.50 |
| Valencene fraction ex orange | 1.00 |
| Orange oil Brazilian | Q.S. |
| Flavouring preparation from borage seed oil 0.1 wt.-% in triacetin | 0.03 - 0.15 (preferably 0.055) |
| Dosage in final application | 40 ppm |
| Effect on taste and odour | sweeter, fuller, aldehydic, more juicy-fruity, riper |

### 4.6 Grapefruit flavouring composition

**Table 11: Ingredients of a grapefruit flavouring composition, its dosage in the final application and the effect on taste and odour in the final application.**

| **Ingredient** | **Amount in g/100g** |
|---|---|
| Decanol | 0.02 |
| Octanol | 0.20 |
| Octanal | 0.50 |
| Nonanal | 0.10 |
| Decanal | 0.60 |
| Dodecanal | 0.05 |
| Capric acid | 0.10 |
| Caprylic acid | 0.05 |
| trans-l-Carveol | 0.04 |
| trans-Carvyl acetate | 0.05 |
| Caryophyllene | 0.40 |
| Citral | 0.20 |
| Citronellal | 0.05 |
| p-Cymene | 0.20 |
| Geraniol | 0.02 |
| Geranyl acetate | 0.08 |
| Grapefruit oil white | 60.00 |
| Heptyl acetate | 0.04 |
| Linalool | 0.40 |
| 1,8-Menthenthiol 1 wt.-% in limonen | 0.70 |
| Myrcene | 1.80 |
| Nootkatone | 0.40 |
| Ocimene | 0.50 |
| 1-Octyl acetate | 0.10 |
| Palmitic acid | 0.08 |
| Perilla aldehyde replacer | 0.04 |
| alpha-Pinene | 1.00 |
| beta-Pinene | 0.25 |
| alpha-Terpineol | 0.15 |
| Terpinolene | 0.01 |
| Valencene fraction ex orange | 0.30 |
| Orange oil Brazilian | Q.S. |
| Flavouring preparation from borage seed oil 0.1 wt.-% in triacetin | 0.01 - 0.15 |
| Dosage in final application | 25 ppm |
| Effect on taste and odour | more albedo-waxy, more impact, sweeter |

### 4.7 Lemon flavouring composition

**Table 12: Ingredients of a lemon flavouring composition, its dosage in the final application and the effect on taste and odour in the final application.**

| **Ingredient** | **Amount in g/100g** |
|---|---|
| Decanol | 0.20 |
| Nonanol | 0.10 |
| Octanal | 0.20 |
| Nonanal | 0.80 |
| Decanal | 0.40 |
| Undecanal | 0.10 |
| Dodecanal | 0.05 |
| Borneol | 0.04 |
| Campheroil | 0.05 |
| Capric acid | 0.04 |
| Caryophyllene | 0.03 |
| Citral | 10.00 |
| Citronellal | 0.10 |
| Citronellol | 0.04 |
| Citronellyl acetate | 0.02 |
| Eucalyptol | 0.20 |
| Geraniol | 0.05 |
| Geranyl acetate | 0.50 |
| Hotrienol | 0.02 |
| Linalool | 0.20 |
| Linoleicacid | 0.10 |
| Nerol | 0.10 |
| Neryl acetate | 2.00 |
| Palmitic acid | 0.10 |
| 4-Terpinenol, | 0.20 |
| alpha-Terpineol, | 0.20 |
| Lime juice oil | 20.00 |
| Lemon oil Italian | Q.S. |
| Flavouring preparation from borage seed oil | 0.01 - 0.10 |
| Dosage in final application | 50 ppm |
| Effect on taste and odour | more waxy, residue notes, slightly more juicy |

## Claims

1. Flavouring composition comprising or consisting of 8Z,11Z-heptadecadienal, 8Z-heptadecenal and 7Z-Hexadecenal, and optionally one or more compounds from the group consisting of 5Z,8Z,12Z-heptadecatrienal, 8Z-pentadecenal and 7Z-tetradecenal, wherein
- 8*Z*,11*Z*-heptadecadienal is contained in an amount of from 0.0001 to 30 wt.-%, preferably in an amount of from 0.001 to 30 wt.-%, more preferably in an amount of from 0.01 to 30 wt.-%, and/or
- 8Z-heptadecenal is contained in an amount of from 0.0001 to 30 wt.-%, preferably in an amount of from 0.001 to 30 wt.-%, more preferably in an amount of from 0.01 to 30 wt.-%, and/or
- 7Z-hexadecenal is contained in an amount of from 0.0001 to 30 wt.-%, preferably in an amount of from 0.001 to 30 wt.-%, more preferably in an amount of from 0.01 to 30 wt.-%, and/or
- 5Z,8Z,12Z-heptadecatrienal, if present, is contained in an amount of from 0.0001 to 20 wt.-%, preferably in an amount of from 0.001 to 20 wt.-%, more preferably in an amount of from 0.01 to 20 wt.-%, and/or
- 8Z-pentadecenal, if present, is contained in an amount of from 0.0001 to 20 wt.-%, preferably in an amount of from 0.001 to 20 wt.-%, more preferably in an amount of from 0.01 to 20 wt.-%, and/or
- 7Z-tetradecenal, if present, is contained in an amount of from 0.0001 to 20 wt.-%, preferably in an amount of from 0.001 to 20 wt.-%, more preferably in an amount of from 0.01 to 20 wt.-%,
in each case based on the total weight of the flavouring composition.

2. Flavouring composition according to claim 1, wherein one, more or all of the aldehydes mentioned in claim 1, if present, is / are obtained by enzymatic conversion from one or more natural sources selected from the group consisting of palmitoleic acid, arachidonic acid, alpha-linolenic acid, oleic acid, punicic acid, alpha-elaeosteraric acid, docosahexaenoic acid, eicosapentaenoic acid, petroselic acid, chaulmoogric acid, alpha-licaric acid, olive oil, canola oil, macadamia nut oil, sea buckthorn fruit oil, tung oil, fish oil, borage oil, chaulmoogr oil, parsley oil, oiticica oil, pomegranate seed oil, coconut oil, sunflower oil, grape seed oil, and fungal oils obtained from any of the genera selected from *Conidiobolus, Flammulina, Fomes, Ganoderma, Mortierella, Panellus, Pleurotus, Psathyrella, Stereum, Umbelopsis.*

3. Flavouring composition according to claim 1 or claim 2, wherein the flavouring composition further comprises one or more additional flavourings selected from the group consisting of
aliphatic flavouring substances, especially saturated aliphatic alcohols, such as ethanol, isopronanol, butanol, isoamyl alcohol, hexanol, 2-heptanol, (1/2/3)-octanol, decanol, unsaturated aliphatic alcohols, such as 2Z-pentenol, 3Z-hexenol, 2E-hexenol, 3E-hexenol, 2Z-octenol, 1-octen-3-ol, 6Z-nonenol, 2E,6Z-nonadienol, aliphatic aldehydes such as saturated aliphatic aldehydes (e.g. acetaldehyde, propionaldehyde, butyraldehyde, isobutyraldehyde, valeraldehyde, isolvaleraldehyde, hexanal, 3-methyl hexanal, octanal, nonanal, or mono- or multi-unsaturated aliphatic aldehydes, such as 2-methyl-but-2-enal, 2E-hexenal, 3Z-hexenal, 4Z-hexenal, 2E-octenal, 2E-nonenal, 6Z-nonenal, 2E,6Z-nonadienal, 2E-decenal, 2E-decadienal, aliphatic ketones, e.g. saturated ketones (such as 2-butanone, 2-pentanone, 2-heptanone, 2-octanone, 2-methylheptan-3-one, 2-decanone, 2-undecanone), unsaturated ketones (such as 1-penten-3-one, 1-hexen-3-one, 5-methyl-3-hexenone, 3-hepten-2-one, 1-octen-3-one, 2-octen-4-one, 3-octen-2-one, 3-none-2-one), aliphatic diketones and aliphatic diketoles, e.g. diacetyl, acetyl methyl carbinol, 2,3-hexanedione, aliphatic acids, such as straight-chain saturated acids, such as acetic acid, propionic acid, butyric acid, isobutyric acid, valeric acid, heptanoic acid, octanoic acid, decanoic acid, branched-chain saturated acids, such as 2-methyl heptanoic acid, 4-ethyl octanoic acid, and unsaturated acids, such as 2-butenoic acid, 2-pentenoic acid, 4-pentenoic acid, 2-methyl pentenoic acid, 3E-hexenoic acid, 3Z-hexenoic acid, 3-octenoic acid, linoleic acid, aliphatic esters, such as saturated esters, e.g. methyl acetate, methylbutyrate, methyl-2-methylbutyrate, methyl hexanoate, ethylacetate, ethylbutyrate, ethyl-2-methylbutyrate, ethyl-3-methylbutyrate, ethyl hexanoate, ethyl decanoate, isopropyl acetate, isobutyl acetate, isobutyl valerate, isoamyl acetate, isoamyl butyrate, isoamyl isovalerate, hexyl acetate, hexyl hexanoate, 3-octyl acetate and unsaturated esters, such as methyl 2-hexenoate, allyl hexanoate, 3Z-hexenyl acetate, 3Z-hexenyl butyrate, aliphatic thiols and dithiols (e.g. propane thiol, allyl mercaptan, 1-methoxy-3-methylbutane-3-thiol, dimethyl sulfide, dimethyl trisulfide, dipropyl sulfide, diallyl trisulfide, other aliphatic sulfur compounds, such as 2-mercapto-3-butanol, methyl thio propanal, 3-mercapto-pentanone, 4-methoxy-2-methyl-2-mercaptobutanone, methyl thiobutyrate, methyl thiobutyrate, methyl 3-methylthiopropionate, aliphatic nitrogen compounds, such as butyl amine, trimethyl amine, allyl isothiocyanate, isopropyl isothiocyanate, alicyclic compounds, such as alicyclic ketones, e.g. Z-jasmone, isophorone, 4-ketoisophorone, alicyclic esters such as methyl jasmonate, hedione, terpenes, e.g. terpene alcohols, such as linalool, citronellol, geraniol, nerol, alpha terpineol, menthol, 8-p-menthene-1,2-diol, fenchol, borneol, nerolidol, hotrienol, terpene aldehydes such as geranial, neral, citronellal, beta-sinensal, terpene ketones, such as alpha-ionone, (D)-carvone, (L)-carvone, nootkatone, piperitone, menthone, alpha damascone, beta damascene, damascenone, terpene esters, such as linalyl acetate, geranyl acetate, citronellyl actetate, carvyl acetate, fenchyl acetate, terpene sulphur compounds, 4-mentha-8-thiol-3-one, thiogeraniol, para-menth-1-ene-8-thiol, mercapto p-menthan-3-one, terpene hydrocarbons, such as (D)-limonene, (L)-limonene, alpha-pinene, beta-pinene, ocimene, alpha-terpinene, gamma-terpinene, beta-bisabolene, valencene, terpene oxides, such as 1,8-cineole, rose oxide, mint lactone, menthofuran, aromatic compounds, e.g. aromatic alcohols, such as benzyl alcohol, cinnamyl alcohol, 2-phenyl alcohol, aromatic aldehydes, such as benzaldehyde, cinnamic aldehyde, 5-methyl-2-phenylhexenal, salicylaldehyde, 4-hydroxy benzaldehyde, cyclamen aldehyde, 2-phenyl-2-butenal, aromatic acids, such as 2-phenyl acetic acid, cinnamic acid, aromatic esters such as benzyl acetate, benzyl salicylate, anisyl acetate, methyl phenyl acetate, methyl benzoate, methyl salicylate, methyl cinnamate, aromatic phenols, such as phenol, ortho-cresol, para-cresol, 2,3-dimethyl phenyl, 2-ethyl phenol, 2,3,5-trimethyl phenol, 4-vinyl phenol, guaiacol, 4-vinyl guaiacol, eugenol, thymol, carvacrol, aromatic sulphur compounds, such as thiophenol, diphenyl disulphide, aromatic nitrogen compounds, such as methyl anthranilate, methyl N-methyl anthranilate, aromatic ethers such as vanillin, ethylvanillin, anethol, aromatic oxides, such as heliotropine, diphenyl oxide, aromatic lactones, such as coumarin, dihydro coumarin, heterocyclic compounds, such as heterocyclic lactones, e.g. gamma butyrolactone, gamma-nonalactone, gamma decalactone, delta decalactone, jasmin lactone, delta dodecalactone, ambrettolide, heterocyclic furanes, such as furfuryl alcohol, furfural, 2-acetyl furan, theaspirane, 2-methyl tetrahydro furan-3-one, furfuryl mercaptane, 2-methyl 3-furanthiol, 2-methyl 3- tetrahydro furanthiol, difurfuryl sulfide, difurfuryl disulfide, heterocyclic pyrans, such as maltol, ethyl maltole, rose oxide, maltol isobutyrate, heterocyclic pyrroles such as indole, 2-acetyle pyrrole, pyrrolidine, heterocyclic pyrazines, such as 2-methyl pyrazine, 2,3-dimethyl pyrazine, 2-methyl 3-ethyl pyrazine, trimethyl pyrazine, 2-acetyl pyrazine, 2-methoxy 3-methyl pyrazine, 2-methoxy 3-ethyl pyrazine, 2-methoxy 3-isobutyl pyrazine, 2-ethyl 3-methylthio pyrazine, heterocyclic thiazoles, such as thiazole, 2-methyl thiazole, 4-methyl 5-vinyl thiazole, 2-isobutyl thiazole, 2-acetyl thiazole,
flavouring raw materials and flavouring preparations, e.g. essential oils, concretes, absolutes, extract or tinctures from raw materials such as citrus (e.g. lemon, lime, tangerine, bergamotte, grapefruit bitter orange, peel or essence oils), herbs (dill, parsley, cumin, rosemary, sage, clary sage, basil, tarragon, thyme, oregano, savoury, marjoram, all spice, mace, nutmeg, clove leave, clove bud, caraway, cinnamon leaves, cinnamon bark, cassia, cardamom, ginger, galangal, turmeric, coriander seed, coriander leaf, fenugreek, juniper berry, wormwood, laurel leaves, eucalyptus, white pepper, green pepper, white pepper, carrot seed, celery seed, lovage leaf, asa foetida, onion, leek, garlic, mustard, horse radish, capsicum, paprika, sea weed, valerian oil, fir needle, spearmint, peppermint, wintergreen, buchu leaf, black currant buds, fennel, star anise, jambu, long pepper, davana, orris, mimosa, cassie, violet leaves, ho leaf, jasmin, ylang ylang, cananga, osmanthus, angelica, clary sage, ambrette seed, hops, camomile, lavender, rose, geranium, citronella, palmarosa, litsea cubeba, lemon grass, tagetes, neroli, petitgrain, mate, cognac oil, coffee, cola nut, cocoa, green tea, black tea, white tea, gentian, tolu balm, benzoe resin, peru balm, cascarilla, galbanum, vetiver, labdanum, patchouli, sandalwood, cedarwood, guaiac wood, oak wood, massoi bark, vanilla pods, tonka bean, as well as enriched fractions thereof,
juice concentrates, such as orange juice, lemon juice, strawberry, cherry juice, or passion fruit juice concentrates, water phases and recoveries from raw materials such as citrus (lemon, lime, orange, tangerine, grapefruit), apple, pear, quince, mispel, red fruits (raspberry, strawberry, blueberry, blackberry, Amellanchia (June plum), rose hip, cranberry, plum, prune, red and black currant, yellow fruits (peach, apricot, nectarine, banana, etc.), tropical fruits (mango, passionfruit, pineapple, lychee, etc.), vegetables (e.g. cucumber, tomato) and spices (e.g. ginger),
acetophenone, allyl caproate, alpha-ionone, beta-ionone, anisaldehyde, anisyl acetate, anisyl formate, benzaldehyde, benzothiazole, benzyl acetate, benzyl alcohol, benzyl benzoate, beta-ionone, butyl butyrate, butyl caproate, butylidene phthalide, carvone, camphene, caryophyllene, cineol, cinnamyl acetate, citral, citronellol, citronellal, citronellyl acetate, cyclohexyl acetate, cymene, damascone, decalactone, dihydrocoumarin, dimethyl anthranilate, dodecalactone, ethoxyethyl acetate, ethylbutyric acid, ethyl butyrate, ethyl caprate, ethyl caproate, ethyl crotonate, ethylfuraneol, ethylguaiacol, ethylisobutyrate, ethylisovalerate, ethyl lactate, ethylmethyl butyrate, ethyl propionate, eucalyptol, eugenol, ethyl heptylate, 4-(p-hydroxyphenyl)-2-butanone, gamma-decalactone, geraniol, geranyl acetate, geranyl acetate, grapefruit aldehyde, methyl dihydrojasmonate (e.g. Hedion^{®}), heliotropin, 2-heptanone, 3-heptanone, 4-heptanone, 2E-heptenal, 4Z-heptenal, 2E-hexenal, 3Z-hexenol, 2E-hexenoic acid, 3E-hexenoic acid, 2Z-hexenyl acetate, 3Z-hexenyl acetate, 3Z-hexenyl caproate, 2E-hexenyl caproate, 3Z-hexenyl formate, 2Z-hexyl acetate, 3Z-hexyl acetate, 2E-hexyl acetate, 3Z-hexyl formate, para-hydroxybenzyl acetone, isoamyl alcohol, isoamyl isovalerate, isobutyl butyrate, isobutyraldehyde, isoeugenol methyl ether, isopropyl methylthiazole, lauric acid, levulinic acid, linalool, linalool oxide, linalyl acetate, menthol, menthofuran, methyl anthranilate, methylbutanol, methylbutyric acid, 2-methylbutyl acetate, methyl caproate, methyl cinnamate, 5-methylfurfural, 3,2,2-methylcyclopentenolone, 6,5,2-methylheptenone, methyl dihydrojasmonate, methyl jasmonate, 2-methylmethyl butyrate, 2-methyl-2-pentenol acid, methylthiobutyrate, 3,1-methylthiohexanol, 3-methylthiohexyl acetate, nerol, nerol acetate, 2E,4E-nonadienal, 2,4-nonadienol, 2,6-nonadienol, 2,4-nonadienol, nootkatone, delta-octalactone, gamma-octalactone, 2-octanol, 3-octanol, 1,3-octenol, 1-octyl acetate, 3-octyl acetate, palmitic acid, paraldehyde, phellandrene, pentanedione, phenylethyl acetate, phenylethyl alcohol, phenylethyl isovalerate, piperonal, propionaldehyde, propyl butyrate, pulegone, pulegol, sinensal, sulfurol, terpinene, terpineol, terpinolene, 8,3-s thiomenthanone, 4,4,2-thiomethylpentanone, thymol, delta-undecalactone, gamma-undecalactone, valencene, valeric acid, vanillin, acetoin, ethylvanillin, ethylvanillin isobutyrate (=3-ethoxy-4-isobutyryloxybenzaldehyde), 2,5-dimethyl-4-hydroxy-3 (2H)-furanone and derivatives thereof (here preferably homofuraneol (=2-ethyl-4-hydroxy-5-methyl-3(2H)-furanone), homofuronol (=2-ethyl-5-methyl-4-hydroxy-3(2H)-furanone and 5-ethyl-2-methyl-4-hydroxy-3(2H)-furanone), maltol and maltol derivatives (here preferably ethyl maltol), coumarin and coumarin derivatives, gamma-lactones (here preferably gamma-undecalactone, gamma-nonalactone, gamma-decalactone), delta-lactones (here preferably 4-methyldeltadecalactone, massoilactone, deltadecalactone, tuberolactone), methyl sorbate, divanillin, 4-hydroxy-2(or 5)-ethyl-5 (or 2)-methyl-3 (2H)furanone, 2-hydroxy-3-methyl-2-cyclopentenone, 3-hydroxy-4,5-dimethyl-2(5H)-furanone, acetic acid isoamyl ester, butyric acid ethyl ester, butyric acid-n-butyl ester, butyric acid isoamyl ester, 3-methyl-butyric acid ethyl ester, n-hexanoic acid ethyl ester, n-hexanoic acid allyl ester, n-hexanoic acid-n-butyl ester, n-octanoic acid ethyl ester, ethyl-3-methyl-3-phenylglycidate, ethyl-2-E-4-Z-decadienoate, 4-(p-hydroxyphenyl)-2-butanone, 1,1-dimethoxy-2,2,5-trimethyl-4-hexane, 2,6-dimethyl-5-hepten-1-al and phenylacetaldehyde, 2-methyl-3-(methylthio)furan, 2-methyl-3-furanthiol, bis(2-methyl-3-furyl)disulphide, furfurylmercaptan, methional, 2-acetyl-2-thiazoline, 3-mercapto-2-pentanone, 2,5-dimethyl-3-furanthiol, 2,4,5-trimethylthiazole, 2-acetylthiazole, 2,4-dimethyl-5-ethylthiazole, 2-acetyl-1-pyrroline, 2-methyl-3-ethylpyrazine, 2-ethyl-3,5-dimethylpyrazine, 2-ethyl-3,6-dimethylpyrazine, 2,3-diethyl-5-methylpyrazine, 3-isopropyl-2-methoxypyrazine, 3-isobutyl-2-methoxypyrazine, 2-acetylpyrazine, 2-pentylpyridine, (E,E)-2,4-decadienal, (E,E)-2,4-nonadienal, (E)-2-octenal, (E)-2-nonenal, 2-undecenal, 12-methyltridecanal, 1-penten-3-one, 4-hydroxy-2,5-dimethyl-3 (2H)-furanone, guaiacol, 3-hydroxy-4,5-dimethyl-2(5H)-furanone, 3-hydroxy-4-methyl-5-ethyl-2(5H)-furanone, cinnamaldehyde, cinnamon alcohol, methyl salicylate, isopulegol and (here not explicitly stated) stereoisomers, enantiomers, positional isomers, diastereomers, Z/E isomers or epimers of these substances.

4. Flavouring composition according to any one of the preceding claims, wherein the flavouring composition further comprises at least one compound or compound mixture conveying a sweet taste selected from the group consisting of
natural sweeteners, preferably naturally occurring sweet tasting substances, including plant extracts, such as sweet tasting carbohydrates (such as sucrose, trehalose, lactose, maltose, melizitose, melibiose, raffinose, palatinose, lactulose, (D)-fructose, (D)-glucose, (D)-galactose, (L)-rhamnose, (D)-sorbose, (D)-mannose, (D)-tagatose, (D)-arabinose, (L)-arabinose, (D)-ribose, (D)-glyceraldehyde, maltodextrin), sugar alcohols (such as erythritol, threitol, arabitol, ribitol, xylitol, sorbitol, mannitol, maltitol, isomaltit, dulcitol, lactitol), proteins (such as miraculin, pentaidin, monellin, thaumatin, curculin, brazzein, mabinlin), (D)-amino acids (such as (D)-phenylalanine, (D)-tryptophan) or extracts or fractions obtained from natural sources containing these amino acids and/or proteins and the physiologically acceptable salts of these amino acids and/or proteins, particularly the sodium, potassium, calcium or ammonium salts thereof; neohesperidindihydrochalkon, naringindihydrochalkon, steviolgylcoside, stevioside, steviolbiosid, rebaudioside, rebaudioside A, rebaudioside B, rebaudioside C, rebaudioside D, rebaudioside E, rebaudioside F, rebaudioside G, rebaudioside H, rebaudioside M, rebaudioside N, rebaudioside X, dulcoside, rubusoside, suavioside A, suavioside B, suavioside G, suavioside H, suavioside I, suavioside J, baiyunoside 1, baiyunoside 2, phlomisoside 1, phlomisoside 2, phlomisoside 3, phlomisoside 4, abrusoside A, abrusoside B, abrusoside C, abrusoside D, cyclocaryoside A, cyclocaryoside I, oslandin, polypodoside A, strogin 1, strogin, 2, strogin 4, selligueanin A, dihydroquercetin-3-acetate, perillartin, telosmosid A15, periandrin I-V, pterocaryoside, cyclocaryoside, mukurozioside, E-Anethol, E-cinnamaldehyd, bryoside, bryonoside, bryonodulcoside, carnosifloside, scandenoside, gypenoside, hematoxylin, cyanin, chlorogenic acid, albiziasaponin, telosmoside, gaudichaudiosid, mogrosides, such as mogroside V, hernandulcine, monatin, glycyrrhetinic acid and its derivatives, particularly glycyrrhizin, preferably glycyrrhizin ammonium salt; extracts or enriched fractions of such extracts such as extracts of *Thaumatococcus* or *Stevia* ssp., particularly *Stevia rebaudiana,* swingle extracts, particularly *Momordica* or *Siratia grosvenorii* or Luo-Han-Guo, extracts of *Glycerrhyzia* ssp., particularly *Glycerrhyzia glabra* or *Glycerrhyzia uralensis,* extracts of *Rubus* ssp., particularly *Rubus suavissimus* or *Rubus Chingii,* extracts of *Lippia dulcis,* extracts of *Mycetia balansae,* preferably comprising balansin A and/or balansin B;
synthetic sweeteners, preferably synthetic sweet tasting substances, preferably selected from the group consisting of magap, sodium cyclamate or other physiologically acceptable salts of cyclamic acid, acesulfam K; neohesperidindihydrochalcone, naringindihydrochalcone, saccharin, saccharin sodium salt, aspartam, superaspartam, neotam, alitam, advantam, perillartin, sucralose, lugduname, carrelame, sucrononate or sucrooctate or mixtures thereof.

5. Preparation comprising the flavouring composition according to any one of claims 1 to 4, wherein the flavouring composition is contained in an amount of from 0.001 to 10 ppm, preferably in an amount of from 0.01 to 5 ppm, especially preferably in an amount of from 0.015 to 0.5 ppm, based on the total weight of the preparation.

6. Preparation according to claim 5, wherein the preparation is selected from the group
consisting of preparations suitable for consumption, preferably a foodstuff, preparations for pleasure, beverages, semi-finished products and oral hygiene products.

7. Preparation according to claim 5 or 6, wherein the preparation additionally comprises one or more flavouring selected from the group consisting of
aliphatic flavouring substances, especially saturated aliphatic alcohols, such as ethanol, isopronanol, butanol, isoamyl alcohol, hexanol, 2-heptanol, (1/2/3)-octanol, decanol, unsaturated aliphatic alcohols, such as 2Z-pentenol, 3Z-hexenol, 2E-hexenol, 3E-hexenol, 2Z-octenol, 1-octen-3-ol, 6Z-nonenol, 2E,6Z-nonadienol, aliphatic aldehydes such as saturated aliphatic aldehydes (e.g. acetaldehyde, propionaldehyde, butyraldehyde, isobutyraldehyde, valeraldehyde, isolvaleraldehyde, hexanal, 3-methyl hexanal, octanal, nonanal, or mono- or multi-unsaturated aliphatic aldehydes, such as 2-methyl-but-2-enal, 2E-hexenal, 3Z-hexenal, 4Z-hexenal, 2E-octenal, 2E-nonenal, 6Z-nonenal, 2E,6Z-nonadienal, 2E-decenal, 2E-decadienal, aliphatic ketones, e.g. saturated ketones (such as 2-butanone, 2-pentanone, 2-heptanone, 2-octanone, 2-methylheptan-3-one, 2-decanone, 2-undecanone), unsaturated ketones (such as 1-penten-3-one, 1-hexen-3-one, 5-methyl-3-hexenone, 3-hepten-2-one, 1-octen-3-one, 2-octen-4-one, 3-octen-2-one, 3-none-2-one), aliphatic diketones and aliphatic diketoles, e.g. diacetyl, acetyl methyl carbinol, 2,3-hexanedione, aliphatic acids, such as straight-chain saturated acids, such as acetic acid, propionic acid, butyric acid, isobutyric acid, valeric acid, heptanoic acid, octanoic acid, decanoic acid, branched-chain saturated acids, such as 2-methyl heptanoic acid, 4-ethyl octanoic acid, and unsaturated acids, such as 2-butenoic acid, 2-pentenoic acid, 4-pentenoic acid, 2-methyl pentenoic acid, 3E-hexenoic acid, 3Z-hexenoic acid, 3-octenoic acid, linoleic acid, aliphatic esters, such as saturated esters, e.g. methyl acetate, methylbutyrate, methyl-2-methylbutyrate, methyl hexanoate, ethylacetate, ethylbutyrate, ethyl-2-methylbutyrate, ethyl-3-methylbutyrate, ethyl hexanoate, ethyl decanoate, isopropyl acetate, isobutyl acetate, isobutyl valerate, isoamyl acetate, isoamyl butyrate, isoamyl isovalerate, hexyl acetate, hexyl hexanoate, 3-octyl acetate and unsaturated esters, such as methyl 2-hexenoate, allyl hexanoate, 3Z-hexenyl acetate, 3Z-hexenyl butyrate, aliphatic thiols and dithiols (e.g. propane thiol, allyl mercaptan, 1-methoxy-3-methylbutane-3-thiol, dimethyl sulfide, dimethyl trisulfide, dipropyl sulfide, diallyl trisulfide, other aliphatic sulfur compounds, such as 2-mercapto-3-butanol, methyl thio propanal, 3-mercapto-pentanone, 4-methoxy-2-methyl-2-mercaptobutanone, methyl thiobutyrate, methyl thiobutyrate, methyl 3-methylthiopropionate, aliphatic nitrogen compounds, such as butyl amine, trimethyl amine, allyl isothiocyanate, isopropyl isothiocyanate, alicyclic compounds, such as alicyclic ketones, e.g. Z-jasmone, isophorone, 4-ketoisophorone, alicyclic esters such as methyl jasmonate, hedione, terpenes, e.g. terpene alcohols, such as linalool, citronellol, geraniol, nerol, alpha terpineol, menthol, 8-p-menthene-1,2-diol, fenchol, borneol, nerolidol, hotrienol, terpene aldehydes such as geranial, neral, citronellal, beta-sinensal, terpene ketones, such as alpha-ionone, (D)-carvone, (L)-carvone, nootkatone, piperitone, menthone, alpha damascone, beta damascene, damascenone, terpene esters, such as linalyl acetate, geranyl acetate, citronellyl actetate, carvyl acetate, fenchyl acetate, terpene sulphur compounds, 4-mentha-8-thiol-3-one, thiogeraniol, para-menth-1-ene-8-thiol, mercapto p-menthan-3-one, terpene hydrocarbons, such as (D)-limonene, (L)-limonene, alpha-pinene, beta-pinene, ocimene, alpha-terpinene, gamma-terpinene, beta-bisabolene, valencene, terpene oxides, such as 1,8-cineole, rose oxide, mint lactone, menthofuran, aromatic compounds, e.g. aromatic alcohols, such as benzyl alcohol, cinnamyl alcohol, 2-phenyl alcohol, aromatic aldehydes, such as benzaldehyde, cinnamic aldehyde, 5-methyl-2-phenylhexenal, salicylaldehyde, 4-hydroxy benzaldehyde, cyclamen aldehyde, 2-phenyl-2-butenal, aromatic acids, such as 2-phenyl acetic acid, cinnamic acid, aromatic esters such as benzyl acetate, benzyl salicylate, anisyl acetate, methyl phenyl acetate, methyl benzoate, methyl salicylate, methyl cinnamate, aromatic phenols, such as phenol, ortho-cresol, para-cresol, 2,3-dimethyl phenyl, 2-ethyl phenol, 2,3,5-trimethyl phenol, 4-vinyl phenol, guaiacol, 4-vinyl guaiacol, eugenol, thymol, carvacrol, aromatic sulphur compounds, such as thiophenol, diphenyl disulphide, aromatic nitrogen compounds, such as methyl anthranilate, methyl N-methyl anthranilate, aromatic ethers such as vanillin, ethylvanillin, anethol, aromatic oxides, such as heliotropine, diphenyl oxide, aromatic lactones, such as coumarin, dihydro coumarin, heterocyclic compounds, such as heterocyclic lactones, e.g. gamma butyrolactone, gamma-nonalactone, gamma decalactone, delta decalactone, jasmin lactone, delta dodecalactone, ambrettolide, heterocyclic furanes, such as furfuryl alcohol, furfural, 2-acetyl furan, theaspirane, 2-methyl tetrahydro furan-3-one, furfuryl mercaptane, 2-methyl 3-furanthiol, 2-methyl 3- tetrahydro furanthiol, difurfuryl sulfide, difurfuryl disulfide, heterocyclic pyrans, such as maltol, ethyl maltole, rose oxide, maltol isobutyrate, heterocyclic pyrroles such as indole, 2-acetyle pyrrole, pyrrolidine, heterocyclic pyrazines, such as 2-methyl pyrazine, 2,3-dimethyl pyrazine, 2-methyl 3-ethyl pyrazine, trimethyl pyrazine, 2-acetyl pyrazine, 2-methoxy 3-methyl pyrazine, 2-methoxy 3-ethyl pyrazine, 2-methoxy 3-isobutyl pyrazine, 2-ethyl 3-methylthio pyrazine, heterocyclic thiazoles, such as thiazole, 2-methyl thiazole, 4-methyl 5-vinyl thiazole, 2-isobutyl thiazole, 2-acetyl thiazole,
flavouring raw materials and flavouring preparations, e.g. essential oils, concretes, absolutes, extract or tinctures from raw materials such as citrus (e.g. lemon, lime, tangerine, bergamotte, grapefruit bitter orange, peel or essence oils), herbs (dill, parsley, cumin, rosemary, sage, clary sage, basil, tarragon, thyme, oregano, savoury, marjoram, all spice, mace, nutmeg, clove leave, clove bud, caraway, cinnamon leaves, cinnamon bark, cassia, cardamom, ginger, galangal, turmeric, coriander seed, coriander leaf, fenugreek, juniper berry, wormwood, laurel leaves, eucalyptus, white pepper, green pepper, white pepper, carrot seed, celery seed, lovage leaf, asa foetida, onion, leek, garlic, mustard, horse radish, capsicum, paprika, sea weed, valerian oil, fir needle, spearmint, peppermint, wintergreen, buchu leaf, black currant buds, fennel, star anise, jambu, long pepper, davana, orris, mimosa, cassie, violet leaves, ho leaf, jasmin, ylang ylang, cananga, osmanthus, angelica, clary sage, ambrette seed, hops, camomile, lavender, rose, geranium, citronella, palmarosa, litsea cubeba, lemon grass, tagetes, neroli, petitgrain, mate, cognac oil, coffee, cola nut, cocoa, green tea, black tea, white tea, gentian, tolu balm, benzoe resin, peru balm, cascarilla, galbanum, vetiver, labdanum, patchouli, sandalwood, cedarwood, guaiac wood, oak wood, massoi bark, vanilla pods, tonka bean, as well as enriched fractions thereof,
juice concentrates, such as orange juice, lemon juice, strawberry, cherry juice, or passion fruit juice concentrates, water phases and recoveries from raw materials such as citrus (lemon, lime, orange, tangerine, grapefruit), apple, pear, quince, mispel, red fruits (raspberry, strawberry, blueberry, blackberry, Amellanchia (June plum), rose hip, cranberry, plum, prune, red and black currant, yellow fruits (peach, apricot, nectarine, banana, etc.), tropical fruits (mango, passionfruit, pineapple, lychee, etc.), vegetables (e.g. cucumber, tomato) and spices (e.g. ginger),
acetophenone, allyl caproate, alpha-ionone, beta-ionone, anisaldehyde, anisyl acetate, anisyl formate, benzaldehyde, benzothiazole, benzyl acetate, benzyl alcohol, benzyl benzoate, beta-ionone, butyl butyrate, butyl caproate, butylidene phthalide, carvone, camphene, caryophyllene, cineol, cinnamyl acetate, citral, citronellol, citronellal, citronellyl acetate, cyclohexyl acetate, cymene, damascone, decalactone, dihydrocoumarin, dimethyl anthranilate, dodecalactone, ethoxyethyl acetate, ethylbutyric acid, ethyl butyrate, ethyl caprate, ethyl caproate, ethyl crotonate, ethylfuraneol, ethylguaiacol, ethylisobutyrate, ethylisovalerate, ethyl lactate, ethylmethyl butyrate, ethyl propionate, eucalyptol, eugenol, ethyl heptylate, 4-(p-hydroxyphenyl)-2-butanone, gamma-decalactone, geraniol, geranyl acetate, geranyl acetate, grapefruit aldehyde, methyl dihydrojasmonate (e.g. Hedion^{®}), heliotropin, 2-heptanone, 3-heptanone, 4-heptanone, 2E-heptenal, 4Z-heptenal, 2E-hexenal, 3Z-hexenol, 2E-hexenoic acid, 3E-hexenoic acid, 2Z-hexenyl acetate, 3Z-hexenyl acetate, 3Z-hexenyl caproate, 2E-hexenyl caproate, 3Z-hexenyl formate, 2Z-hexyl acetate, 3Z-hexyl acetate, 2E-hexyl acetate, 3Z-hexyl formate, para-hydroxybenzyl acetone, isoamyl alcohol, isoamyl isovalerate, isobutyl butyrate, isobutyraldehyde, isoeugenol methyl ether, isopropyl methylthiazole, lauric acid, levulinic acid, linalool, linalool oxide, linalyl acetate, menthol, menthofuran, methyl anthranilate, methylbutanol, methylbutyric acid, 2-methylbutyl acetate, methyl caproate, methyl cinnamate, 5-methylfurfural, 3,2,2-methylcyclopentenolone, 6,5,2-methylheptenone, methyl dihydrojasmonate, methyl jasmonate, 2-methylmethyl butyrate, 2-methyl-2-pentenol acid, methylthiobutyrate, 3,1-methylthiohexanol, 3-methylthiohexyl acetate, nerol, nerol acetate, 2E,4E-nonadienal, 2,4-nonadienol, 2,6-nonadienol, 2,4-nonadienol, nootkatone, delta-octalactone, gamma-octalactone, 2-octanol, 3-octanol, 1,3-octenol, 1-octyl acetate, 3-octyl acetate, palmitic acid, paraldehyde, phellandrene, pentanedione, phenylethyl acetate, phenylethyl alcohol, phenylethyl isovalerate, piperonal, propionaldehyde, propyl butyrate, pulegone, pulegol, sinensal, sulfurol, terpinene, terpineol, terpinolene, 8,3-s thiomenthanone, 4,4,2-thiomethylpentanone, thymol, delta-undecalactone, gamma-undecalactone, valencene, valeric acid, vanillin, acetoin, ethylvanillin, ethylvanillin isobutyrate (=3-ethoxy-4-isobutyryloxybenzaldehyde), 2,5-dimethyl-4-hydroxy-3 (2H)-furanone and derivatives thereof (here preferably homofuraneol (=2-ethyl-4-hydroxy-5-methyl-3(2H)-furanone), homofuronol (=2-ethyl-5-methyl-4-hydroxy-3(2H)-furanone and 5-ethyl-2-methyl-4-hydroxy-3(2H)-furanone), maltol and maltol derivatives (here preferably ethyl maltol), coumarin and coumarin derivatives, gamma-lactones (here preferably gamma-undecalactone, gamma-nonalactone, gamma-decalactone), delta-lactones (here preferably 4-methyldeltadecalactone, massoilactone, deltadecalactone, tuberolactone), methyl sorbate, divanillin, 4-hydroxy-2(or 5)-ethyl-5 (or 2)-methyl-3 (2H)furanone, 2-hydroxy-3-methyl-2-cyclopentenone, 3-hydroxy-4,5-dimethyl-2(5H)-furanone, acetic acid isoamyl ester, butyric acid ethyl ester, butyric acid-n-butyl ester, butyric acid isoamyl ester, 3-methyl-butyric acid ethyl ester, n-hexanoic acid ethyl ester, n-hexanoic acid allyl ester, n-hexanoic acid-n-butyl ester, n-octanoic acid ethyl ester, ethyl-3-methyl-3-phenylglycidate, ethyl-2-E-4-Z-decadienoate, 4-(p-hydroxyphenyl)-2-butanone, 1,1-dimethoxy-2,2,5-trimethyl-4-hexane, 2,6-dimethyl-5-hepten-1-al and phenylacetaldehyde, 2-methyl-3-(methylthio)furan, 2-methyl-3-furanthiol, bis(2-methyl-3-furyl)disulphide, furfurylmercaptan, methional, 2-acetyl-2-thiazoline, 3-mercapto-2-pentanone, 2,5-dimethyl-3-furanthiol, 2,4,5-trimethylthiazole, 2-acetylthiazole, 2,4-dimethyl-5-ethylthiazole, 2-acetyl-1-pyrroline, 2-methyl-3-ethylpyrazine, 2-ethyl-3,5-dimethylpyrazine, 2-ethyl-3,6-dimethylpyrazine, 2,3-diethyl-5-methylpyrazine, 3-isopropyl-2-methoxypyrazine, 3-isobutyl-2-methoxypyrazine, 2-acetylpyrazine, 2-pentylpyridine, (E,E)-2,4-decadienal, (E,E)-2,4-nonadienal, (E)-2-octenal, (E)-2-nonenal, 2-undecenal, 12-methyltridecanal, 1-penten-3-one, 4-hydroxy-2,5-dimethyl-3 (2H)-furanone, guaiacol, 3-hydroxy-4,5-dimethyl-2(5H)-furanone, 3-hydroxy-4-methyl-5-ethyl-2(5H)-furanone, cinnamaldehyde, cinnamon alcohol, methyl salicylate, isopulegol and (here not explicitly stated) stereoisomers, enantiomers, positional isomers, diastereomers, Z/E isomers or epimers of these substances.

8. Preparation according to any one of claims 5 to 7, wherein the preparation additionally comprises at least one compound or compound mixture conveying a sweet taste selected from the group consisting of
natural sweeteners, preferably naturally occurring sweet tasting substances, including plant extracts, such as sweet tasting carbohydrates (such as sucrose, trehalose, lactose, maltose, melizitose, melibiose, raffinose, palatinose, lactulose, (D)-fructose, (D)-glucose, (D)-galactose, (L)-rhamnose, (D)-sor-bose, (D)-mannose, (D)-tagatose, (D)-arabinose, (L)-arabinose, (D)-ribose, (D)-glyceraldehyde, maltodextrin), sugar alcohols (such as erythritol, threitol, arabitol, ribitol, xylitol, sorbitol, mannitol, maltitol, isomaltit, dulcitol, lactitol), proteins (such as miraculin, pentaidin, monellin, thaumatin, curculin, brazzein, mabinlin), (D)-amino acids (such as (D)-phenylalanine, (D)-tryptophan) or extracts or fractions obtained from natural sources containing these amino acids and/or proteins and the physiologically acceptable salts of these amino acids and/or proteins, particularly the sodium, potassium, calcium or ammonium salts thereof; neohesperidindihydrochalkon, naringindihydrochalkon, steviol-gylcoside, stevioside, steviolbiosid, rebaudioside, rebaudioside A, rebaudioside B, rebaudioside C, rebaudioside D, rebaudioside E, rebaudioside F, rebaudioside G, rebaudioside H, rebaudioside M, rebaudioside N, rebaudioside X, dulcoside, rubusoside, suavioside A, suavioside B, suavioside G, suavioside H, suavioside I, suavioside J, baiyunoside 1, baiyunoside 2, phlomisoside 1, phlomisoside 2, phlomisoside 3, phlomisoside 4, abrusoside A, abrusoside B, abrusoside C, abrusoside D, cyclocaryoside A, cyclocaryoside I, oslandin, polypodoside A, strogin 1, strogin, 2, strogin 4, selligueanin A, dihydroquerce-tin-3-acetate, perillartin, telosmosid A15, periandrin I-V, pterocaryoside, cyclocaryoside, mukuroZioside, *E*-Anethol, *E*-cinnamaldehyd, bryoside, bryonoside, bryonodulcoside, carnosifloside, scandenoside, gypenoside, hematoxy-lin, cyanin, chlorogenic acid, albiziasaponin, telosmoside, gaudichaudiosid, mogrosides, such as mogroside V, hernandulcine, monatin, glycyrrhetinic acid and its derivatives, particularly glycyrrhizin, preferably glycyrrhizin ammonium salt; extracts or enriched fractions of such extracts such as extracts of *Thaumatococcus* or *Stevia* ssp., particularly *Stevia rebaudiana,* swingle extracts, particularly *Momordica* or *Siratia grosvenorii* or Luo-Han-Guo, extracts of *Glycerrhyzia* ssp., particularly *Glycerrhyzia glabra* or *Glycerrhyzia uralensis,* extracts of *Rubus* ssp., particularly *Rubus suavissimus* or *Rubus Chingii,* extracts of *Lippia dulcis,* extracts of *Mycetia balansae,* preferably comprising balansin A and/or balansin B;
synthetic sweeteners, preferably synthetic sweet tasting substances, preferably selected from the group consisting of magap, sodium cyclamate or other physiologically acceptable salts of cyclamic acid, acesulfam K; neohesperi-dindihydrochalcone, naringindihydrochalcone, saccharin, saccharin sodium salt, aspartam, superaspartam, neotam, alitam, advantam, perillartin, sucralose, lugduname, carrelame, sucrononate or sucrooctate or mixtures thereof.

9. Use of a flavouring composition according to claims 1 to 4 for improving a least one taste characteristic in / of a preparation.

10. Use according to claim 9, wherein the at least one taste characteristic(s) is / are selected from the group consisting of richness, body, authenticity, impact, mouthfeel, sweetness and juiciness.

11. Use according to claim 9 or 10, wherein the flavouring composition is used in an amount of from 0.001 to 10 ppm, preferably in an amount of from 0.01 to 5 ppm, especially preferably in an amount of from 0.015 to 0.5 ppm, based on the total weight of the preparation.

12. Method for improving at least one taste characteristic in / of a preparation, comprising or consisting of the steps
a) providing at least one preparation selected from the group consisting of preparations suitable for consumption, preferably a foodstuff, preparations for pleasure, beverages, semi-finished products and oral hygiene products;
b) providing a flavouring composition according to any one of claims 1 to 4;
c) contacting and mixing the preparation provided in step a) and the flavouring composition provided in step b);
d) obtaining a preparation as defined in any one of the claims 5 to 8.

13. Method according to claim 12, wherein the flavouring composition provided in step b) is provided in an amount of from 0.001 to 10 ppm, preferably in an amount of from 0.01 to 5 ppm, especially preferably in an amount of from 0.015 to 0.5 ppm, based on the total weight of the preparation.

## Patentansprüche

1. Aromazusammensetzung, umfassend oder bestehend aus 8Z,11Z-Heptadecadienal, 8Z-Heptadecenal und 7Z-Hexadecenal und gegebenenfalls einer oder mehreren Verbindungen aus der Gruppe bestehend aus 5Z, 8Z, 12Z-Heptadecatrienal, 8Z-Pentadecenal und 7Z-Tetradecenal, wobei
- 8Z,11Z-Heptadecadienal in einer Menge von 0,0001 bis 30 Gew.-%, vorzugsweise in einer Menge von 0,001 bis 30 Gew.-%, weiterhin bevorzugt in einer Menge von 0,01 bis 30 Gew.-% enthalten ist, und/oder
- 8Z-Heptadecenal in einer Menge von 0,0001 bis 30 Gew.-%, vorzugsweise in einer Menge von 0,001 bis 30 Gew.-%, weiterhin bevorzugt in einer Menge von 0,01 bis 30 Gew.-% enthalten ist, und/oder
- 7Z-Hexadecenal in einer Menge von 0,0001 bis 30 Gew.-%, vorzugsweise in einer Menge von 0,001 bis 30 Gew.-%, weiterhin bevorzugt in einer Menge von 0,01 bis 30 Gew.-% enthalten ist, und/oder
- 5Z, 8Z, 12Z-Heptadecatrienal, falls vorhanden, in einer Menge von 0,0001 bis 20 Gew.-%, vorzugsweise in einer Menge von 0,001 bis 20 Gew.-%, weiterhin bevorzugt in einer Menge von 0,01 bis 20 Gew.-%, enthalten ist und/oder
- 8Z-Pentadecenal, falls vorhanden, in einer Menge von 0,0001 bis 20 Gew.-%, vorzugsweise in einer Menge von 0,001 bis 20 Gew.-%, weiterhin bevorzugt in einer Menge von 0,01 bis 20 Gew.-% enthalten ist, und/oder
- 7Z-Tetradecenal, falls vorhanden, in einer Menge von 0,0001 bis 20 Gew.-%, vorzugsweise in einer Menge von 0,001 bis 20 Gew.-%, weiterhin bevorzugt in einer Menge von 0,01 bis 20 Gew.-% enthalten ist,
jeweils bezogen auf das Gesamtgewicht der Aromazusammensetzung.

2. Aromazusammensetzung nach Anspruch 1, wobei einer, mehrere oder alle der in Anspruch 1 genannten Aldehyde, falls vorhanden, durch enzymatische Umwandlung aus einer oder mehreren natürlichen Quellen, ausgewählt aus der Gruppe bestehend aus Palmitoleinsäure, Arachidonsäure, alpha-Linolensäure,
Ölsäure, Punicinsäure, alpha-Elaeosteringensäure, Docosahexaensäure, Eicosapentaensäure, Petroselinsäure, Chaulmoogrinsäure, Alpha-Likarsäure, Olivenöl, Rapsöl, Macadamianussöl, Sanddornfruchtöl, Tungöl, Fischöl, Borretschöl, Chaulmoogröl, Petersilienöl, Oiticicaöl, Granatapfelsamenöl, Kokosnussöl, Sonnenblumenöl, Traubenkernöl und Pilzöle, die aus einer der Gattungen ausgewählt aus Conidiobolus, Flammulina, Fomes, Ganoderma, Mortierella, Panellus, Pleurotus, Psathyrella, Stereum und Umbelopsis gewonnen werden, erhalten ist/sind.

3. Aromazusammensetzung nach Anspruch 1 oder Anspruch 2, wobei die Aromazusammensetzung außerdem einen oder mehrere zusätzliche Aromastoffe enthält, die ausgewählt sind aus der Gruppe bestehend aus
aliphatische Aromastoffe, insbesondere gesättigte aliphatische Alkohole, wie Ethanol, Isopronanol, Butanol, Isoamylalkohol, Hexanol, 2-Heptanol, (1/2/3)-Octanol, Decanol, ungesättigte aliphatische Alkohole, wie 2Z-Pentenol, 3Z-Hexenol, 2E-Hexenol, 3E-Hexenol, 2Z-Octenol, 1-Octen-3-ol, 6Z-Nonenol, 2E,6Z-Nonadienol, aliphatische Aldehyde wie gesättigte aliphatische Aldehyde (z.B. Acetaldehyd, Propionaldehyd, Butyraldehyd, Isobutyraldehyd, Valeraldehyd, Isolvaleraldehyd, Hexanal, 3-Methylhexanal, Octanal, Nonanal, oder einfach oder mehrfach ungesättigte aliphatische Aldehyde, wie 2-Methyl-but-2-enal, 2E-Hexenal, 3Z-Hexenal, 4Z-Hexenal, 2E-Octenal, 2E-Nonenal, 6Z-Nonenal, 2E,6Z-Nonadienal, 2E-Decenal, 2E-Decadienal, aliphatische Ketone, z. B. gesättigte Ketone (wie 2-Butanon, 2-Pentanon, 2-Heptanon, 2-Octanon, 2-Methylheptan-3-on, 2-Decanon, 2-Undecanon), ungesättigte Ketone (wie 1-Penten-3-on, 1-Hexen-3-on, 5-Methyl-3-hexenon, 3-Hepten-2-on, 1-Octen-3-on, 2-Octen-4-on, 3-Octen-2-on, 3-Non-2-on), aliphatische Diketone und aliphatische Diketole, z. B. Diacetyl, Acetylmethylcarbinol, 2,3-Hexandion, aliphatische Säuren, wie geradkettige gesättigte Säuren, wie Essigsäure, Propionsäure, Buttersäure, Isobuttersäure, Valeriansäure, Heptansäure, Octansäure, Decansäure, verzweigtkettige gesättigte Säuren, wie 2-Methylheptansäure, 4-Ethyloctansäure, und ungesättigte Säuren, wie 2-Butensäure, 2-Pentensäure, 4-Pentensäure, 2-Methylpentensäure, 3E-Hexensäure, 3Z-Hexensäure, 3-Octensäure, Linolsäure, aliphatische Ester, wie gesättigte Ester, z. B. Methylacetat, Methylbutyrat, Methyl-2-methylbutyrat, Methylhexanoat, Ethylacetat, Ethylbutyrat, Ethyl-2-methylbutyrat, Ethyl-3-methylbutyrat, Ethylhexanoat, Ethyldecanoat, Isopropylacetat, Isobutylacetat, Isobutylvalerat, Isoamylacetat, Isoamylbutyrat, Isoamylisovalerat, Hexylacetat, Hexylhexanoat, 3-Octylacetat und ungesättigte Ester, wie 2-Hexensäuremethylester, Allylhexanoat, 3Z-Hexenylacetat, 3Z-Hexenylbutyrat, aliphatische Thiole und Dithiole (z.B. Propanthiol, Allylmercaptan, 1-Methoxy-3-methylbutan-3-thiol, Dimethylsulfid, Dimethyltrisulfid, Dipropylsulfid, Diallyltrisulfid, andere aliphatische Schwefelverbindungen wie 2-Mercapto-3-butanol, Methylthiopropanal, 3-Mercaptopentanon, 4-Methoxy-2-methyl-2-mercaptobutanon, Methylthiobutyrat, Methylthiobutyrat, Methyl-3-methylthiopropionat, aliphatische Stickstoffverbindungen, wie Butylamin, Trimethylamin, Allylisothiocyanat, Isopropylisothiocyanat, alicyclische Verbindungen, wie alicyclische Ketone, z. B. Z-Jasmone, Isophorone, 4-Ketoisophorone, alizyklische Ester wie Methyljasmonat, Hedione, Terpene, z. B. Terpenalkohole wie Linalool, Citronellol, Geraniol, Nerol, Alpha-Terpineol, Menthol, 8-p-Menthen-1,2-diol, Fenchol, Borneol, Nerolidol, Hotrienol, Terpenaldehyde wie Geranial, Neral, Citronellal, beta-Sinensal, Terpenketone, wie alpha-Ionon, (D)-Carvon, (L)-Carvon, Nootkaton, Piperiton, Menthon, alpha-Damascon, beta-Damascen, Damascenon, Terpenester, wie Linalylacetat, Geranylacetat, Citronellylacetat, Carvylacetat, Fenchylacetat, Terpenschwefelverbindungen, 4-Mentha-8-thiol-3-on, Thiogeraniol, para-Menth-1-en-8-thiol, Mercapto-p-menthan-3-on, Terpenkohlenwasserstoffe, wie (D)-Limonene, (L)-Limonen, alpha-Pinen, beta-Pinen, Ocimen, alpha-Terpinen, gamma-Terpinen, beta-Bisabolen, Valencen, Terpenoxide, wie 1,8-Cineol, Rosenoxid, Minzlacton, Menthofuran, aromatische Verbindungen, z.B. aromatische Alkohole, wie Benzylalkohol, Zimtalkohol, 2-Phenylalkohol, aromatische Aldehyde, wie Benzaldehyd, Zimtaldehyd, 5-Methyl-2-phenylhexenal, Salicylaldehyd, 4-Hydroxybenzaldehyd, Cyclamenaldehyd, 2-Phenyl-2-butenal, aromatische Säuren, wie 2-Phenylessigsäure, Zimtsäure, aromatische Ester wie Benzylacetat, Benzylsalicylat, Anisylacetat, Methylphenylacetat, Methylbenzoat, Methylsalicylat, Methylzimtsäure, aromatische Phenole wie Phenol, ortho-Kresol, para-Kresol, 2,3-Dimethylphenyl, 2-Ethylphenol, 2,3,5-Trimethylphenol, 4-Vinylphenol, Guajakol, 4-Vinylguajakol, Eugenol, Thymol, Carvacrol, aromatische Schwefelverbindungen, wie Thiophenol, Diphenyldisulfid, aromatische Stickstoffverbindungen, wie Methylanthranilat, Methyl-N-methylanthranilat, aromatische Ether wie Vanillin, Ethylvanillin, Anethol, aromatische Oxide wie Heliotropin, Diphenyloxid, aromatische Lactone wie Cumarin, Dihydrocumarin, heterocyclische Verbindungen wie heterocyclische Lactone, z. B. Gamma-Butyrolacton, Gamma-Nonalacton, Gamma-Decalacton, Delta-Decalacton, Jasminlacton, Delta-Dodecalacton, Ambrettolid, heterocyclische Furane, wie Furfurylalkohol, Furfural, 2-Acetylfuran, Theaspiran, 2-Methyltetrahydrofuran-3-on, Furfurylmercaptan, 2-Methyl-3-furanthiol, 2-Methyl-3-tetrahydrofuranthiol, Difurfurylsulfid, Difurfuryldisulfid, heterocyclische Pyrane, wie Maltol, Ethylmaltol, Rosenoxid, Maltolisobutyrat, heterocyclische Pyrrole wie Indol, 2-Acetylpyrrol, Pyrrolidin, heterocyclische Pyrazine wie 2-Methylpyrazin, 2,3-Dimethylpyrazin, 2-Methyl-3-ethylpyrazin, Trimethylpyrazin, 2-Acetylpyrazin, 2-Methoxy-3-methylpyrazin, 2-Methoxy-3-ethylpyrazin, 2-Methoxy-3-isobutylpyrazin, 2-Ethyl-3-methylthio-pyrazin, heterocyclische Thiazole, wie Thiazol, 2-Methylthiazol, 4-Methyl-5-vinylthiazol, 2-Isobutylthiazol, 2-Acetylthiazol,
Aromarohstoffe und Aromazubereitungen, z. B. ätherische Öle, Konkrete, Absolute, Extrakte oder Tinkturen aus Rohstoffen wie Zitrusfrüchten (z. B. Zitrone, Limette, Mandarine, Bergamotte, Grapefruit, Bitterorange, Schalen-oder Essenzenöle), Kräutern (Dill, Petersilie, Kreuzkümmel, Rosmarin, Salbei, Muskatellersalbei, Basilikum, Estragon, Thymian, Oregano, Bohnenkraut, Majoran, Allspice, Muskatblüte, Muskatnuss, Nelkenblatt, Nelkenknospe, Kümmel, Zimtblätter, Zimtrinde, Kassia, Kardamom, Ingwer, Galgant, Kurkuma, Koriandersamen, Korianderblätter, Bockshornklee, Wacholderbeeren, Wermut, Lorbeerblätter, Eukalyptus, weißer Pfeffer, grüner Pfeffer, weißer Pfeffer, Karottensamen, Selleriesamen, Liebstöckelblätter, Asa foetida, Zwiebel, Lauch, Knoblauch, Senf, Meerrettich, Paprika, Seegras, Baldrianöl, Tannennadel, Krauseminze, Pfefferminze, Wintergrün, Buchu-Blatt, schwarze Johannisbeerknospen, Fenchel, Sternanis, Jambu, langer Pfeffer, Davana, Orris, Mimose, Cassie, Veilchenblätter, Ho-Blatt, Jasmin, Ylang-Ylang, Cananga, Osmanthus, Engelwurz, Muskatellersalbei, Ambrettesamen, Hopfen, Kamille, Lavendel, Rose, Geranie, Citronella, Palmarosa, Litsea Cubeba, Zitronengras, Tagetes, Neroli, Petitgrain, Mate, Cognacöl, Kaffee, Kolanuss, Kakao, Grüner Tee, Schwarzer Tee, Weißer Tee, Enzian, Tolubalsam, Benzoe-Harz, Perubalsam, Cascarilla, Galbanum, Vetiver, Labdanum, Patchouli, Sandelholz, Zedernholz, Guajakholz, Eichenholz, Massoi-Rinde, Vanilleschoten, Tonkabohne sowie deren angereicherte Fraktionen,
Saftkonzentrate, wie Orangensaft-, Zitronensaft-, Erdbeer-, Kirsch- oder Maracujasaftkonzentrate, Wasserphasen und Rückgewinnungen aus Rohstoffen wie Zitrusfrüchten (Zitrone, Limette, Orange, Mandarine, Grapefruit), Apfel, Birne, Quitte, Mispel, rote Früchte (Himbeere, Erdbeere, Heidelbeere, Brombeere, Amellanchia (Junipflaume), Hagebutte, Preiselbeere, Pflaume, Zwetschge, rote und schwarze Johannisbeere), gelbe Früchte (Pfirsich, Aprikose, Nektarine, Banane usw.), tropische Früchte (Mango, Passionsfrucht, Ananas, Litschi usw.), Gemüse (z. B. Gurke, Tomate) und Gewürze (z. B. Ingwer),
Acetophenon, Allylcaproat, Alpha-Ionon, Beta-Ionon, Anisaldehyd, Anisylacetat, Anisylformiat, Benzaldehyd, Benzothiazol, Benzylacetat, Benzylalkohol, Benzylbenzoat, Beta-Ionon, Butylbutyrat, Butylcaproat, Butylidenphthalid, Carvon, Camphen, Caryophyllen, Cineol, Cinnamylacetat, Citral, Citronellol, Citronellal, Citronellylacetat, Cyclohexylacetat, Cymen, Damascone, Decalacton, Dihydrocoumarin, Dimethylanthranilat, Dodecalacton, Ethoxyethylacetat, Ethylbuttersäure, Ethylbutyrat, Ethylcaprat, Ethylcaproat, Ethylcrotonat, Ethylfuraneol, Ethylguaiacol, Ethylisobutyrat, Ethylisovalerat, Ethyllactat, Ethylmethylbutyrat, Ethylpropionat, Eucalyptol, Eugenol, Ethylheptylat, 4-(p-Hydroxyphenyl)-2-butanon, Gamma-Decalacton, Geraniol, Geranylacetat, Geranylacetat, Grapefruitaldehyd, Methyldihydrojasmonat (z.B. Hedion^{®}), Heliotropin, 2-Heptanon, 3-Heptanon, 4-Heptanon, 2E-Heptenal, 4Z-Heptenal, 2E-Hexenal, 3Z-Hexenol, 2E-Hexensäure, 3E-Hexensäure, 2Z-Hexenylacetat, 3Z-Hexenylacetat, 3Z-Hexenylcaproat, 2E-Hexenylcaproat, 3Z-Hexenylformiat, 2Z-Hexylacetat, 3Z-Hexylacetat, 2E-Hexylacetat, 3Z-Hexylformiat, para-Hydroxybenzylaceton, Isoamylalkohol, Isoamylisovalerat, Isobutylbutyrat, Isobutyraldehyd, Isoeugenolmethylether, Isopropylmethylthiazol, Laurinsäure, Levulinsäure, Linalool, Linalooloxid, Linalylacetat, Menthol, Menthofuran, Methylanthranilat, Methylbutanol, Methylbuttersäure, 2-Methylbutylacetat, Methylcaproat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-pentolsäure, Methylthiobutyrat, 3,1-Methylthiohexanol, 3-Methylthiohexylacetat, Nerol, Nerolacetat, 2E,4E-Nonadienal, 2,4-Nonadienol, 2,6-Nonadienol, 2,4-Nonadienol, Nootkaton, Delta-Octalacton, Gamma-Octalacton, 2-Octanol, 3-Octanol, 1,3-Octenol, 1-Octylacetat, 3-Octylacetat, Palmitinsäure, Paraldehyd, Phellandren,
Pentandion, Phenylethylacetat, Phenylethylalkohol, Phenylethylisovalerat, Piperonal, Propionaldehyd, Propylbutyrat, Pulegon, Pulegol, Sinensal, Sulfurol, Terpinen, Terpineol, Terpinolen, 8,3-s-Thiomenthanon, 4,4,2-Thiomethylpentanon, Thymol, Delta-Undecalacton, Gamma-Undecalacton, Valencen, Valeriansäure, Vanillin, Acetoin, Ethylvanillin, Ethylvanillinisobutyrat (=3-Ethoxy-4-isobutyryloxybenzaldehyd), 2,5-Dimethyl-4-hydroxy-3(2H)-furanon und deren Derivate (hier vorzugsweise Homofuranol (=2-Ethyl-4-hydroxy-5-methyl-3(2H)-furanon), Homofuronol (=2-Ethyl-5-methyl- 4-hydroxy-3(2H)-furanon und 5-Ethyl-2-methyl-4-hydroxy-3(2H)-furanon), Maltol und Maltolderivate (hier vorzugsweise Ethylmaltol), Cumarin und Cumarinderivate, gamma-Lactone (hier vorzugsweise gamma-Undecalacton, gamma-Nonalacton, gamma-Decalacton), delta-Lactone (hier vorzugsweise 4-Methyldeltadecalacton, Massoilacton, Deltadecalacton, Tuberolacton), Methylsorbat, Divanillin, 4-Hydroxy-2(oder 5)-ethyl-5 (oder 2)-methyl-3(2H)furanon, 2-Hydroxy-3-methyl-2-cyclopentenon, 3-Hydroxy-4,5-dimethyl- 2(5H)-furanon, Essigsäure-Isoamylester, Buttersäure-Ethylester, Buttersäure-n-Butylester, Buttersäure-Isoamylester, 3-Methyl-Buttersäure-Ethylester, n-Hexansäure-Ethylester, n-Hexansäure-Allylester, n-Hexansäure-n-Butylester, n-Octansäureethylester, Ethyl-3-methyl-3-phenylglycidat, Ethyl-2-E-4-Z-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, Bis(2-methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3- ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2- methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol und (hier nicht ausdrücklich angegeben) Stereoisomere, Enantiomere, Stellungsisomere, Diastereomere, Z/E-Isomere oder Epimere dieser Stoffe.

4. Aromazusammensetzung nach einem der vorhergehenden Ansprüche, wobei die Aromazusammensetzung ferner mindestens eine Verbindung oder ein Verbindungsgemisch umfasst, die bzw. das einen süßen Geschmack vermittelt, ausgewählt aus der Gruppe bestehend aus
natürliche Süßstoffe, vorzugsweise natürlich vorkommende süß schmeckende Substanzen, einschließlich Pflanzenextrakte, wie süß schmeckende Kohlenhydrate (wie Saccharose, Trehalose, Laktose, Maltose, Melizitose, Melibiose, Raffinose, Palatinose, Laktulose, (D)-Fructose, (D)-Glucose, (D)-Galactose, (L)-Rhamnose, (D)-Sorbose, (D)-Mannose, (D)-Tagatose, (D)-Arabinose, (L)-Arabinose, (D)-Ribose, (D)-Glyceraldehyd, Maltodextrin), Zuckeralkohole (wie Erythrit, Threitol, Arabit, Ribit, Xylit, Sorbit, Mannit, Maltit, Isomaltit, Dulcit, Lactit), Proteine (z. B. Miraculin, Pentaidin, Monellin, Thaumatin, Curculin, Brazzein, Mabinlin), (D)-Aminosäuren (z. B. (D)-Phenylalanin, (D)-Tryptophan) oder aus natürlichen Quellen gewonnene Extrakte oder Fraktionen, die diese Aminosäuren und/oder Proteine enthalten, sowie die physiologisch verträglichen Salze dieser Aminosäuren und/oder Proteine, insbesondere die Natrium-, Kalium-, Calcium- oder Ammoniumsalze davon; Neohesperidindihydrochalkon, Naringindihydrochalkon, Steviolgylcosid, Steviosid, Steviolbiosid, Rebaudiosid, Rebaudiosid A, Rebaudiosid B, Rebaudiosid C, Rebaudiosid D, Rebaudiosid E, Rebaudiosid F, Rebaudiosid G, Rebaudiosid H, Rebaudiosid M, Rebaudiosid N, Rebaudiosid X, Dulcosid, Rubusosid, Suaviosid A, Suaviosid B, Suaviosid G, Suaviosid H, Suaviosid I, Suaviosid J, Baiyunosid 1, Baiyunosid 2, Phlomisosid 1, Phlomisosid 2, Phlomisosid 3, Phlomisosid 4, Abrusosid A, Abrusosid B, Abrusosid C, Abrusosid D, Cyclocaryosid A, Cyclocaryosid I, Oslandin, Polypodosid A, Strogin 1, Strogin 2, Strogin 4, Selligueanin A, Dihydroquercetin-3-acetat, Perillartin, Telosmosid A15, Periandrin I-V, Pterocaryosid, Cyclocaryosid, Mukuroziosid, E-Anethol, E-Cinnamaldehyd, Bryosid, Bryonosid, Bryonodulcosid, Carnosiflosid, Scandenosid, Gypenosid, Hämatoxylin, Cyanin, Chlorogensäure, Albiziasaponin, Telosmosid, Gaudichaudiosid, Mogroside, wie Mogrosid V, Hernandulcin, Monatin, Glycyrrhetinsäure und ihre Derivate, insbesondere Glycyrrhizin, vorzugsweise Glycyrrhizin-Ammoniumsalz; Extrakte oder angereicherte Fraktionen solcher Extrakte, wie Extrakte von Thaumatococcus oder Stevia ssp., insbesondere Stevia rebaudiana, Schwalbenwurzelextrakte, insbesondere Momordica oder Siratia grosvenorii oder Luo-Han-Guo, Extrakte von Giycerrhyzia ssp., insbesondere Giycerrhyzia glabra oder Giycerrhyzia uraiensis, Extrakte von Rubus ssp., insbesondere Rubus suavissimus oder Rubus Chingii, Extrakte von Lippia dulcis, Extrakte von Mycetia balansae, vorzugsweise umfassend Balansin A und/oder Balansin B;
synthetische Süßstoffe, vorzugsweise synthetische süß schmeckende Substanzen, vorzugsweise ausgewählt aus der Gruppe bestehend aus Magap, Natriumcyclamat oder anderen physiologisch akzeptablen Salzen der Cyclamsäure, Acesulfam K; Neohesperidindihydrochalkon, Naringindihydrochalkon, Saccharin, Saccharin-Natriumsalz, Aspartam, Superaspartam, Neotam, Alitam, Advantam, Perillartin, Sucralose, Lugduname, Carrelame, Sucrononat oder Sucrooctat oder Mischungen davon.

5. Zubereitung enthaltend die Aromazusammensetzung nach einem der Ansprüche 1 bis 4, wobei die Aromazusammensetzung in einer Menge von 0,001 bis 10 ppm, vorzugsweise in einer Menge von 0,01 bis 5 ppm, besonders bevorzugt in einer Menge von 0,015 bis 0,5 ppm, bezogen auf das Gesamtgewicht der Zubereitung, enthalten ist.

6. Zubereitung nach Anspruch 5, wobei die Zubereitung ausgewählt ist aus der Gruppe der zum Verzehr geeigneten Zubereitungen, vorzugsweise Lebensmittel, Genussmittel, Getränke, Halbfertigprodukte und Mundhygieneprodukte.

7. Zubereitung nach Anspruch 5 oder 6, wobei die Zubereitung zusätzlich einen oder mehrere Aromastoffe enthält, ausgewählt aus der Gruppe bestehend aus
aliphatische Aromastoffe, insbesondere gesättigte aliphatische Alkohole, wie Ethanol, Isopronanol, Butanol, Isoamylalkohol, Hexanol, 2-Heptanol, (1/2/3)-Octanol, Decanol, ungesättigte aliphatische Alkohole, wie 2Z-Pentenol, 3Z-Hexenol, 2E-Hexenol, 3E-Hexenol, 2Z-Octenol, 1-Octen-3-ol, 6Z-Nonenol, 2E,6Z-Nonadienol, aliphatische Aldehyde wie gesättigte aliphatische Aldehyde (z.B. Acetaldehyd, Propionaldehyd, Butyraldehyd, Isobutyraldehyd, Valeraldehyd, Isolvaleraldehyd, Hexanal, 3-Methylhexanal, Octanal, Nonanal, oder einfach oder mehrfach ungesättigte aliphatische Aldehyde, wie 2-Methyl-but-2-enal, 2E-Hexenal, 3Z-Hexenal, 4Z-Hexenal, 2E-Octenal, 2E-Nonenal, 6Z- Nonenal, 2E,6Z-Nonadienal, 2E-Decenal, 2E-Decadienal, aliphatische Ketone, z. B. gesättigte Ketone (wie 2-Butanon, 2-Pentanon, 2-Heptanon, 2-Octanon, 2-Methylheptan-3-on, 2-Decanon, 2-Undecanon), ungesättigte Ketone (wie 1-Penten-3-on, 1-Hexen-3-on, 5-Methyl-3-hexenon, 3-Hepten-2-on, 1-Octen-3-on, 2-Octen-4-on, 3-Octen-2-on, 3-Non-2-on), aliphatische Diketone und aliphatische Diketole, z. B. Diacetyl, Acetylmethylcarbinol, 2,3-Hexandion, aliphatische Säuren, wie geradkettige gesättigte Säuren, wie Essigsäure, Propionsäure, Buttersäure, Isobuttersäure, Valeriansäure, Heptansäure, Octansäure, Decansäure, verzweigtkettige gesättigte Säuren, wie 2-Methylheptansäure, 4-Ethyloctansäure, und ungesättigte Säuren, wie 2-Butensäure, 2-Pentensäure, 4-Pentensäure, 2-Methylpentensäure, 3E-Hexensäure, 3Z-Hexensäure, 3-Octensäure, Linolsäure, aliphatische Ester, wie gesättigte Ester, z.B. Methylacetat, Methylbutyrat, Methyl-2-methylbutyrat, Methylhexanoat, Ethylacetat, Ethylbutyrat, Ethyl-2-methylbutyrat, Ethyl-3-methylbutyrat, Ethylhexanoat, Ethyldecanoat, Isopropylacetat, Isobutylacetat, Isobutylvalerat, Isoamylacetat, Isoamylbutyrat, Isoamylisovalerat, Hexylacetat, Hexylhexanoat, 3-Octylacetat und ungesättigte Ester, wie 2-Hexensäuremethylester, Allylhexanoat, 3Z-Hexenylacetat, 3Z-Hexenylbutyrat, aliphatische Thiole und Dithiole (z.B. Propanthiol, Allylmercaptan, 1-Methoxy-3-methylbutan-3-thiol, Dimethylsulfid, Dimethyltrisulfid, Dipropylsulfid, Diallyltrisulfid, andere aliphatische Schwefelverbindungen wie 2-Mercapto-3-butanol, Methylthiopropanal, 3-Mercapto- pentanon, 4-Methoxy-2-methyl-2-mercaptobutanon, Methylthiobutyrat, Methylthiobutyrat, Methyl-3-methylthiopropionat, aliphatische Stickstoffverbindungen, wie Butylamin, Trimethylamin, Allylisothiocyanat, Isopropylisothiocyanat, alicyclische Verbindungen, wie alicyclische Ketone, z.z. B. Zjasmone, Isophorone, 4-Ketoisophorone, alizyklische Ester wie Methyljasmonat, Hedione, Terpene, z. B. Terpenalkohole wie Linalool, Citronellol, Geraniol, Nerol, Alpha-Terpineol, Menthol, 8-p-Menthen-1,2-diol, Fenchol, Borneol, Nerolidol, Hotrienol, Terpenaldehyde wie Geranial, Neral, Citronellal, beta-Sinensal, Terpenketone, wie alpha-Ionon, (D)-Carvon, (L)-Carvon, Nootkaton, Piperiton, Menthon, alpha-Damascon, beta-Damascen, Damascenon, Terpenester, wie Linalylacetat, Geranylacetat, Citronellylacetat, Carvylacetat, Fenchylacetat, Terpenschwefelverbindungen, 4-Mentha-8-thiol-3-on, Thiogeraniol, para-Menth-1-en-8-thiol, Mercapto p-menthan-3-on, Terpenkohlenwasserstoffe, wie (D)-Limonen, (L)-Limonen, alpha-Pinen, beta-Pinen, Ocimen, alpha-Terpinen, gamma-Terpinen, beta-Bisabolen, Valencen, Terpenoxide, wie 1,8-Cineol, Rosenoxid, Minzlacton, Menthofuran, aromatische Verbindungen, z.B. aromatische Alkohole, wie Benzylalkohol, Cinnamylalkohol, 2-Phenylalkohol, aromatische Aldehyde, wie Benzaldehyd, Zimtaldehyd, 5-Methyl-2-phenylhexenal, Salicylaldehyd, 4-Hydroxybenzaldehyd, Cyclamenaldehyd, 2-Phenyl-2-butenal, aromatische Säuren, wie 2-Phenylessigsäure, Zimtsäure, aromatische Ester wie Benzylacetat, Benzylsalicylat, Anisylacetat, Methylphenylacetat, Methylbenzoat, Methylsalicylat, Methylzimtsäure, aromatische Phenole wie Phenol, ortho-Kresol, para-Kresol, 2,3-Dimethylphenyl, 2-Ethylphenol, 2,3,5-Trimethylphenol, 4-Vinylphenol, Guajakol, 4-Vinylguajakol, Eugenol, Thymol, Carvacrol, aromatische Schwefelverbindungen, wie Thiophenol, Diphenyldisulfid, aromatische Stickstoffverbindungen, wie Methylanthranilat, Methyl-N-methylanthranilat, aromatische Ether wie Vanillin, Ethylvanillin, Anethol, aromatische Oxide wie Heliotropin, Diphenyloxid, aromatische Lactone wie Cumarin, Dihydrocumarin, heterocyclische Verbindungen wie heterocyclische Lactone, z. B. Gamma-Butyrolacton, Gamma-Nonalacton, Gamma-Decalacton, Delta-Decalacton, Jasminlacton, Delta-Dodecalacton, Ambrettolid, heterocyclische Furane, wie Furfurylalkohol, Furfural, 2-Acetylfuran, Theaspiran, 2-Methyltetrahydrofuran-3-on, Furfurylmercaptan, 2-Methyl-3-furanthiol, 2-Methyl-3-tetrahydrofuranthiol, Difurfurylsulfid, Difurfuryldisulfid, heterocyclische Pyrane, wie Maltol, Ethylmaltol, Rosenoxid, Maltolisobutyrat, heterocyclische Pyrrole wie Indol, 2-Acetylpyrrol, Pyrrolidin, heterocyclische Pyrazine wie 2-Methylpyrazin, 2,3-Dimethylpyrazin, 2-Methyl-3-ethylpyrazin, Trimethylpyrazin, 2-Acetylpyrazin, 2-Methoxy-3-methylpyrazin, 2-Methoxy-3-ethylpyrazin, 2-Methoxy-3-isobutylpyrazin, 2-Ethyl-3-methylthio-pyrazin, heterocyclische Thiazole, wie Thiazol, 2-Methylthiazol, 4-Methyl-5-vinylthiazol, 2-Isobutylthiazol, 2-Acetylthiazol,
Aromarohstoffe und Aromazubereitungen, z. B. ätherische Öle, Konkrete, Absolute, Extrakte oder Tinkturen aus Rohstoffen wie Zitrusfrüchten (z. B. Zitrone, Limette, Mandarine, Bergamotte, Grapefruit, Bitterorange, Schalen-oder Essenzenöle), Kräutern (Dill, Petersilie, Kreuzkümmel, Rosmarin, Salbei, Muskatellersalbei, Basilikum, Estragon, Thymian, Oregano, Bohnenkraut, Majoran, Allspice, Muskatblüte, Muskatnuss, Nelkenblatt, Nelkenknospe, Kümmel, Zimtblätter, Zimtrinde, Kassia, Kardamom, Ingwer, Galgant, Kurkuma, Koriandersamen, Korianderblätter, Bockshornklee, Wacholder beeren, Wermut, Lorbeerblätter, Eukalyptus, weißer Pfeffer, grüner Pfeffer, weißer Pfeffer, Karottensamen, Selleriesamen, Liebstöckelblätter, Asa foetida, Zwiebel, Lauch, Knoblauch, Senf, Meerrettich, Paprika, Seegras, Baldrianöl, Tannennadel, Krauseminze, Pfefferminze,
Wintergrün, Buchu-Blatt, schwarze Johannisbeerknospen, Fenchel, Sternanis, Jambu, langer Pfeffer, Davana, Orris, Mimose, Cassie, Veilchenblätter, Ho-Blatt, Jasmin, Ylang-Ylang, Cananga, Osmanthus, Engelwurz, Muskatellersalbei, Ambrettesamen, Hopfen, Kamille, Lavendel, Rose, Geranie, Citronella, Palmarosa, Litsea Cubeba, Zitronengras, Tagetes, Neroli, Petitgrain, Mate, Cognacöl, Kaffee, Kolanuss, Kakao, Grüner Tee, Schwarzer Tee, Weißer Tee, Enzian, Tolubalsam, Benzoe-Harz, Perubalsam, Cascarilla, Galbanum, Vetiver, Labdanum, Patchouli, Sandelholz, Zedernholz, Guajakholz, Eichenholz, Massoi-Rinde, Vanilleschoten, Tonkabohne sowie deren angereicherte Fraktionen,
Saftkonzentrate wie Orangensaft-, Zitronensaft-, Erdbeer-, Kirschsaft- oder Passionsfruchtsaftkonzentrate, Wasserphasen und Rückgewinnungen aus Rohstoffen wie Zitrusfrüchten (Zitrone, Limette, Orange, Mandarine, Grapefruit), Apfel, Birne, Quitte, Mispel, rote Früchte (Himbeere, Erdbeere, Heidelbeere, Brombeere, Amellanchia (Junipflaume), Hagebutte, Preiselbeere, Pflaume, Zwetschge, rote und schwarze Johannisbeere), gelbe Früchte (Pfirsich, Aprikose, Nektarine, Banane usw.), tropische Früchte (Mango, Passionsfrucht, Ananas, Litschi usw.), Gemüse (z. B. Gurke, Tomate) und Gewürze (z. B. Ingwer),
Acetophenon, Allylcaproat, Alpha-Ionon, Beta-Ionon, Anisaldehyd, Anisylacetat, Anisylformiat, Benzaldehyd, Benzothiazol, Benzylacetat, Benzylalkohol, Benzylbenzoat, Beta-Ionon, Butylbutyrat, Butylcaproat, Butylidenphthalid, Carvon, Camphen, Caryophyllen, Cineol, Cinnamylacetat, Citral, Citronellol, Citronellal, Citronellylacetat, Cyclohexylacetat, Cymen, Damascone, Decalacton, Dihydrocoumarin, Dimethylanthranilat, Dodecalacton, Ethoxyethylacetat, Ethylbuttersäure, Ethylbutyrat, Ethylcaprat, Ethylcaproat, Ethylcrotonat, Ethylfuraneol, Ethylguaiacol, Ethylisobutyrat, Ethylisovalerat, Ethyllactat, Ethylmethylbutyrat, Ethylpropionat, Eucalyptol, Eugenol, Ethylheptylat, 4-(p-Hydroxyphenyl)-2-butanon, Gamma-Decalacton, Geraniol, Geranylacetat, Geranylacetat, Grapefruitaldehyd, Methyldihydrojasmonat (z.B. Hedion^{®}), Heliotropin, 2-Heptanon, 3-Heptanon, 4-Heptanon, 2E-Heptenal, 4Z-Heptenal, 2E-Hexenal, 3Z-Hexenol, 2E-Hexensäure, 3E-Hexensäure, 2Z-Hexenylacetat, 3Z-Hexenylacetat, 3Z-Hexenylcaproat, 2E-Hexenylcaproat, 3Z-Hexenylformiat, 2Z-Hexylacetat, 3Z-Hexylacetat, 2E-Hexylacetat, 3Z-Hexylformiat, para-Hydroxybenzylaceton,
Isoamylalkohol, Isoamylisovalerat, Isobutylbutyrat, Isobutyraldehyd, Isoeugenolmethylether, Isopropylmethylthiazol, Laurinsäure, Levulinsäure, Linalool, Linalooloxid, Linalylacetat, Menthol, Menthofuran, Methylanthranilat, Methylbutanol, Methylbuttersäure, 2-Methylbutylacetat, Methylcaproat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-pentolsäure, Methylthiobutyrat, 3,1-Methylthiohexanol, 3-Methylthiohexylacetat, Nerol, Nerolacetat, 2E,4E-Nonadienal, 2,4-Nonadienol, 2,6-Nonadienol, 2,4-Nonadienol, Nootkaton, Delta-Octalacton, Gamma-Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylisovalerat, Piperonal, Propionaldehyd, Propylbutyrat, Pulegon, Pulegol, Sinensal, Sulfurol, Terpinen, Terpineol, Terpinolen, 8,3-s-Thiomenthanon, 4,4,2-Thiomethylpentanon, Thymol, Delta-Undecalacton, Gamma-Undecalacton, Valencen, Valeriansäure, Vanillin, Acetoin, Ethylvanillin, Ethylvanillinisobutyrat (=3-Ethoxy-4-isobutyryloxybenzaldehyd), 2,5-Dimethyl-4-hydroxy-3(2H)-furanon und deren Derivate (hier vorzugsweise Homofuranol (=2-Ethyl-4-hydroxy-5-methyl-3(2H)-furanon), Homofuronol (=2-Ethyl-5-methyl- 4-hydroxy-3(2H)-furanon und 5-Ethyl-2-methyl-4-hydroxy-3(2H)-furanon), Maltol und Maltolderivate (hier vorzugsweise Ethylmaltol), Cumarin und Cumarinderivate, gamma-Lactone (hier vorzugsweise gamma-Undecalacton, gamma-Nonalacton, gamma-Decalacton), delta-Lactone (hier vorzugsweise 4-Methyldeltadecalacton, Massoilacton, Deltadecalacton, Tuberolacton), Methylsorbat, Divanillin, 4-Hydroxy-2(oder 5)-ethyl-5 (oder 2)-methyl-3(2H)furanon, 2-Hydroxy-3-methyl-2-cyclopentenon, 3-Hydroxy-4,5-dimethyl- 2(5H)-furanon, Essigsäure-Isoamylester, Buttersäure-Ethylester, Buttersäure-n-Butylester, Buttersäure-Isoamylester, 3-Methyl-Buttersäure-Ethylester, n-Hexansäure-Ethylester, n-Hexansäure-Allylester, n-Hexansäure-n-Butylester, n-Octansäureethylester, Ethyl-3-methyl-3-phenylglycidat, Ethyl-2-E-4-Z-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, Bis(2-methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3- ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2- methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol und (hier nicht ausdrücklich angegeben) Stereoisomere, Enantiomere, Stellungsisomere, Diastereomere, Z/E-Isomere oder Epimere dieser Stoffe.

8. Zubereitung nach einem der Ansprüche 5 bis 7, wobei die Zubereitung zusätzlich mindestens eine Verbindung oder ein Verbindungsgemisch enthält, das einen süßen Geschmack vermittelt, ausgewählt aus der Gruppe bestehend aus
natürliche Süßstoffe, vorzugsweise natürlich vorkommende süß schmeckende Substanzen, einschließlich Pflanzenextrakte, wie süß schmeckende Kohlenhydrate (wie Saccharose, Trehalose, Laktose, Maltose, Melizitose, Melibiose, Raffinose, Palatinose, Laktulose, (D)-Fructose, (D)-Glucose, (D)-Galactose, (L)-Rhamnose, (D)-Sorbose, (D)-Mannose, (D)-Tagatose, (D)-Arabinose, (L)-Arabinose, (D)-Ribose, (D)-Glyceraldehyd, Maltodextrin), Zuckeralkohole (wie Erythrit, Threitol, Arabit, Ribit, Xylit, Sorbit, Mannit, Maltit, Isomaltit, Dulcit, Lactit), Proteine (z. B. Miraculin, Pentaidin, Monellin, Thaumatin, Curculin, Brazzein, Mabinlin), (D)-Aminosäuren (z. B. (D)-Phenylalanin, (D)-Tryptophan) oder aus natürlichen Quellen gewonnene Extrakte oder Fraktionen, die diese Aminosäuren und/oder Proteine enthalten, sowie die physiologisch verträglichen Salze dieser Aminosäuren und/oder Proteine, insbesondere die Natrium-, Kalium-, Calcium- oder Ammoniumsalze davon; Neohesperidindihydrochalkon, Naringindihydrochalkon, Steviolgylcosid, Steviosid, Steviolbiosid, Rebaudiosid, Rebaudiosid A, Rebaudiosid B, Rebaudiosid C, Rebaudiosid D, Rebaudiosid E, Rebaudiosid F, Rebaudiosid G, Rebaudiosid H, Rebaudiosid M, Rebaudiosid N, Rebaudiosid X, Dulcosid, Rubusosid, Suaviosid A, Suaviosid B, Suaviosid G, Suaviosid H, Suaviosid I, Suaviosid J, Baiyunosid 1, Baiyunosid 2, Phlomisosid 1, Phlomisosid 2, Phlomisosid 3, Phlomisosid 4, Abrusosid A, Abrusosid B, Abrusosid C, Abrusosid D, Cyclocaryosid A, Cyclocaryosid I, Oslandin, Polypodosid A, Strogin 1, Strogin 2, Strogin 4, Selligueanin A, Dihydroquercetin-3-acetat, Perillartin, Telosmosid A15,
Periandrin I-V, Pterocaryosid, Cyclocaryosid, MukuroZiosid, E-Anethol, E-Cinnamaldehyd, Bryosid, Bryonosid, Bryonodulcosid, Carnosiflosid, Scandenosid, Gypenosid, Hämatoxylin, Cyanin, Chlorogensäure, Albiziasaponin, Telosmosid, Gaudichaudiosid, Mogroside, wie Mogrosid V, Hernandulcin, Monatin, Glycyrrhetinsäure und ihre Derivate, insbesondere Glycyrrhizin, vorzugsweise Glycyrrhizin-Ammoniumsalz; Extrakte oder angereicherte Fraktionen solcher Extrakte, wie Extrakte von Thaumatococcus oder Stevia ssp., insbesondere Stevia rebaudiana, Schwalbenwurzelextrakte, insbesondere Momordica oder Siratia grosvenorii oder Luo-Han-Guo, Extrakte von Giycerrhyzia ssp., insbesondere Giycerrhyzia glabra oder Giycerrhyzia uraiensis, Extrakte von Rubus ssp., insbesondere Rubus suavissimus oder Rubus Chingii, Extrakte von Lippia dulcis, Extrakte von Mycetia balansae, vorzugsweise umfassend Balansin A und/oder Balansin B;
synthetische Süßstoffe, vorzugsweise synthetische süß schmeckende Substanzen, vorzugsweise ausgewählt aus der Gruppe bestehend aus Magap, Natriumcyclamat oder anderen physiologisch akzeptablen Salzen der Cyclamsäure, Acesulfam K; Neohesperidindihydrochalkon, Naringindihydrochalkon, Saccharin, Saccharin-Natriumsalz, Aspartam, Superaspartam, Neotam, Alitam, Advantam, Perillartin, Sucralose, Lugduname, Carrelame, Sucrononat oder Sucrooctat oder Mischungen davon.

9. Verwendung einer Aromazusammensetzung nach einem der Ansprüche 1 bis 4 zur Verbesserung mindestens eines Geschmacksmerkmals in einer/einer Zubereitung.

10. Verwendung nach Anspruch 9, wobei das/die mindestens eine(n) Geschmacksmerkmal(e) ausgewählt ist/sind aus der Gruppe bestehend aus Reichhaltigkeit, Körper, Authentizität, Wirkung, Mundgefühl, Süße und Saftigkeit.

11. Verwendung nach Anspruch 9 oder 10, wobei die Aromazusammensetzung in einer Menge von 0,001 bis 10 ppm, vorzugsweise in einer Menge von 0,01 bis 5 ppm, besonders bevorzugt in einer Menge von 0,015 bis 0,5 ppm, bezogen auf das Gesamtgewicht der Zubereitung, verwendet wird.

12. Verfahren zur Verbesserung mindestens eines Geschmacksmerkmals in einer / einer Zubereitung, umfassend oder bestehend aus den Schritten
a) Bereitstellung mindestens einer Zubereitung ausgewählt aus der Gruppe der zum Verzehr geeigneten Zubereitungen, vorzugsweise Lebensmittel, Genussmittel, Getränke, Halbfertigprodukte und Mundhygieneprodukte;
b) Bereitstellung einer Aromazusammensetzung nach einem der Ansprüche 1 bis 4;
c) Inkontaktbringen und Mischen der in Schritt a) bereitgestellten Zubereitung und der in Schritt b) bereitgestellten Aromazusammensetzung;
d) Gewinnung einer Zubereitung wie sie in einem der Ansprüche 5 bis 8 definiert ist.

13. Verfahren nach Anspruch 12, wobei die in Schritt b) bereitgestellte Aromazusammensetzung in einer Menge von 0,001 bis 10 ppm, vorzugsweise in einer Menge von 0,01 bis 5 ppm, besonders bevorzugt in einer Menge von 0,015 bis 0,5 ppm, bezogen auf das Gesamtgewicht der Zubereitung, bereitgestellt wird.

## Revendications

1. Composition aromatisante comprenant ou constituée de 8Z,11Z-heptadécadiénal, 8Z-heptadécénal et 7Z-hexadécénal, et le cas échéant d'un ou de plusieurs composés du groupe constitué de 5Z,8Z,12Z-heptadécatriénal, 8Z-pentadécénal et 7Z-tétradécénal, dans laquelle
- le 8Z,11Z-heptadécadiénal est contenu en une quantité comprise entre 0,0001 et 30 % en poids, de préférence en une quantité comprise entre 0,001 et 30 % en poids, plus préférablement en une quantité comprise entre 0,01 et 30 % en poids, et/ou
- le 8Z-heptadécénal est contenu en une quantité comprise entre 0,0001 et 30 % en poids, de préférence en une quantité comprise entre 0,001 et 30 % en poids, plus préférablement en une quantité comprise entre 0,01 à 30 % en poids, et/ou
- le 7Z-hexadécénal est contenu en une quantité comprise entre 0,0001 et 30 % en poids, de préférence en une quantité comprise entre 0,001 et 30 % en poids, plus préférablement en une quantité comprise entre 0,01 et 30 % en poids, et/ou
- le 5Z,8Z,12Z-heptadécatriénal, s'il est présent, est contenu en une quantité comprise entre 0,0001 et 20 % en poids, de préférence en une quantité comprise entre 0,001 et 20 % en poids, plus préférablement en une quantité comprise entre 0,01 et 20 % en poids, et/ou
- le 8Z-pentadécénal, s'il est présent, est contenu en une quantité comprise entre 0,0001 et 20 % en poids, de préférence en une quantité comprise entre 0,001 et 20 % en poids, plus préférablement en une quantité comprise entre 0,01 et 20 % en poids, et/ou
- le 7Z-tétradécénal, s'il est présent, est contenu en une quantité comprise entre 0,0001 et 20 % en poids, de préférence en une quantité comprise entre 0,001 et 20 % en poids, plus préférablement en une quantité comprise entre 0,01 et 20 % en poids,
respectivement par rapport au poids total de la composition aromatisante.

2. Composition aromatisante selon la revendication 1, dans laquelle un, plusieurs ou tous les aldéhydes mentionnés dans la revendication 1, s'ils sont présents, est/sont obtenu(s) par conversion enzymatique à partir d'une ou de plusieurs sources naturelles choisies dans le groupe constitué par l'acide palmitoléique, l'acide arachido-nique, l'acide alpha-linolénique, l'acide oléique, l'acide punicique, l'acide alpha-élaéostérarique, l'acide docosahexaénoïque, l'acide eicosapentaénoïque, l'acide pétrosélique, l'acide chaulmoogrique, l'acide alpha-licarique, l'huile d'olive, l'huile de canola, l'huile de noix de macadamia, l'huile d'argousier, l'huile de tung, l'huile de poisson, l'huile de bourrache, l'huile de chaulmoogrique, l'huile de persil, l'huile d'oiticica, l'huile de pépins de grenade, l'huile de coco, l'huile de tournesol, l'huile de pépins de raisin et les huiles fongiques obtenues à partir de l'un des genres choisis parmi *Conidiobolus, Flammulina, Fomes, Ganoderma, Mortierella, Panellus, Pleurotus, Psathyrella, Stereum, Umbelopsis.*

3. Composition aromatisante selon la revendication 1 ou 2, dans laquelle la composition aromatisante comprend en outre un ou plusieurs arômes supplémentaires choisis dans le groupe constitué par:
substances aromatisantes aliphatiques, notamment les alcools aliphatiques saturés tels que l'éthanol, l'isopronanol, le butanol, l'alcool isoamylique, l'hexanol, le 2-heptanol, le (1/2/3)-octanol, le décanol ; les alcools aliphatiques insaturés tels que le 2Z-penténol, le 3Z-hexénol, le 2E-hexénol, le 3E-hexénol, le 2Z-octénol, le 1-octène-3-ol, le 6Z-nonénol, le 2E,6Z-nonadiénol ; les aldéhydes aliphatiques tels que les aldéhydes aliphatiques saturés (par exemple l'acétaldéhyde, le propionaldéhyde, le butyraldéhyde, l'isobutyraldéhyde, le valéraldéhyde, l'isolvaléraldéhyde, l'hexanal, 3-méthyl hexanal, octanal, nonanal ou aldéhydes aliphatiques mono- ou multi-insaturés, tels que le 2-méthyl-but-2-énal, le 2E-hexénal, le 3Z-hexénal, le 4Z-hexénal, le 2E-octénal, le 2E-nonénal, le 6Z-nonénal, le 2E,6Z-nonadiénal, le 2E-décénal, le 2E-décadiénal, les cétones aliphatiques, par exemple les cétones saturées (telles que la 2-butanone, la 2-pentanone, la 2-heptanone, la 2-octanone, la 2-méthylheptan-3-one, la 2-décanone, la 2-undécanone), les cétones insaturées (telles que la 1-pentène-3-one, la 1-hexène-3-one, 5-méthyl-3-hexénone, 3-heptène-2-one, 1-octène-3-one, 2-octène-4-one, 3-octène-2-one, 3-none-2-one), les dicétones aliphatiques et dicétoles aliphatiques, par exemple le diacétyle, l'acétylméthylcarbinol, la 2,3-hexanedione, les acides aliphatiques, tels que les acides saturés à chaîne droite, tels que l'acide acétique, l'acide propionique, l'acide butyrique, l'acide isobutyrique, l'acide valérique, l'acide heptanoïque, l'acide octanoïque, l'acide déca-noïque, les acides saturés à chaîne ramifiée, tels que l'acide 2-méthyl heptanoïque, l'acide 4-éthyl octanoïque, et les acides insaturés, tels que l'acide 2-buténoïque, l'acide 2-penténoïque, l'acide 4-penténoïque, l'acide 2-méthyl penténoïque, l'acide 3E-hexénoïque, l'acide 3Z-hexénoïque, l'acide 3-octénoïque, l'acide linoléique, les esters aliphatiques, tels que les esters saturés, par exemple l'acétate de méthyle, le méthylbutyrate, le méthyl-2-méthylbutyrate, le méthylhexanoate, l'éthylacétate, éthylbutyrate, l'éthyl-2-méthylbutyrate, l'éthyl-3-méthylbutyrate, l'éthylhexanoate, l'éthyl décanoate, l'acétate d'isopropyle, l'acétate d'isobutyle, le valérate d'isobutyle, l'acétate d'isoamyle, le butyrate d'isoamyle, l'isovalérate d'isoamyle, l'acétate d'hexyle, hexanoate d'hexyle, l'acétate de 3-octyle et les esters insaturés, tels que le 2-hexénoate de méthyle, l'hexanoate d'allyle, l'acétate de 3Z-hexényle, le butyrate de 3Z-hexényle, les thiols et dithiols aliphatiques (par exemple le propane thiol, l'allyl mercaptan, le 1-méthoxy-3-méthylbutane-3-thiol, le sulfure de diméthyle, le trisulfure de diméthyle, le sulfure de dipropyle, le trisulfure de diallyle, d'autres composés soufrés aliphatiques, tels que le 2-mercapto-3-butanol, le méthyl thio propanal, la 3-mercapto-pentanone, la 4-méthoxy-2-méthyl-2-mercaptobutanone, le thiobutyrate de méthyle, le thiobutyrate de méthyle, le méthyl 3-méthylthiopropionate, les composés azotés aliphatiques, tels que la butylamine, la triméthylamine, l'isothiocyanate d'allyle, l'isothiocyanate d'isopropyle, les composés alicycliques, tels que les cétones alicycliques, par exemple la Z-jasmone, l'isophorone, la 4-cétoisophorone, les esters alicycliques tels que le méthyl jasmonate, l'hédione, les terpènes, par exemple les alcools terpéniques, tels que le linalol, le citronellol, le géraniol, le nérol, l'alpha terpinéol, le menthol, le 8-p-menthène-1,2-diol, le fenchol, le bornéol, le nérolidol, l'hotriénol, les aldéhydes terpéniques tels que le géranial, le néral, le citronellal, le bêta-sinensal, les cétones terpéniques, telles que l'alpha-ionone, la (D)-carvone, la (L)-carvone, nootkatone, pipéritone, menthone, alpha damascone, bêta damascène, damascénone, les esters terpéniques, tels que l'acétate de linalyle, l'acétate de géranyle, l'acétate de citronellyle, l'acétate de carvyle, l'acétate de fenchyle, les composés terpéniques soufrés, 4-mentha-8-thiol-3-one, thiogéraniol, para-menth-1-ène-8-thiol, mercapto p-menthan-3-one, les hydrocarbures terpéniques, tels que (D)-limonène, (L)-limonène, alpha-pinène, bêta-pinène, ocimène, alpha-terpinène, gamma-terpinène, bêta-bisabolène, valencène, les oxydes terpéniques, tels que le 1,8-cinéole, oxyde de rose, lactone de menthe, menthofurane, les composés aromatiques, par exemple les alcools aromatiques, tels que alcool benzylique, alcool cinnamylique, alcool 2-phénylique, les aldéhydes aromatiques, tels que le benzaldéhyde, l'aldéhyde cinnamique, le 5-méthyl-2-phénylhexénal, le salicylaldéhyde, le 4-hydroxy benzaldéhyde, l'aldéhyde de cyclamen, le 2-phényl-2-buténal, les acides aromatiques, tels que l'acide 2-phénylacétique, l'acide cinnamique, les esters aromatiques tels que l'acétate de benzyle, le salicylate de benzyle, l'acétate d'anisyle, l'acétate de méthylphényle, le benzoate de méthyle, le salicylate de méthyle, le cinnamate de méthyle, les phénols aromatiques, tels que le phénol, l'orthocrésol, le paracrésol, le 2,3-diméthylphényle, le 2-éthylphénol, le 2,3,5-triméthylphénol, le 4-vinylphénol, le gaïacol, le 4-vinylgaïacol, l'eugénol, le thymol, le carvacrol, les composés soufrés aromatiques, tels que thiophénol, disulfure de diphényle, les composés azotés aromatiques, tels que l'anthranilate de méthyle, le N-méthylanthranilate de méthyle, les éthers aromatiques tels que la vanilline, l'éthylvanilline, l'anéthol, les oxydes aromatiques, tels que l'héliotropine, oxyde de diphényle, les lactones aromatiques, telles que la coumarine, la dihydrocoumarine, les composés hétérocycliques, tels que les lactones hétérocycliques, par exemple la gamma-butyrolactone, la gamma-nonalactone, la gamma-décalactone, la delta-décalactone, la jasmin-lactone, la delta-dodécalactone, l'ambrettolide, les furanes hétérocycliques, tels que l'alcool furfurylique, le furfural, le 2-acétylfurane, le théaspirane, la 2-méthyltétrahydrofurane-3-one, le furfurylmercaptan, le 2-méthyl-3-furanthiol, le 2-méthyl-3-tétrahydrofuranthiol, le sulfure de difurfuryle, le disulfure de difurfuryle, les pyranes hétérocycliques, tels que le maltol, l'éthyl maltole, l'oxyde de rose, l'isobutyrate de maltol, les pyrroles hétérocycliques tels que l'indole, le 2-acétyle pyrrole, la pyrrolidine, les pyrazines hétérocycliques, telles que la 2-méthyl pyrazine, la 2,3-diméthyl pyrazine, la 2-méthyl 3-éthyl pyrazine, la triméthyl pyrazine, la 2-acétyl pyrazine, la 2-méthoxy 3-méthyl pyrazine, la 2-méthoxy 3-éthyl pyrazine, la 2-méthoxy 3-isobutyl pyrazine, la 2-éthyl 3-méthylthio pyrazine, les thiazoles hétérocycliques, tels que le thiazole, le 2-méthyl thiazole, le 4-méthyl 5-vinyl thiazole, le 2-isobutyl thiazole, le 2-acétyl thiazole, matières premières aromatisantes et préparations aromatisantes, par exemple huiles essentielles, concrètes, absolues, extraits ou teintures de matières premières telles que les agrumes (par exemple, citron, citron vert, mandarine, bergamote, pamplemousse, orange amère, huiles d'écorce ou d'essence), herbes (aneth, persil, cumin, romarin, sauge, sauge sclarée, basilic, estragon, thym, origan, sarriette, marjolaine, piment de la Jamaïque, macis, noix de muscade, feuille de clou de girofle, bouton de girofle, carvi, feuilles de cannelle, écorce de cannelle, casse, cardamome, gingembre, ga-langa, curcuma, graine de coriandre, feuille de coriandre, fenugrec, baie de genièvre, absinthe, feuilles de laurier, eucalyptus, poivre blanc, poivre vert, poivre blanc, graine de carotte, graine de céleri, feuille de livèche, asa foetida, oignon, poireau, ail, moutarde, raifort, poivron, paprika, algues, huile de valériane, aiguille de sapin, Menthe verte, menthe poivrée, thé des bois, feuille de buchu, bourgeons de cassis, fenouil, anis étoilé, jambu, poivre long, davana, iris, mimosa, cassie, feuilles de violette, feuille de hô, jasmin, ylang-ylang, cananga, osmanthus, angélique, sauge sclarée, graine d'ambrette, houblon, camomille, lavande, rose, géranium, citronnelle, palmarosa, litsea cubeba, citronnelle, tagètes, néroli, petit-grain, maté, huile essentielle de cognac, café, noix de kola, cacao, thé vert, thé noir, thé blanc, gentiane, baume de tolu, résine de benzoe, baume du Pérou, cascarilla, galbanum, vétiver, labdanum, patchouli, bois de santal, bois de cèdre, bois de gaïac, bois de chêne, écorce de massoi, gousses de vanille, fève tonka, ainsi que leurs fractions enrichies,
concentrés de jus, tels que concentrés de jus d'orange, de jus de citron, de fraise, de jus de cerise ou de fruit de la passion, phases aqueuses et récupérations de matières premières telles que les agrumes (citron, citron vert, orange, mandarine, pamplemousse), les pommes, les poires, les coings, les mispels, les fruits rouges (framboise, fraise, myrtille, mûre, amellania (prune de juin), cynorhodon, canneberge, prune, pruneau, cassis et groseilles), les fruits jaunes (pêche, abricot, nectarine, banane, etc.), les fruits tropicaux (mangue, fruit de la passion, ananas, litchi, etc.), les légumes (concombre, tomate, par exemple) et les épices (gingembre, par exemple).
acétophénone, caproate d'allyle, alpha-ionone, bêta-ionone, anisaldéhyde, acétate d'anisyle, formiate d'anisyle, benzaldéhyde, benzothiazole, acétate de benzyle, alcool benzylique, benzoate de benzyle, bêta-ionone, butyrate de butyle, caproate de butyle, butylidène phtalide, carvone, camphène, ca-ryophyllène, cinéol, acétate de cinnamyle, citral, citronellol, citronellal, acétate de citronellyle, acétate de cyclohexyle, cymène, damascone, décalactone, dihydrocoumarine, anthranilate de diméthyle, dodécalactone, acétate d'éthoxyéthyle, acide éthylbutyrique, butyrate d'éthyle, caprate d'éthyle, caproate d'éthyle, crotonate d'éthyle, éthylfuranéol, éthylgaïacol, isobutyrate d'éthyle, isovalérate d'éthyle, lactate d'éthyle, butyrate d'éthylméthyle, pro-pionate d'éthyle, eucalyptol, eugénol, heptylate d'éthyle, 4-(p-hydroxyphényl)-2-butanone, gamma-décalactone, géraniol, acétate de géranyle, acétate de géranyle, aldéhyde de pamplemousse, dihydrojasmonate de méthyle (par ex. Hedion^{®}), héliotropine, 2-heptanone, 3-heptanone, 4-heptanone, 2E-hepténal, 4Z-hepténal, 2E-hexénal, 3Z-hexénol, acide 2E-hexénoïque, acide 3E-hexénoïque, acétate de 2Z-hexényle, acétate de 3Z-hexényle, caproate de 3Z-hexényle, caproate de 2E-hexényle, formiate de 3Z-hexényle, acétate de 2Z-hexyle, acétate de 3Z-hexyle, acétate de 2E-hexyle, formiate de 3Z-hexyle, para-hydroxybenzyl acétone, alcool isoamylique, isovalérate d'isoamyle, butyrate d'isobutyle, isobutyraldéhyde, éther méthylique d'isoeugénol, isopropyl méthylthiazole, acide laurique acide, acide lévulinique, linalol, oxyde de linalol, acétate de li-nalyle, menthol, menthofurane, anthranilate de méthyle, méthylbutanol, acide méthylbutyrique, acétate de 2-méthylbutyle, caproate de méthyle, cinnamate de méthyle, 5-méthylfurfural, 3,2,2-méthylcyclopenténolone, 6,5,2-méthylhepténone, dihydrojasmonate de méthyle, jasmonate de méthyle, butyrate de 2-méthylméthyle, acide 2-méthyl-2-penténol, méthylthiobutyrate, 3,1-méthylthiohexanol, acétate de 3-méthylthiohexyle, nérol, acétate de nérol, 2E,4E-nonadiénal, 2,4-nonadiénol, 2,6-nonadiénol, 2,4-nonadiénol, nootkatone, delta-octalactone, gamma-octalactone, 2-octanol, 3-octanol, 1,3-octénol, acétate de 1-octyle, acétate de 3-octyle, acide palmitique, paraldé-hyde, phellandrène, pentanedione, acétate de phényléthyle, alcool phénylé-thylique, isovalérate de phényléthyle, pipéronal, propionaldéhyde, butyrate de propyle, pulégone, pulégol, sinensal, sulfurol, terpinène, terpinéol, terpi-nolène, 8,3-s thiomenthanone, 4,4,2-thiométhylpentanone, thymol, delta-undécalactone, gamma-undécalactone, valencène, acide valérique, vanilline, acétoïne, éthylvanilline, isobutyrate d'éthylvanilline (=3-éthoxy-4-isobutyryloxybenzaldéhyde), 2,5-diméthyl-4-hydroxy-3(2H)-furanone et ses dérivés (ici de préférence l'homofuranéol (=2-éthyl-4-hydroxy-5-méthyl-3(2H)-furanone), l'homofuronol (=2-éthyl-5-méthyl-4-hydroxy-3(2H)-furanone et la 5-éthyl-2-méthyl-4-hydroxy-3(2H)-furanone), maltol et dérivés du maltol (ici de préférence l'éthyl maltol), coumarine et dérivés de la coumarine, gamma-lactones (ici de préférence la gamma-undécalactone, la gamma-nonalactone, la gamma-décalactone), delta-lactones (ici de préférence la 4-méthyldeltadécalactone, la massoilactone, la deltadécalactone, la tubérolac-tone), sorbate de méthyle, divanilline, 4-hydroxy-2(ou 5)-éthyl-5 (ou 2)-méthyl-3(2H)furanone, 2-hydroxy-3-méthyl-2-cyclopenténone, 3-hydroxy-4,5-diméthyl-2(5H)-furanone, ester isoamylique d'acide acétique, ester éthylique d'acide butyrique, ester n-butylique d'acide butyrique, ester isoamylique d'acide butyrique, ester éthylique d'acide 3-méthyl-butyrique, ester éthylique d'acide n-hexanoïque, ester allylique d'acide n-hexanoïque, ester n-butylique d'acide n-hexanoïque, ester éthylique d'acide n-octanoïque, éthyl-3-méthyl-3-phénylglycidate, éthyl-2-E-4-Z-décadiénoate, 4-(p-hydroxyphényl)-2-butanone, 1,1-diméthoxy-2,2,5-triméthyl-4-hexane, 2,6-diméthyl-5-heptène-1-al et phénylacétaldéhyde, 2-méthyl-3-(méthylthio)furane, 2-méthyl-3-furanthiol, bis(2-méthyl-3-furyl)disulfure, furfurylmercaptan, méthional, 2-acétyl-2-thiazoline, 3-mercapto-2-pentanone, 2,5-diméthyl-3-furanthiol, 2,4,5-triméthylthiazole, 2-acétylthiazole, 2,4-diméthyl-5-éthylthiazole, 2-acétyl-1-pyrroline, 2-méthyl-3-éthylpyrazine, 2-éthyl-3,5-diméthylpyrazine, 2-éthyl-3,6-diméthylpyrazine, 2,3-diéthyl-5-méthylpyrazine, 3-isopropyl-2-méthoxypyrazine, 3-isobutyl-2-méthoxypyrazine, 2-acétylpyrazine, 2-pentylpyridine, (E,E)-2,4-décadiénal, (E,E)-2,4-nonadiénal, (E)-2-octénal, (E)-2-nonénal, 2-undécénal, 12-méthyltridécanal, 1-pentène-3-one, 4-hydroxy-2,5-diméthyl-3 (2H)-furanone, gaïacol, 3-hydroxy-4,5-diméthyl-2 (5H)-furanone, 3-hydroxy-4-méthyl-5-éthyl-2 (5H)-furanone, cinnamaldéhyde, alcool de cannelle, salicylate de méthyle, isopulégol et (non explicitement mentionnés ici) stéréoisomères, énan-tiomères, isomères de position, diastéréomères, isomères Z/E ou épimères de ces substances.

4. Composition aromatisante selon l'une quelconque des revendications précédentes, dans laquelle la composition aromatisante comprend en outre au moins un composé ou un mélange de composés conférant un goût sucré, choisi dans le groupe constitué par
les édulcorants naturels, de préférence des substances naturellement sucrées, y compris les extraits de plantes, tels que les glucides sucrés (tels que le saccharose, le tréhalose, le lactose, le maltose, le mélisitose, le méli-biose, le raffinose, le palatinose, le lactulose, le (D)-fructose, le (D)-glucose, le (D)-galactose, le (L)-rhamnose, le (D)-sorbose, le (D)-mannose, le (D)-tagatose, le (D)-arabinose, le (L)-arabinose, le (D)-ribose, le (D)-glycéraldéhyde, la maltodextrine), les polyalcools (tels que l'érythritol, le thréitol, l'arabitol, le ribitol, le xylitol, le sorbitol, le mannitol, le maltitol, isomaltit, dulcitol, lactitol), protéines (telles que miraculine, pentaidine, monel-line, thaumatine, curculine, brazzéine, mabinline), (D)-acides aminés (tels que (D)-phénylalanine, (D)-tryptophane) ou extraits ou fractions obtenus à partir de sources naturelles contenant ces acides aminés et/ou protéines et les sels physiologiquement acceptables de ces acides aminés et/ou protéines, en particulier leurs sels de sodium, de potassium, de calcium ou d'ammonium ; néohesperi-dindihydrochalkon, naringindihydrochalkon, ste-violgylcoside, stevioside, steviolbiosid, rebaudioside, rebaudioside A, rebau-dioside B, rebaudioside C, rebaudioside D, rebaudioside E, rebaudioside F, rebaudioside G, rebau-dioside H, rebaudioside M, rebaudioside N, rebau-dioside X, dulcoside, rubusoside, suavioside A, suavioside B, suavioside G, suavioside H, suavioside I, suavioside J, baiyunoside 1, baiyunoside 2, phlomisoside 1, phlomisoside 2, phlomisoside 3, phlomisoside 4, abrusoside A, abrusoside B, abrusoside C, abrusoside D, cyclocaryoside A, cyclocaryoside I, os-landine, polypodoside A, strogine 1, strogine 2, strogine 4, selli-guéanine A, dihydroquercétine-3-acétate, périllartine, télosmoside A15, pé-riandrine I-V, ptérocaryoside, cyclocaryoside, mukurozioside, E-anéthol, E-cinnamaldéhyde, bryoside, bryonoside, bryonodulcoside, carnosifloside, scandénoside, gypénoside, hématoxyline, cyanine, acide chlorogénique, al-biziasaponine, télosmoside, gaudichaudioside, mogrosides, tels que mogroside V, hernandulcine, mona-tin, acide glycyrrhétinique et ses dérivés, en particulier la glycyrrhizine, de préférence le sel d'ammonium de la glycyrrhizine ; extraits ou fractions enrichies de tels extraits, tels que les extraits de *Thaumatococcus* ou de *Stevia ssp.,* notamment *Stevia rebaudiana,* les extraits de Swingle, notamment *Momordica, Siratia grosvenorii* ou Luo-Han-Guo, les extraits de *Glycerrhyzia ssp.,* notamment *Glycerrhyzia glabra* ou *Glycerrhyzia uralensis,* les extraits de *Rubus ssp.,* notamment *Rubus suavissimus* ou *Rubus Chingii,* les extraits de *Lippia dulcis,* les extraits de *Mycetia balansae,* comprenant de préférence de la balansine A et/ou de la balansine B ;
des édulcorants synthétiques, de préférence des substances synthétiques au goût sucré, de préférence choisis dans le groupe constitué du magap, du cyclamate de sodium ou d'autres sels physiologiquement acceptables de l'acide cyclamique, de l'acésulfame K ; la néohespérideindihydrochalcone, la naringindihydrochalcone, la saccharine, le sel de sodium de saccharine, l'aspartam, le superaspartam, le néotam, l'alitam, l'advantam, la périllartine, le sucralose, le lugduname, le carrelame, le sucrononate ou le sucrooctate ou leurs mélanges.

5. Préparation comprenant la composition aromatisante selon l'une quelconque des revendications 1 à 4, dans laquelle la composition aromatisante est contenue en une quantité comprise entre 0,001 et 10 ppm, de préférence en une quantité comprise entre 0,01 et 5 ppm, de manière particulièrement préférée en une quantité comprise entre 0,015 et 0,5 ppm, par rapport au poids total de la préparation.

6. Préparation selon la revendication 5, dans laquelle la préparation est choisie dans le groupe constitué par des préparations propres à la consommation, de préférence un aliment, les aliments-plaisirs, les boissons, les produits semi-finis et les produits d'hygiène bucco-dentaire.

7. Préparation selon la revendication 5 ou 6, dans laquelle la préparation comprend en outre une ou plusieurs substances aromatisantes qui sont choisies dans le groupe constitué de
substances aromatisantes aliphatiques, notamment les alcools aliphatiques saturés tels que l'éthanol, l'isopronanol, le butanol, l'alcool isoamylique, l'hexanol, le 2-heptanol, le (1/2/3)-octanol, le décanol ; les alcools aliphatiques insaturés tels que le 2Z-penténol, le 3Z-hexénol, le 2E-hexénol, le 3E-hexénol, le 2Z-octénol, le 1-octène-3-ol, le 6Z-nonénol, le 2E,6Z-nonadiénol ; les aldéhydes aliphatiques tels que les aldéhydes aliphatiques saturés (par exemple, l'acétaldéhyde, le propionaldéhyde, le butyraldéhyde, l'isobutyraldéhyde, le valéraldéhyde, l'isolvaléraldéhyde, hexanal, 3-méthyl hexanal, octanal, nonanal ou aldéhydes aliphatiques mono- ou multi-insaturés, tels que le 2-méthyl-but-2-énal, le 2E-hexénal, le 3Z-hexénal, le 4Z-hexénal, le 2E-octénal, le 2E-nonénal, le 6Z-nonénal, le 2E,6Z-nonadiénal, le 2E-décénal, le 2E-décadiénal, les cétones aliphatiques, par exemple les cétones saturées (telles que la 2-butanone, la 2-pentanone, la 2-heptanone, la 2-octanone, la 2-méthylheptan-3-one, la 2-décanone, la 2-undécanone), les cétones insaturées (telles que la 1-pentène-3-one, la 1-hexène-3-one, 5-méthyl-3-hexénone, 3-heptène-2-one, 1-octène-3-one, 2-octène-4-one, 3-octène-2-one, 3-none-2-one), les dicétones aliphatiques et dicétoles aliphatiques, par exemple le diacétyle, l'acétylméthylcarbinol, la 2,3-hexanedione, les acides aliphatiques, tels que les acides saturés à chaîne droite, tels que l'acide acétique, l'acide propionique, l'acide butyrique, l'acide isobutyrique, l'acide valérique, l'acide heptanoïque, l'acide octanoïque, l'acide déca-noïque, les acides saturés à chaîne ramifiée, tels que l'acide 2-méthyl heptanoïque, l'acide 4-éthyl octanoïque, et les acides insaturés, tels que l'acide 2-buténoïque, l'acide 2-penténoïque, l'acide 4-penténoïque, l'acide 2-méthyl penténoïque, l'acide 3E-hexénoïque, acide 3Z-hexénoïque, acide 3-octénoïque, acide linoléique, les esters aliphatiques, tels que les esters saturés, par exemple acétate de méthyle, le méthylbutyrate, méthyl-2-méthylbutyrate, méthylhexanoate, éthylacétate, éthylbutyrate, éthyl-2-méthylbutyrate, éthyl-3-méthylbutyrate, éthylhexanoate, éthyl décanoate, acétate d'isopropyle, acétate d'isobutyle, valérate d'isobutyle, acétate d'isoamyle, butyrate d'isoamyle, isovalérate d'isoamyle, acétate d'hexyle, hexanoate d'hexyle, acétate de 3-octyle et les esters insaturés, tels que le 2-hexénoate de méthyle, l'hexanoate d'allyle, l'acétate de 3Z-hexényle, le butyrate de 3Z-hexényle, les thiols et dithiols aliphatiques (par exemple, le propane thiol, l'allyl mercaptan, le 1-méthoxy-3-méthylbutane-3-thiol, le sulfure de diméthyle, le trisulfure de diméthyle, le sulfure de dipropyle, le trisulfure de diallyle, d'autres composés soufrés aliphatiques, tels que le 2-mercapto-3-butanol, le méthyl thio propanal, la 3-mercapto-pentanone, la 4-méthoxy-2-méthyl-2-mercaptobutanone, le thiobutyrate de méthyle, le thiobutyrate de méthyle, le méthyl 3-méthylthiopropionate, les composés azotés aliphatiques, tels que la butylamine, la triméthylamine, l'isothiocyanate d'allyle, l'isothiocyanate d'isopropyle, les composés alicycliques, tels que les cétones alicycliques, par exemple la Z-jasmone, l'isophorone, la 4-cétoisophorone, esters alicycliques tels que le méthyl jasmonate, l'hédione, terpènes, par exemple les alcools terpéniques, tels que le linalol, le citronellol, le géraniol, le nérol, l'alpha terpinéol, le menthol, le 8-p-menthène-1,2-diol, le fenchol, le bornéol, le nérolidol, l'hotriénol, aldéhydes terpéniques tels que le géranial, le néral, le citronellal, le bêta-sinensal, cétones terpéniques, telles que l'alpha-ionone, la (D)-carvone, la (L)-carvone, nootkatone, pipéritone, menthone, alpha damascone, bêta damascène, damascénone, les esters terpéniques, tels que l'acétate de linalyle, l'acétate de géranyle, l'acétate de citronellyle, l'acétate de carvyle, l'acétate de fenchyle, les composés terpéniques soufrés, 4-mentha-8-thiol-3-one, thiogéraniol, para-menth-1-ène-8-thiol, mercapto p-menthan-3-one, les hydrocarbures terpéniques, tels que (D)-limonène, (L)-limonène, alpha-pinène, bêta-pinène, ocimène, alpha-terpinène, gamma-terpinène, bêta-bisabolène, valencène, les oxydes terpéniques, tels que le 1,8-cinéole, oxyde de rose, lactone de menthe, menthofurane, les composés aromatiques, par exemple alcools aromatiques, tels que alcool benzyblique, alcool cinnamylique, alcool 2-phénylique, les aldéhydes aromatiques, tels que le benzaldéhyde, l'aldéhyde cinnamique, le 5-méthyl-2-phénylhexénal, le salicylaldéhyde, le 4-hydroxy benzaldéhyde, l'aldéhyde de cyclamen, le 2-phényl-2-buténal, les acides aromatiques, tels que l'acide 2-phénylacétique, l'acide cinnamique, les esters aromatiques tels que l'acétate de benzyle, le salicylate de benzyle, l'acétate d'anisyle, l'acétate de méthylphényle, le benzoate de méthyle, le salicylate de méthyle, le cinnamate de méthyle, les phénols aromatiques, tels que le phénol, l'orthocrésol, le paracrésol, le 2,3-diméthylphényle, le 2-éthylphénol, le 2,3,5-triméthylphénol, le 4-vinylphénol, le gaïacol, le 4-vinylgaïacol, l'eugénol, le thymol, le carvacrol, les composés soufrés aromatiques, tels que thiophénol, disulfure de diphényle, les composés azotés aromatiques, tels que l'anthranilate de méthyle, le N-méthylanthranilate de méthyle, les éthers aromatiques tels que la vanilline, l'éthylvanilline, l'anéthol, les oxydes aromatiques, tels que l'héliotropine, oxyde de diphényle, les lactones aromatiques, telles que la coumarine, la dihydrocoumarine, les composés hétérocycliques, tels que les lactones hétérocycliques, par exemple la gamma-butyrolactone, la gamma-nonalactone, la gamma-décalactone, la delta-décalactone, la jasmin-lactone, la delta-dodécalactone, l'ambrettolide, furanes hétérocycliques, tels que l'alcool furfurylique, le furfural, le 2-acétylfurane, le théaspirane, la 2-méthyltétrahydrofurane-3-one, le furfurylmercaptan, le 2-méthyl-3-furanthiol, le 2-méthyl-3-tétrahydrofuranthiol, le sulfure de difurfuryle, le disulfure de difurfuryle, les pyranes hétérocycliques, tels que le maltol, l'éthyl maltole, l'oxyde de rose, l'isobutyrate de maltol, les pyrroles hétérocycliques tels que l'indole, le 2-acétyle pyrrole, la pyrrolidine, les pyrazines hétérocycliques, telles que la 2-méthyl pyrazine, la 2,3-diméthyl pyrazine, la 2-méthyl 3-éthyl pyrazine, la triméthyl pyrazine, la 2-acétyl pyrazine, la 2-méthoxy 3-méthyl pyrazine, la 2-méthoxy 3-éthyl pyrazine, la 2-méthoxy 3-isobutyl pyrazine, la 2-éthyl 3-méthylthio pyrazine, les thiazoles hétérocycliques, tels que le thiazole, le 2-méthyl thiazole, le 4-méthyl 5-vinyl thiazole, le 2-isobutyl thiazole, le 2-acétyl thiazole,
matières premières aromatisantes et préparations aromatisantes, par exemple huiles essentielles, concrètes, absolues, extraits ou teintures de matières premières telles que les agrumes (par exemple, citron, citron vert, mandarine, bergamote, pamplemousse, orange amère, huiles d'écorce ou d'essence), herbes (aneth, persil, cumin, romarin, sauge, sauge sclarée, basilic, estragon, thym, origan, sarriette, marjolaine, piment de la Jamaïque, macis, noix de muscade, feuille de clou de girofle, bouton de girofle, carvi, feuilles de cannelle, écorce de cannelle, casse, cardamome, gingembre, ga-langa, curcuma, graine de coriandre, feuille de coriandre, fenugrec, baie de genièvre, absinthe, feuilles de laurier, eucalyptus, poivre blanc, poivre vert, poivre blanc, graine de carotte, graine de céleri, feuille de livèche, asa foetida, oignon, poireau, ail, moutarde, raifort, poivron, paprika, algues, huile de valériane, aiguille de sapin, Menthe verte, menthe poivrée, thé des bois, feuille de buchu, bourgeons de cassis, fenouil, anis étoilé, jambu, poivre long, davana, iris, mimosa, cassie, feuilles de violette, feuille de hô, jasmin, ylang-ylang, cananga, osmanthus, angélique, sauge sclarée, graine d'ambrette, houblon, camomille, lavande, rose, géranium, citronnelle, palmarosa, litsea cubeba, citronnelle, tagètes, néroli, petit-grain, maté, huile essentielle de cognac, café, noix de kola, cacao, thé vert, thé noir, thé blanc, gentiane, baume de tolu, résine de benzoe, baume du Pérou, cascarilla, galbanum, vétiver, labdanum, patchouli, bois de santal, bois de cèdre, bois de gaïac, bois de chêne, écorce de massoi, gousses de vanille, fève tonka, ainsi que leurs fractions enrichies,
des concentrés de jus, tels que les concentrés de jus d'orange, de jus de citron, de fraise, de jus de cerise ou de jus de fruit de la passion, phases aqueuses et récupérations de matières premières telles que les agrumes (citron, citron vert, orange, mandarine, pamplemousse), pomme, poire, coing, mispell, fruits rouges (framboise, fraise, myrtille, mûre, Amellanchia (prune de juin), églantier, canneberge, prune, pruneau, groseille rouge et cassis etc.), des fruits jaunes (pêche, abricot, nectarine, banane etc.), des fruits tropicaux (mangue, fruit de la passion, ananas, litchi, etc.), des légumes (concombre, tomate, par exemple) et des épices (gingembre, par exemple), acétophénone, caproate d'allyle, alpha-ionone, bêta-ionone, anisaldéhyde, acétate d'anisyle, formiate d'anisyle, benzaldéhyde, benzothiazole, acétate de benzyle, alcool benzylique, benzoate de benzyle, bêta-ionone, butyrate de butyle, caproate de butyle, butylidène phtalide, carvone, camphène, ca-ryophyllène, cinéol, acétate de cinnamyle, citral, citronellol, citronellal, acétate de citronellyle, acétate de cyclohexyle, cymène, damascone, décalactone, dihydrocoumarine, anthranilate de diméthyle, dodécalactone, acétate d'éthoxyéthyle, acide éthylbutyrique, butyrate d'éthyle, caprate d'éthyle, caproate d'éthyle, crotonate d'éthyle, éthylfuranéol, éthylgaïacol, isobutyrate d'éthyle, isovalérate d'éthyle, lactate d'éthyle, butyrate d'éthylméthyle, pro-pionate d'éthyle, eucalyptol, eugénol, heptylate d'éthyle, 4-(p-hydroxyphényl)-2-butanone, gamma-décalactone, géraniol, acétate de géranyle, acétate de géranyle, aldéhyde de pamplemousse, dihydrojasmonate de méthyle (par ex. Hedion^{®}), héliotropine, 2-heptanone, 3-heptanone, 4-heptanone, 2E-hepténal, 4Z-hepténal, 2E-hexénal, 3Z-hexénol, acide 2E-hexénoïque, acide 3E-hexénoïque, acétate de 2Z-hexényle, acétate de 3Z-hexényle, caproate de 3Z-hexényle, caproate de 2E-hexényle, formiate de 3Z-hexényle, acétate de 2Z-hexyle, acétate de 3Z-hexyle, acétate de 2E-hexyle, formiate de 3Z-hexyle, para-hydroxybenzyl acétone, alcool isoamylique, isovalérate d'isoamyle, butyrate d'isobutyle, isobutyraldéhyde, éther méthylique d'isoeugénol, isopropyl méthylthiazole, acide laurique acide, acide lévulinique, linalol, oxyde de linalol, acétate de li-nalyle, menthol, menthofurane, anthranilate de méthyle, méthylbutanol, acide méthylbutyrique, acétate de 2-méthylbutyle, caproate de méthyle, cinnamate de méthyle, 5-méthylfurfural, 3,2,2-méthylcyclopenténolone, 6,5,2-méthylhepténone, dihydrojasmonate de méthyle, jasmonate de méthyle, butyrate de 2-méthylméthyle, acide 2-méthyl-2-penténol, méthylthiobutyrate, 3,1-méthylthiohexanol, acétate de 3-méthylthiohexyle, nérol, acétate de nérol, 2E,4E-nonadiénal, 2,4-nonadiénol, 2,6-nonadiénol, 2,4-nonadiénol, nootkatone, delta-octalactone, gamma-octalactone, 2-octanol, 3-octanol, 1,3-octénol, acétate de 1-octyle, acétate de 3-octyle, acide palmitique, paraldé-hyde, phellandrène, pentanedione, acétate de phényléthyle, alcool phénylé-thylique, isovalérate de phényléthyle, pipéronal, propionaldéhyde, butyrate de propyle, pulégone, pulégol, sinensal, sulfurol, terpinène, terpinéol, terpi-nolène, 8,3-s thiomenthanone, 4,4,2-thiométhylpentanone, thymol, delta-undécalactone, gamma-undécalactone, valencène, acide valérique, vanilline, acétoïne, éthylvanilline, isobutyrate d'éthylvanilline (=3-éthoxy-4-isobutyryloxybenzaldéhyde), 2,5-diméthyl-4-hydroxy-3(2H)-furanone et ses dérivés (ici de préférence l'homofuranéol (=2-éthyl-4-hydroxy-5-méthyl-3(2H)-furanone), l'homofuronol (=2-éthyl-5-méthyl-4-hydroxy-3(2H)-furanone et la 5-éthyl-2-méthyl-4-hydroxy-3(2H)-furanone), maltol et dérivés du maltol (ici de préférence l'éthyl maltol), coumarine et dérivés de la coumarine, gamma-lactones (ici de préférence la gamma-undécalactone, la gamma-nonalactone, la gamma-décalactone), delta-lactones (ici de préférence la 4-méthyldeltadécalactone, la massoilactone, la deltadécalactone, la tubérolac-tone), sorbate de méthyle, divanilline, 4-hydroxy-2(ou 5)-éthyl-5 (ou 2)-méthyl-3(2H)furanone, 2-hydroxy-3-méthyl-2-cyclopenténone, 3-hydroxy-4,5-diméthyl-2(5H)-furanone, ester isoamylique d'acide acétique, ester éthylique d'acide butyrique, ester n-butylique d'acide butyrique, ester isoamylique d'acide butyrique, ester éthylique d'acide 3-méthyl-butyrique, ester éthylique d'acide n-hexanoïque, ester allylique d'acide n-hexanoïque, ester n-butylique d'acide n-hexanoïque, ester éthylique d'acide n-octanoïque, éthyl-3-méthyl-3-phénylglycidate, éthyl-2-E-4-Z-décadiénoate, 4-(p-hydroxyphényl)-2-butanone, 1,1-diméthoxy-2,2,5-triméthyl-4-hexane, 2,6-diméthyl-5-heptène-1-al et phénylacétaldéhyde, 2-méthyl-3-(méthylthio)furane, 2-méthyl-3-furanthiol, bis(2-méthyl-3-furyl)disulfure, furfurylmercaptan, méthional, 2-acétyl-2-thiazoline, 3-mercapto-2-pentanone, 2,5-diméthyl-3-furanthiol, 2,4,5-triméthylthiazole, 2-acétylthiazole, 2,4-diméthyl-5-éthylthiazole, 2-acétyl-1-pyrroline, 2-méthyl-3-éthylpyrazine, 2-éthyl-3,5-diméthylpyrazine, 2-éthyl-3,6-diméthylpyrazine, 2,3-diéthyl-5-méthylpyrazine, 3-isopropyl-2-méthoxypyrazine, 3-isobutyl-2-méthoxypyrazine, 2-acétylpyrazine, 2-pentylpyridine, (E,E)-2,4-décadiénal, (E,E)-2,4-nonadiénal, (E)-2-octénal, (E)-2-nonénal, 2-undécénal, 12-méthyltridécanal, 1-pentène-3-one, 4-hydroxy-2,5-diméthyl-3 (2H)-furanone, gaïacol, 3-hydroxy-4,5-diméthyl-2 (5H)-furanone, 3-hydroxy-4-méthyl-5-éthyl-2 (5H)-furanone, cinnamaldéhyde, alcool de cannelle, salicylate de méthyle, isopulégol et (non explicitement mentionnés ici) stéréoisomères, énan-tiomères, isomères de position, diastéréomères, isomères Z/E ou épimères de ces substances.

8. Préparation selon l'une quelconque des revendications 5 à 7, dans laquelle la préparation comprend en outre au moins un composé ou mélange de composés conférant un goût sucré, choisi dans le groupe constitué par
les édulcorants naturels, de préférence des substances naturellement sucrées, y compris les extraits de plantes, tels que les glucides sucrés (tels que le saccharose, le tréhalose, le lactose, le maltose, le mélisitose, le méli-biose, le raffinose, le palatinose, le lactulose, le (D)-fructose, le (D)-glucose, le (D)-galactose, le (L)-rhamnose, le (D)-sorbose, le (D)-mannose, le (D)-tagatose, le (D)-arabinose, le (L)-arabinose, le (D)-ribose, le (D)-glycéraldéhyde, la maltodextrine), les polyalcools (tels que l'érythritol, le thréitol, l'arabitol, le ribitol, le xylitol, le sorbitol, le mannitol, le maltitol, isomaltit, dulcitol, lactitol), protéines (telles que miraculine, pentaidine, monelline, thaumatine, curculine, brazzéine, mabinline), (D)-acides aminés (tels que (D)-phénylalanine, (D)-tryptophane) ou extraits ou fractions obtenus à partir de sources naturelles contenant ces acides aminés et/ou protéines et les sels physiologiquement acceptables de ces acides aminés et/ou protéines, en particulier leurs sels de sodium, de potassium, de calcium ou d'ammonium ; néohesperi-dindihydrochalkon, naringindihydrochalkon, steviolgylcoside, stevioside, steviolbiosid, rebaudioside, rebaudioside A, rebaudioside B, rebaudioside C, rebaudioside D, rebaudioside E, rebaudioside F, rebaudioside G, rebau-dioside H, rebaudioside M, rebaudioside N, rebaudioside X, dulcoside, rubusoside, suavioside A, suavioside B, suavioside G, suavioside H, suavioside I, suavioside J, baiyunoside 1, baiyunoside 2, phlomisoside 1, phlomisoside 2, phlomisoside 3, phlomisoside 4, abrusoside A, abrusoside B, abrusoside C, abrusoside D, cyclocaryoside A, cyclocaryoside I, os-landine, polypodoside A, strogine 1, strogine 2, strogine 4, selliguéanine A, dihydroquercétine-3-acétate, périllartine, télosmoside A15, périandrine I-V, ptérocaryoside, cyclocaryoside, mukurozioside, E-anéthol, E-cinnamaldéhyde, bryoside, bryonoside, bryonodulcoside, carnosifloside, scandénoside, gypénoside, hématoxyline, cyanine, acide chlorogénique, albiziasaponine, télosmoside, gaudichaudioside, mogrosides, tels que mogroside V, hernandulcine, mona-tin, acide glycyrrhétinique et ses dérivés, en particulier la glycyrrhizine, de préférence le sel d'ammonium de la glycyrrhizine ; extraits ou fractions enrichies de tels extraits, tels que les extraits de *Thaumatococcus* ou de *Stevia ssp.,* notamment *Stevia rebaudiana,* les extraits de Swingle, notamment *Momordica, Siratia grosvenorii* ou Luo-Han-Guo, les extraits de *Glycerrhyzia ssp.,* notamment *Glycerrhyzia glabra* ou *Glycerrhyzia uralensis,* les extraits de *Rubus ssp.,* notamment *Rubus suavissimus* ou *Rubus Chingii,* les extraits de *Lippia dulcis,* les extraits de *Mycetia balansae,* comprenant de préférence de la balansine A et/ou de la balansine B ;
des édulcorants synthétiques, de préférence des substances synthétiques au goût sucré, de préférence choisis dans le groupe constitué du magap, du cyclamate de sodium ou d'autres sels physiologiquement acceptables de l'acide cyclamique, de l'acésulfame K ; la néohespérideindihydrochalcone, la naringindihydrochalcone, la saccharine, le sel de sodium de saccharine, l'aspartam, le superaspartam, le néotam, l'alitam, l'advantam, la périllartine, le sucralose, le lugduname, le carrelame, le sucrononate ou le sucrooctate ou leurs mélanges.

9. Utilisation d'une composition aromatisante selon l'une quelconque des revendications 1 à 4, destinée à améliorer au moins une caractéristique gustative dans une/d'une préparation.

10. Utilisation selon la revendication 9, dans laquelle ladite/lesdites au moins une(s) caractéristique(s) gustative(s) est/sont choisie(s) dans le groupe constitué de la richesse, du corps, de l'authenticité, de l'impact, de la sensation en bouche, de la douceur et de la jutosité.

11. Utilisation selon la revendication 9 ou 10, dans laquelle la composition aromatisante est utilisée en une quantité comprise entre 0,001 et 10 ppm, de préférence en une quantité comprise entre 0,01 et 5 ppm, de manière particulièrement préférée en une quantité comprise entre 0,015 et 0,5 ppm, par rapport au poids total de la préparation.

12. Procédé destiné à améliorer au moins une caractéristique gustative dans une /d'une préparation, comprenant ou consistant en les étapes
a) fournir au moins une préparation choisie dans le groupe constitué par les préparations propres à la consommation, de préférence un aliment, les aliments-plaisirs, les boissons, les produits semi-finis et les produits d'hygiène bucco-dentaire.
b) fournir une composition aromatisante selon l'une quelconque des revendications 1 à 4;
c) mettre en contact et mélanger la préparation fournie à l'étape a) et la composition aromatisante fournie à l'étape b);
d) obtenir une préparation telle que définie dans l'une quelconque des revendications 5 à 8.

13. Procédé selon la revendication 12, dans lequel la composition aromatisante fournie à l'étape b) est fournie en une quantité allant de 0,001 à 10 ppm, de préférence en une quantité allant de 0,01 à 5 ppm, de manière particulièrement préférée en une quantité allant de 0,015 à 0,5 ppm, par rapport au poids total de la préparation.
